(19) Europäisches Patentamt
European Patent Office
Office européen des brevets

(11) EP 4 759 836 A1

(12) **EUROPEAN PATENT APPLICATION**
published in accordance with Art. 153(4) EPC

(43) Date of publication:
**17.06.2026 Bulletin 2026/25**

(21) Application number: **24854222.7**

(22) Date of filing: **14.08.2024**

(51) International Patent Classification (IPC):
***C08F 6/14*** *(2006.01)* ***C08F 2/24*** *(2006.01)*
***C08F 14/18*** *(2006.01)*

(52) Cooperative Patent Classification (CPC):
**C08F 2/24; C08F 2/26; C08F 6/14; C08F 14/18; C08L 27/12**

(86) International application number:
**PCT/JP2024/029014**

(87) International publication number:
**WO 2025/037634 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 JP 2023132140**
**02.07.2024 JP 2024106988**

(71) Applicant: **Daikin Industries, Ltd.**
**Osaka-shi, Osaka 530-0001 (JP)**

(72) Inventors:
- **YAMAMOTO, Emi**
  **Osaka-Shi, Osaka 530-0001 (JP)**
- **KATO, Taketo**
  **Osaka-Shi, Osaka 530-0001 (JP)**
- **YOSHIDA, Hirotoshi**
  **Osaka-Shi, Osaka 530-0001 (JP)**
- **YAMABE, Takuya**
  **Osaka-Shi, Osaka 530-0001 (JP)**
- **YAMANAKA, Taku**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) AQUEOUS FLUOROPOLYMER DISPERSION PRODUCTION METHOD AND AQUEOUS FLUOROPOLYMER DISPERSION

(57) Provided is a method for producing a fluoropolymer aqueous dispersion in which the content of a fluorine-containing surfactant is reduced, the method comprising at least preparing an aqueous dispersion (E) by heating an aqueous dispersion containing a fluoropolymer, a nonionic surfactant and a fluorine-containing surfactant, the aqueous dispersion (E) containing a phase (E1), a phase (E2) and a phase (E3).



Processed by Luminess, 75001 PARIS (FR)

## Description

TECHNICAL FIELD

The present disclosure relates to a method for producing a fluoropolymer aqueous dispersion, and a fluoropolymer aqueous dispersion.

BACKGROUND ART

A known method for producing a fluoropolymer is a method involving emulsion-polymerizing a fluoromonomer. An aqueous dispersion of a fluoropolymer obtained by emulsion polymerization contains components other than the fluoropolymer, such as a surfactant used in emulsion polymerization. Various studies have been carried out on methods for reducing or removing such components other than the fluoropolymer.

Patent Document 1 discloses a method for reducing the content of fluoroether carboxylic acid or salt in a fluoropolymer aqueous dispersion, the fluoroether carboxylic acid or salt having the formula:

$$[R^1\text{-O-L-COO}^-]Y^+$$

wherein:

$R^1$ is a linear, branched or cyclic partially or fully fluorinated aliphatic group optionally containing an ether bond;
L is a branched partially or fully fluorinated alkylene group optionally containing an ether bond; and
$Y^+$ is a cation of hydrogen, ammonium or alkali metal; the method comprising:

adding a stabilizer to the fluoropolymer aqueous dispersion to form a stabilized fluoropolymer aqueous dispersion;
heating the stabilized fluoropolymer aqueous dispersion for decarboxylation of the fluoroether carboxylic acid or salt to produce a fluoroether byproduct; and
removing at least a portion of the fluoroether byproduct.

RELATED ART

PATENT DOCUMENTS

Patent Document 1: Japanese Patent Laid-Open No. 2014-237842

SUMMARY OF THE INVENTION

PROBLEM TO BE SOLVED BY THE INVENTION

An object of the present disclosure is to provide a production method capable of producing a fluoropolymer aqueous dispersion in which the content of a fluorine-containing surfactant is reduced.

MEANS FOR SOLVING THE PROBLEM

The present disclosure provides a method for producing a fluoropolymer aqueous dispersion in which the content of a fluorine-containing surfactant is reduced, the method comprising at least preparing an aqueous dispersion (E) by heating an aqueous dispersion containing a fluoropolymer, a nonionic surfactant and a fluorine-containing surfactant, the aqueous dispersion (E) containing:

a phase (E1) in which a content of the fluoropolymer is less than 1.00% by mass based on a mass of the phase (E1), and a content of the nonionic surfactant is less than 2.00% by mass based on the mass of the phase (E1);
a phase (E2) in which a content of the fluoropolymer is less than 1.00% by mass based on a mass of the phase (E2), and a content of the nonionic surfactant is 1.00% by mass or more, 2.00% by mass or more based on the mass of the phase (E2); and
a phase (E3) in which a content of the fluoropolymer is 1.00% by mass or more based on a mass of the phase (E3), and a content of the nonionic surfactant is 1.00% by mass or more, 2.00% by mass or more based on the mass of the phase (E3).

EFFECTS OF INVENTION

The present disclosure can provide a production method capable of producing a fluoropolymer aqueous dispersion in which the content of a fluorine-containing surfactant is reduced.

DESCRIPTION OF EMBODIMENTS

Before specifically describing the present disclosure, some terms used herein will now be defined or explained.

In the present disclosure, the fluororesin is a partially crystalline fluoropolymer which is a fluoroplastic. The fluororesin has a melting point and has thermoplasticity, and may be either melt-fabricable or non melt-processible.

The melt-fabricable in the present disclosure means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

In the present disclosure, the fluoroelastomer is an amorphous fluoropolymer. The term "amorphous" means that a fluoropolymer has a melting peak ($\Delta H$) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics when crosslinked. The elastomeric characteristics mean that a polymer has an ability to be stretched and to retain its original length when the force required to stretch the polymer is no longer applied.

The monomer that provides a crosslinking site is a monomer (cure-site monomer) having a crosslinkable group that provides the fluoropolymer with a crosslinking site for forming a crosslink with the curing agent.

The polytetrafluoroethylene (PTFE) in the present disclosure is preferably a fluoropolymer having a tetrafluoroethylene unit content of 99 mol% or more based on the entirety of polymerization units.

In the present disclosure, the fluororesin (provided that polytetrafluoroethylene is excluded) and the fluoroelastomer are each preferably a fluoropolymer having a tetrafluoroethylene unit content of less than 99 mol% based on entirety of polymerization units.

In the present disclosure, the content of each monomer constituting the fluoropolymer can be calculated by any suitable combination of NMR, FT-IR, elemental analysis, and X-ray fluorescence analysis according to the type of monomer.

In the present disclosure, the term "organic group" means a group containing one or more carbon atoms or a group formed by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,

RaO-,

RaCO-,

$RaSO_2$-,

RaCOO-,

RaNRaCO-,

RaCONRa-,

RaOCO-,

$RaOSO_2$-, and

$RaNRbSO_2$-,

wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each Rb is independently H or an alkyl group optionally having one or more substituents.

The organic group is preferably an alkyl group optionally having one or more substituents.

The term "substituent" in the present disclosure means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridine-carbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino

group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

In the present disclosure, the phrase "at least one" includes all numerical values greater than or equal to 1 (such as at least 2, at least 4, at least 6, at least 8, at least 10, at least 25, at least 50, at least 100, and the like).

Below, specific embodiments of the present disclosure will now be described in detail, but the present disclosure is not limited to the following embodiments.

The present disclosure relates to a method for producing a fluoropolymer aqueous dispersion in which the content of a fluorine-containing surfactant is reduced,

the method comprising at least preparing an aqueous dispersion (E) by heating an aqueous dispersion containing a fluoropolymer, a nonionic surfactant and a fluorine-containing surfactant,

the aqueous dispersion (E) containing:

a phase (E1) in which the content of the fluoropolymer is less than 1.00% by mass based on the mass of the phase (E1), and the content of the nonionic surfactant is less than 2.00% by mass based on the mass of the phase (E1);
a phase (E2) in which the content of the fluoropolymer is less than 1.00% by mass based on the mass of the phase (E2), and the content of the nonionic surfactant is 2.00% by mass or more based on the mass of the phase (E2); and
a phase (E3) in which the content of the fluoropolymer is 1.00% by mass or more based on the mass of the phase (E3), and the content of the nonionic surfactant is 2.00% by mass or more based on the mass of the phase (E3)
(hereinafter, sometimes referred to as a first production method).

The present disclosure also relates to a fluoropolymer aqueous dispersion comprising a fluoropolymer and an anionic fluorine-containing surfactant and having an anionic fluorine-containing surfactant content of more than 0 mass ppb and less than 100 mass ppb based on the fluoropolymer (hereinafter, sometimes referred to as a first fluoropolymer aqueous dispersion).

The present disclosure also relates to a method for producing a fluoropolymer aqueous dispersion in which the content of a polymer compound (I) having an ionic group is reduced,

the method comprising at least preparing an aqueous dispersion (E) by heating an aqueous dispersion containing a fluoropolymer, a nonionic surfactant, and a polymer compound (I) having an ionic group,

the aqueous dispersion (E) containing:

a phase (E1) in which the content of the fluoropolymer is less than 1.00% by mass based on the mass of the phase (E1), and the content of the nonionic surfactant is less than 2.00% by mass based on the mass of the phase (E1);
a phase (E2) in which the content of the fluoropolymer is less than 1.00% by mass based on the mass of the phase (E2), and the content of the nonionic surfactant is 2.00% by mass or more based on the mass of the phase (E2); and
a phase (E3) in which the content of the fluoropolymer is 1.00% by mass or more based on the mass of the phase (E3), and the content of the nonionic surfactant is 2.00% by mass or more based on the mass of the phase (E3)
(hereinafter, sometimes referred to as a second production method).

The present disclosure also relates to a fluoropolymer aqueous dispersion which comprises a fluoropolymer, and a polymer compound (I) having an ionic group, and

is substantially free from an anionic fluorine-containing surfactant and
in which the content of the polymer compound (I) having an ionic group is more than 0 mass ppm and 500 mass ppm or less, and
a proportion of hydrogen atoms replaced with fluorine atoms in hydrogen atoms bonded to carbon atoms of the polymer compound (I) having an ionic group is 50% or more (hereinafter, sometimes referred to as a second fluoropolymer aqueous dispersion).

In the present disclosure, both the first production method and the second production method may be referred to simply as a "production method". In the present disclosure, both the first fluoropolymer aqueous dispersion and the second fluoropolymer aqueous dispersion may be referred to simply as a "fluoropolymer aqueous dispersion".

1. Method for producing fluoropolymer aqueous dispersion

The first fluoropolymer aqueous dispersion can be produced by polymerizing a fluoromonomer in an aqueous medium using a fluorine-containing surfactant. In the first production method of the present disclosure, a fluoropolymer aqueous dispersion in which the content of a fluorine-containing surfactant is reduced can be produced by removing the fluorine-containing surfactant with a removal ratio that has not been achievable by conventional production methods.

The first production method of the present disclosure is a method for producing a fluoropolymer aqueous dispersion in which the content of a fluorine-containing surfactant is reduced, characterized in that an aqueous dispersion containing a fluoropolymer, a nonionic surfactant and a fluorine-containing surfactant is heated to separate the aqueous dispersion into at least three phases. After separation into three phases, a phase containing a large amount of the

fluoropolymer, among the three phases, is collected, or an additional step of separation into at least two phases is carried out to collect a phase containing a large amount of the fluoropolymer, whereby a fluoropolymer aqueous dispersion can be obtained in which the content of a fluorine-containing surfactant is reduced.

The second fluoropolymer aqueous dispersion can be produced by polymerizing a fluoromonomer in an aqueous medium using a polymer compound (I) having an ionic group. In the second production method of the present disclosure, a fluoropolymer aqueous dispersion in which the content of the polymer compound (I) having an ionic group is reduced can be produced by removing the polymer compound (I) having an ionic group with a removal ratio that has not been achievable by conventional production methods.

The second production method of the present disclosure is a method for producing a fluoropolymer aqueous dispersion in which the content of the polymer compound (I) having an ionic group is reduced, characterized in that an aqueous dispersion containing a fluoropolymer, a nonionic surfactant and the polymer compound (I) having an ionic group is heated to separate the aqueous dispersion into at least three phases. After separation into three phases, a phase containing a large amount of the fluoropolymer, among the three phases, is collected, or an additional step of separation into at least two phases is carried out to collect a phase containing a large amount of the fluoropolymer, whereby a fluoropolymer aqueous dispersion can be obtained in which the content of the polymer compound (I) having an ionic group is reduced. When the aqueous dispersion contains a fluorine-containing surfactant in addition to the polymer compound (I) having an ionic group, it is possible to produce a fluoropolymer aqueous dispersion in which the content of the polymer compound (I) having an ionic group is reduced and the content of the fluorine-containing surfactant is reduced.

Below, each step and materials used in the step will now be described in detail.

(Heating of aqueous dispersion)

In the first production method of the present disclosure, an aqueous dispersion containing a fluoropolymer, a nonionic surfactant and a fluorine-containing surfactant is heated to prepare an aqueous dispersion (E) containing:

a phase (E1) in which the content of the fluoropolymer is less than 1.00% by mass based on the mass of the phase (E1), and the content of the nonionic surfactant is less than 2.00% by mass based on the mass of the phase (E1);
a phase (E2) in which the content of the fluoropolymer is less than 1.00% by mass based on the mass of the phase (E2), and the content of the nonionic surfactant is 2.00% by mass or more based on the mass of the phase (E2); and
a phase (E3) in which the content of the fluoropolymer is 1.00% by mass or more based on the mass of the phase (E3), and the content of the nonionic surfactant is 2.00% by mass or more based on the mass of the phase (E3).

In the first production method, as described above, an aqueous dispersion is heated to separate the aqueous dispersion into at least three phases which are a phase (E1) containing small amounts of a fluoropolymer and a nonionic surfactant, a phase (E2) containing a relatively large amount of the nonionic surfactant, and a phase (E3) containing a relatively large amount of the fluoropolymer, whereby a fluoropolymer aqueous dispersion can be produced in which the content of a fluorine-containing surfactant is reduced.

When a fluorine-containing surfactant having a carboxylic acid is used in the first production method, the phase (E2) containing a nonionic surfactant as a main component is formed, and thus a decarbonization reaction of the fluorine-containing surfactant proceeds. The nonionic surfactant usually has a distribution in the number of oxyethylene units which are hydrophilic moieties, and a distribution in hydrophilicity thereof. By heating to a temperature higher than the cloud point of the nonionic surfactant, the nonionic surfactant having a small number of oxyethylene units and low hydrophilicity is separated from the aqueous phase (E1) to form the phase (E2) (It can be confirmed by NMR). The decarbonization reaction of the fluorine-containing surfactant hardly occurs in the aqueous phase (E1) and the phase (E3), but easily occurs in the phase (E2) formed by heating. In this way, the content of the fluorine-containing surfactant can be reduced.

In the second production method of the present disclosure, an aqueous dispersion containing a fluoropolymer, a nonionic surfactant and a polymer compound (I) having an ionic group is heated to prepare an aqueous dispersion (E) containing:

a phase (E1) in which the content of the fluoropolymer is less than 1.00% by mass based on the mass of the phase (E1), and the content of the nonionic surfactant is less than 2.00% by mass based on the mass of the phase (E1);
a phase (E2) in which the content of the fluoropolymer is less than 1.00% by mass based on the mass of the phase (E2), and the content of the nonionic surfactant is 2.00% by mass or more based on the mass of the phase (E2); and
a phase (E3) in which the content of the fluoropolymer is 1.00% by mass or more based on the mass of the phase (E3), and the content of the nonionic surfactant is 2.00% by mass or more based on the mass of the phase (E3).

In the second production method, as described above, an aqueous dispersion is heated to separate the aqueous dispersion into at least three phases which are a phase (E1) containing small amounts of a fluoropolymer and a nonionic

surfactant, a phase (E2) containing a relatively large amount of the nonionic surfactant, and a phase (E3) containing a relatively large amount of the fluoropolymer, whereby a fluoropolymer aqueous dispersion can be produced in which the content of a polymer compound (I) having an ionic group is reduced. When the aqueous dispersion contains a fluorine-containing surfactant in addition to the polymer compound (I) having an ionic group, it is possible to produce a fluoropolymer aqueous dispersion in which the content of the polymer compound (I) having an ionic group is reduced and the content of the fluorine-containing surfactant is reduced.

The composition of each of phases (E1) to (E3) in the aqueous dispersion (E) can change depending on a composition of the aqueous dispersion subjected to the heating and conditions of the heating.

In one embodiment, an aqueous dispersion containing:

a phase (E1) in which the content of a fluoropolymer is less than 1.00% by mass based on the mass of the phase (E1), and the content of a nonionic surfactant is less than 2.00% by mass based on the mass of the phase (E1);
a phase (E2) in which the content of the fluoropolymer is less than 1.00% by mass based on the mass of the phase (E2), and the content of the nonionic surfactant is 20.00% by mass or more based on the mass of the phase (E2); and
a phase (E3) in which the content of the fluoropolymer is 30.00% by mass or more based on the mass of the phase (E3), and the content of the nonionic surfactant is 2.00% by mass or more based on the mass of the phase (E3)

is prepared as an aqueous dispersion (E).

In another embodiment, an aqueous dispersion containing:

a phase (E1) in which the content of a fluoropolymer is 0.01% by mass or more and less than 1.00% by mass based on the mass of the phase (E1), and the content of a nonionic surfactant is 0.01% by mass or more and less than 2.00% based on the mass of the phase (E1);
a phase (E2) in which the content of the fluoropolymer is 0.01% by mass or more and less than 1.00% by mass based on the mass of the phase (E2), and the content of the nonionic surfactant is 20.00 to 50.00% by mass based on the mass of the phase (E2); and
a phase (E3) in which the content of the fluoropolymer is 30.00 to 75.00% by mass based on the mass of the phase (E3), and the content of the nonionic surfactant is 2.00 to 5.00% by mass based on the mass of the phase (E3)

is prepared as an aqueous dispersion (E).

Further, in another embodiment, an aqueous dispersion containing:

a phase (E1) in which the content of a fluoropolymer is 0.01% by mass or more and less than 1.00% by mass based on the mass of the phase (E1), and the content of a nonionic surfactant is 0.01 to 1.50% by mass based on the mass of the phase (E1);
a phase (E2) in which the content of the fluoropolymer is 0.01% by mass or more and less than 1.00% by mass based on the mass of the phase (E2), and the content of the nonionic surfactant is 20.00 to 40.00% by mass based on the mass of the phase (E2); and
a phase (E3) in which the content of the fluoropolymer is 50.00 to 75.00% by mass based on the mass of the phase (E3), and the content of the nonionic surfactant is 2.00 to 5.00% by mass based on the mass of the phase (E3)

is prepared as the aqueous dispersion (E).

In one embodiment, an aqueous dispersion containing:

a phase (E1) in which the content of a fluoropolymer is less than 1.00% by mass based on the mass of an aqueous dispersion (E), and the content of a nonionic surfactant is less than 2.00% by mass based on the mass of the aqueous dispersion (E);
a phase (E2) in which the content of the fluoropolymer is less than 1.00% by mass based on the mass of the aqueous dispersion (E), and the content of the nonionic surfactant is 1.00% by mass or more based on the mass of the aqueous dispersion (E); and
a phase (E3) in which the content of the fluoropolymer is 10.0% by mass or more based on the mass of the aqueous dispersion (E), and the content of the nonionic surfactant is 0.50% by mass or more based on the mass of the aqueous dispersion (E)

is prepared as the aqueous dispersion (E).

In another embodiment, an aqueous dispersion containing:

a phase (E1) in which the content of a fluoropolymer is 0.00% by mass or more and less than 1.00% by mass based on

the mass of an aqueous dispersion (E), and the content of a nonionic surfactant is 0.01% by mass or more and less than 2.00% by mass based on the mass of the aqueous dispersion (E);
a phase (E2) in which the content of the fluoropolymer is 0.00% by mass or more and less than 1.00% by mass based on the mass of the aqueous dispersion (E), and the content of the nonionic surfactant is 1.00 to 10.0% by mass based on the mass of the aqueous dispersion (E); and
a phase (E3) in which the content of the fluoropolymer is 10.0 to 50.0% by mass based on the mass of the aqueous dispersion (E), and the content of the nonionic surfactant is 0.50 to 2.00% by mass based on the mass of the aqueous dispersion (E)

is prepared as the aqueous dispersion (E).

In the present disclosure, the content of the fluoropolymer in the aqueous dispersion can be determined by measuring the solid concentration of the aqueous dispersion and the content of the nonionic surfactant in the aqueous dispersion, and subtracting the content of the nonionic surfactant from the solid concentration of the aqueous dispersion. The solid content concentration of the aqueous dispersion is a value calculated according to the equation: $P = Z / X \times 100$ (% by mass) from the non-volatile matter (Z g) obtained by heating about 1 g (X g) of a sample at 110°C for 30 minutes, followed by heating at 300°C for 30 minutes.

The content of the nonionic surfactant based on the fluoropolymer in the aqueous dispersion is a value calculated according to the equation: $N = [(Y-Z) / Z] \times 100$ (% by mass) from the non-volatile matter (Y g) obtained by heating about 1 g (X g) of a sample at 110°C for 30 minutes and the non-volatile matter (Z g) obtained by heating the resulting non-volatile matter (Y g) at 300°C for 30 minutes.

In the present disclosure, the content of the fluorine-containing surfactant in the aqueous dispersion can be quantified by a known method. For example, it can be quantified by LC/MS analysis.

First, methanol is added to the fluoropolymer aqueous dispersion for extraction, and the obtained extracted liquid is subjected to LC/MS analysis. In order to further increase the extraction efficiency, a treatment by Soxhlet extraction, ultrasonic treatment, or the like may be carried out.

The obtained extracted liquid was appropriately concentrated under nitrogen purge, and LC/MC measurement is performed on the fluorine-containing surfactant in the concentrated extract.

The molecular weight information is extracted from the obtained LC/MS spectrum to confirm agreement with the structural formula of the candidate fluorine-containing surfactant.

Thereafter, aqueous solutions having five or more different content levels of the confirmed fluorine-containing surfactant are prepared, and LC/MS analysis is performed on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extracted liquid can be converted to the content of the fluorine-containing surfactant.

Since the obtained extracted liquid can be concentrated under nitrogen purge, the lower limit of quantification of the measurement method can be decreased.

In the present disclosure, the content of the polymer compound (I) having an ionic group in the aqueous dispersion can be quantified by a known method. For example, it can be quantified by LC/MS analysis. The content of the polymer (I) can be determined by solid-state NMR measurement or liquid-state NMR measurement. When the polymer compound (I) contains a carbonyl group, the content can also be determined with a Fourier transform infrared spectrometer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the polymer compound (I) may be any of the polymer measurement methods respectively described in these documents.

In the production method of the present disclosure, the heating means for heating the aqueous dispersion is not limited. For example, a container accommodating the aqueous dispersion may be placed in a constant-temperature vessel and heated, or the aqueous dispersion may be accommodated in a container equipped with a heater, and heated by the heater.

In the production method of the present disclosure, the pressure in heating of the aqueous dispersion is not limited, and may be normal pressure. For example, when the temperature of the aqueous dispersion is relatively high, and boiling of the aqueous dispersion needs to be suppressed, the pressure in heating of the aqueous dispersion may exceed normal pressure.

When the aqueous dispersion is heated for separation into phases (E1) to (E3), it is preferable that the aqueous dispersion be left at rest without being stirred, or the aqueous dispersion be weakly stirred to the extent of being separated into at least three phases.

The content of the fluoropolymer in the aqueous dispersion subjected to heating for preparing the aqueous dispersion (E) is preferably 10.0 to 50.0% by mass, more preferably 15.0% by mass or more, and even more preferably 20.0% by mass or more, and more preferably 45.0% by mass or less, even more preferably 40.0% by mass or less, and particularly preferably 35.0% by mass or less, based on the mass of the aqueous dispersion.

The content of the nonionic surfactant in the aqueous dispersion subjected to heating for preparing the aqueous dispersion (E) is preferably 2.00 to 10.0% by mass, more preferably 2.20% by mass or more, even more preferably 2.50% by mass or more, yet more preferably 2.70% by mass or more, and particularly preferably 3.00% by mass or more, and is more preferably 9.0% by mass or less, even more preferably 8.0% by mass or less, yet more preferably 7.0% by mass or less, particularly preferably 6.0% by mass or less, and most preferably 5.0% by mass or less, based on the mass of the aqueous dispersion.

In the first production method, the content of the fluorine-containing surfactant in the aqueous dispersion subjected to heating for preparing the aqueous dispersion (E) is preferably 0 to 6,000 mass ppm, more preferably 5,000 mass ppm or less, even more preferably 4,500 mass ppm or less, yet more preferably 4,000 mass ppm or less, particularly preferably 3,500 mass ppm or less, and most preferably 3,000 mass ppm or less, based on the mass of the aqueous dispersion. By heating the aqueous dispersion in which the content of the fluorine-containing surfactant is in the above-described range, the aqueous dispersion (E) separated into at least three phases can be easily prepared. If the content of the fluorine-containing surfactant in the aqueous dispersion is excessively large, there is a possibility that the aqueous dispersion is separated into two phases, and cannot be separated into three or more phases even when heated at an appropriate temperature. The content of the fluorine-containing surfactant in the aqueous dispersion can be adjusted using a conventional method for reducing the content of a fluorine-containing surfactant in an aqueous dispersion, such as a method in which the aqueous dispersion is subjected to ion exchange treatment.

In the first production method, the content of the fluorine-containing surfactant in the aqueous dispersion subjected to heating for preparing the aqueous dispersion (E) may be 100 mass ppb or more, 200 mass ppb or more, 300 mass ppb or more, 400 mass ppb or more, or 500 mass ppb or more, based on the mass of the aqueous dispersion.

In the second production method, the content of the polymer compound (I) having an ionic group in the aqueous dispersion subjected to heating for preparing the aqueous dispersion (E) is preferably 0 to 6,000 mass ppm, more preferably 5,000 mass ppm or less, even more preferably 4,500 mass ppm or less, yet more preferably 4,000 mass ppm or less, particularly preferably 3,500 mass ppm or less, and most preferably 3,000 mass ppm or less, based on the mass of the aqueous dispersion. By heating the aqueous dispersion in which the content of the polymer compound (I) having an ionic group is in the above-described range, the aqueous dispersion (E) separated into at least three phases can be easily prepared. If the content of the polymer compound (I) having an ionic group in the aqueous dispersion is excessively large, there is a possibility that the aqueous dispersion is separated into two phases, and cannot be separated into three or more phases even when heated at an appropriate temperature. The content of the polymer compound (I) having an ionic group in the aqueous dispersion can be adjusted using a conventional method for reducing the content of a polymer compound (I) having an ionic group in an aqueous dispersion, such as a method in which the amount of the polymer compound (I) used in polymerization for preparing an aqueous dispersion is adjusted.

In the second production method, the content of the polymer compound (I) having an ionic group in the aqueous dispersion subjected to heating for preparing the aqueous dispersion (E) may be 10 mass ppm or more, 100 mass ppm or more, more than 500 mass ppm, or 1,000 mass ppm or more, based on the mass of the aqueous dispersion.

The aqueous dispersion subjected to heating and the aqueous dispersion (E) usually contains an aqueous medium. Aqueous dispersions (A), (B), (C), (D), (F) and (G) described later also usually contain an aqueous medium. The aqueous medium is not limited as long as it contains water, and may be an aqueous medium containing water and, for example, a fluorine-free organic solvent such as ether or ketone, and/or a fluorine-containing organic solvent having a boiling point of 40°C or lower. The aqueous medium is preferably an aqueous medium solely containing water or an aqueous medium solely containing water and a fluorine-free organic solvent, and more preferably an aqueous medium solely containing water.

In the production method of the present disclosure, the aqueous dispersion is separated into three phases. Patent Document 1 describes that when an aqueous dispersion is heated to a temperature higher than the cloud point of a nonionic surfactant, and the dispersion is cooled to the range of the cloud point of the nonionic surfactant for causing thermal phase separation, thermal phase separation (condensed phase/supernatant phase) occurs. Thus, the aqueous dispersion can be separated only into two phases by conventional heating methods. However, it has been found that when

an aqueous dispersion is heated under specific conditions, the aqueous dispersion is separated into three phases, and that when, after the step of separation into three phases, a phase containing a large amount of a fluoropolymer is collected, it is possible to produce a fluoropolymer aqueous dispersion in which the content of a fluorine-containing surfactant or a polymer compound (I) having an ionic group is reduced.

Examples of the method for separating an aqueous dispersion containing a fluoropolymer, a nonionic surfactant and a fluorine-containing surfactant or a polymer compound (I) having an ionic group into three phases to produce a fluoropolymer aqueous dispersion in which the content of a fluorine-containing surfactant or a polymer compound (II) having an ionic group is reduced include:

(1) a method in which the aqueous dispersion is heated to near the cloud point of the nonionic surfactant, and then heated to a temperature sufficiently higher than the cloud point of the nonionic surfactant in the aqueous dispersion; and

(2) a method in which the aqueous dispersion is heated to a temperature sufficiently higher than the cloud point of the nonionic surfactant in the aqueous dispersion, and the temperature of the aqueous dispersion is then adjusted to near the cloud point of the nonionic surfactant.

Next, the methods (1) and (2) will be described in more detail.

(Method (1))

In one embodiment, an aqueous dispersion (C) containing a fluoropolymer, a nonionic surfactant and a fluorine-containing surfactant or a polymer compound (I) having an ionic group is heated to a first temperature range lower than a temperature higher by 10°C than the cloud point of the nonionic surfactant and equal to or higher than 35°C, the temperature of the heated aqueous dispersion (C) is maintained in the first temperature range for 5 minutes or more to prepare an aqueous dispersion (D) containing:

a phase (D1) in which the content of the fluoropolymer is less than 1.00% by mass based on the mass of the phase (D1), and the content of the nonionic surfactant is 5.00% by mass or more based on the mass of the phase (D1); and

a phase (D2) in which the content of the fluoropolymer is 1.00% by mass or more based on the mass of the phase (D2), and the content of the nonionic surfactant is less than 5.00% by mass based on the mass of the phase (D2),

the aqueous dispersion (D) is heated to a second temperature range equal to or higher than a temperature higher by 10°C than the cloud point of the nonionic surfactant, and the temperature of the heated aqueous dispersion (D) is maintained in the second temperature range for 5 minutes or more to prepare an aqueous dispersion (E) containing phases (E1) to (E3).

When as described above, the aqueous dispersion (C) is heated at a relatively low temperature to prepare the aqueous dispersion (D) containing phases (D1) and (D2), and the aqueous dispersion (D) is then heated at a relatively high temperature, the aqueous dispersion (E) containing phases (E1) to (E3) can be prepared.

Further, the phase (E3) is collected from the aqueous dispersion (E) containing phases (E1) to (E3), whereby a fluoropolymer aqueous dispersion can be produced in which the content of a fluorine-containing surfactant and a polymer compound (I) having an ionic group is reduced.

The first temperature range is lower than a temperature higher by 10°C than the cloud point of the nonionic surfactant and equal to or higher than 35°C. The upper limit of the first temperature range is preferably a temperature higher by 5°C than the cloud point of the nonionic surfactant, and more preferably the cloud point of the nonionic surfactant. The lower limit of the first temperature range is preferably 40°C, more preferably 45°C, and even more preferably 50°C.

The time of maintaining the aqueous dispersion (C) in the first temperature range is preferably 5 minutes or more, preferably 15 minutes or more, more preferably 30 minutes or more, even more preferably 45 minutes or more, and the upper limit thereof is not limited, and may be 100 hours or less, or 50 hours or less.

The second temperature range is equal to or higher than a temperature higher by 10°C than the cloud point of the nonionic surfactant. The lower limit of the second temperature range is preferably a temperature higher by 12°C than the cloud point of the nonionic surfactant. The upper limit of the second temperature range is preferably a temperature higher by 50°C than the cloud point of the nonionic surfactant, and more preferably a temperature higher by 30°C than the cloud point of the nonionic surfactant.

The time of maintaining the aqueous dispersion (C) in the second temperature range is preferably 5 minutes or more, preferably 30 minutes or more, more preferably 1 hour or more, and even more preferably 2 hours or more, and the upper limit thereof is not limited, and may be 10 hours or less.

When the aqueous dispersion is heated for separation into phases (D1) and (D2), it is preferable that the aqueous dispersion be left at rest without being stirred, or the aqueous dispersion be weakly stirred to the extent of being separated

into at least two phases.

The composition of each of phases (D1) and (D2) in the aqueous dispersion (D) can change depending on a composition of the aqueous dispersion (C) subjected to the heating and conditions of the heating.

In one embodiment, an aqueous dispersion containing:

a phase (D1) in which the content of a fluoropolymer is less than 1.00% by mass based on the mass of the phase (D1), and the content of a nonionic surfactant is 5.00% by mass or more based on the mass of the phase (D1); and
a phase (D2) in which the content of the fluoropolymer is 50.00% by mass or more based on the mass of the phase (D2), and the content of the nonionic surfactant is less than 5.00% by mass based on the mass of the phase (D2)

is prepared as an aqueous dispersion (D).

In another embodiment, an aqueous dispersion containing:

a phase (D1) in which the content of a fluoropolymer is 0.01% by mass or more and less than 1.00% by mass based on the mass of the phase (D1), and the content of a nonionic surfactant is 5.00 to 20.00% by mass based on the mass of the phase (D1); and
a phase (D2) in which the content of the fluoropolymer is 50.00 to 75.0% by mass based on the mass of the phase (D2), and the content of the nonionic surfactant is 0.01% by mass or more and less than 5.00% by mass based on the mass of the phase (D2)

is prepared as the aqueous dispersion (D).

In one embodiment, an aqueous dispersion containing:

a phase (D1) in which the content of a fluoropolymer is less than 1.00% by mass based on the mass of an aqueous dispersion (D), and the content of a nonionic surfactant is 3.00% by mass or more based on the mass of the aqueous dispersion (D); and
a phase (D2) in which the content of the fluoropolymer is 10.0% by mass or more based on the mass of the aqueous dispersion (D), and the content of the nonionic surfactant is less than 3.00% by mass based on the mass of the aqueous dispersion (D)

is prepared as the aqueous dispersion (D).

In another embodiment, an aqueous dispersion containing:

a phase (D1) in which the content of a fluoropolymer is 0.01% by mass or more and less than 1.00% by mass based on the mass of an aqueous dispersion (D), and the content of a nonionic surfactant is 3.00 to 10.0% by mass based on the mass of the aqueous dispersion (D); and
a phase (D2) in which the content of the fluoropolymer is 10.0 to 50.0% by mass based on the mass of the aqueous dispersion (D), and the content of the nonionic surfactant is 0.01% by mass or more and less than 3.00% by mass based on the mass of the aqueous dispersion (D)

is prepared as the aqueous dispersion (D).

After preparation of the aqueous dispersion (E) containing phases (E1) to (E3), the phase (E3) may be collected, followed by addition of a nonionic surfactant to the phase (E3). By adding a nonionic surfactant to the phase (E3), a fluoropolymer aqueous dispersion can be obtained which has excellent dispersion stability although the content of a fluorine-containing surfactant and a polymer compound (I) having an ionic group is reduced.

Preferably, an aqueous dispersion having a nonionic surfactant content of 4.0 to 12.0% by mass based on the fluoropolymer is prepared by adding a nonionic surfactant to the collected phase (E3). The content of the nonionic surfactant in the aqueous dispersion is more preferably 4.5% by mass or more, and even more preferably 5.0% by mass or more, and more preferably 10% by mass or less, even more preferably 8.0% by mass or less, yet more preferably 7.0% by mass or less.

After the phase (E3) is collected, a viscosity adjuster, a pH adjuster, a preservative, a water soluble polymer and the like may be added to the phase (E3).

(Method (2))

In one embodiment, an aqueous dispersion (C) containing a fluoropolymer, a nonionic surfactant and a fluorine-containing surfactant or a polymer compound (I) having an ionic group is heated to a third temperature range equal to or higher than a temperature higher by 10°C than the cloud point of the nonionic surfactant, the temperature of the heated

aqueous dispersion (C) is maintained in the third temperature range for 5 minutes or more to prepare an aqueous dispersion (E) containing phases (E1) to (E3),

the aqueous dispersion (E) is stirred until disappearance of boundaries between the phases to prepare an aqueous dispersion (F), and
the temperature of the aqueous dispersion (F) is adjusted to a fourth temperature range lower than a temperature higher by 10°C than the cloud point of the nonionic surfactant and equal to or higher than 35°C, and the temperature of the aqueous dispersion (F) is maintained in the fourth temperature range for 5 minutes or more to prepare an aqueous dispersion (G) containing:

a phase (G1) in which the content of the fluoropolymer is less than 1.00% by mass based on the mass of the phase (G1), and the content of the nonionic surfactant is 5.00% by mass or more based on the mass of the phase (G1); and
a phase (G2) in which the content of the fluoropolymer is 1.00% by mass or more based on the mass of the phase (G2), and the content of the nonionic surfactant is less than 5.00% by mass based on the mass of the phase (G2).

When as described above, the aqueous dispersion (C) is heated at a relatively high temperature to prepare the aqueous dispersion (E) containing phases (E1) to (E3), the aqueous dispersion (E) is then stirred until disappearance of boundaries between the phases, and the aqueous dispersion (E) is then maintained at a relatively low temperature, the aqueous dispersion (G) containing phases (G1) and (G2) can be prepared.
Further, the phase (G2) is collected from the aqueous dispersion (G) containing phases (G1) and (G2), whereby a fluoropolymer aqueous dispersion can be produced in which the content of a fluorine-containing surfactant and a polymer compound (I) having an ionic group is reduced.
The third temperature range is equal to or higher than a temperature higher by 10°C than the cloud point of the nonionic surfactant. The lower limit of the third temperature range is a temperature higher by 12°C than the cloud point of the nonionic surfactant. The upper limit of the third temperature range is preferably a temperature higher by 50°C than the cloud point of the nonionic surfactant, and more preferably a temperature higher by 30°C than the cloud point of the nonionic surfactant.
The time of maintaining the aqueous dispersion (C) in the third temperature range is preferably 5 minutes or more, preferably 30 minutes or more, more preferably 1 hour or more, and even more preferably 2 hours or more, and the upper limit thereof is not limited, and may be 10 hours or less.
The fourth temperature range is lower than a temperature higher by 10°C than the cloud point of the nonionic surfactant and equal to or higher than 35°C. The upper limit of the fourth temperature range is preferably a temperature higher by 5°C than the cloud point of the nonionic surfactant, and more preferably the cloud point of the nonionic surfactant. The lower limit of the fourth temperature range is preferably 40°C, more preferably 45°C, and even more preferably 50°C.
The time of maintaining the aqueous dispersion (C) in the fourth temperature range is preferably 5 minutes or more, preferably 15 minutes or more, more preferably 30 minutes or more, even more preferably 45 minutes or more, and the upper limit thereof is not limited, and may be 100 hours or less, or 50 hours or less.
After preparation of the aqueous dispersion (E), the aqueous dispersion (E) is stirred until disappearance of boundaries between the phases. The aqueous dispersion (E) is stirred until boundaries between phases (E1) to (E3) in the aqueous dispersion (E) disappear. The stirring may be continued after boundaries between the phases disappear. While the stirring is performed to an extent that the aqueous dispersion is subjected to shear force that causes boundaries between the phases to disappear, it is necessary that the stirring be vigorous enough to ensure that the fluoropolymer in the aqueous dispersion does not aggregate. The aqueous dispersion can be stirred using, for example, a stirring blade provided in a tank containing the aqueous dispersion.
After the aqueous dispersion (E) is stirred until disappearance of boundaries between the phases disappear, the aqueous dispersion (E) is maintained at a relatively low temperature. When the aqueous dispersion is maintained at a relatively low temperature for separation into phases (G1) and (G2), it is preferable that the aqueous dispersion be left at rest without being stirred, or the aqueous dispersion be weakly stirred to the extent of being separated into at least two phases.
The composition of each of phases (G1) and (G2) in the aqueous dispersion (G) can change depending on a composition of the aqueous dispersion (E) subjected to the heating and conditions of the heating.
In one embodiment, an aqueous dispersion containing:

a phase (G1) in which the content of a fluoropolymer is less than 1.00% by mass based on the mass of the phase (G1), and the content of a nonionic surfactant is 5.00% by mass or more based on the mass of the phase (G1); and
a phase (G2) in which the content of the fluoropolymer is 30.00% by mass or more based on the mass of the phase (G2), and the content of the nonionic surfactant is less than 5.00% by mass based on the mass of the phase (G2)

is prepared as an aqueous dispersion (G).

In another embodiment, an aqueous dispersion containing:

a phase (G1) in which the content of a fluoropolymer is 0.01% by mass or more and less than 1.00% by mass based on the mass of the phase (G1), and the content of a nonionic surfactant is 5.00 to 20.00% by mass based on the mass of the phase (G1); and
a phase (G2) in which the content of the fluoropolymer is 30.00 to 75.0% by mass based on the mass of the phase (G2), and the content of the nonionic surfactant is 2.00% by mass or more and less than 5.00% by mass based on the mass of the phase (G2)

is prepared as an aqueous dispersion (G).

An aqueous dispersion containing:

a phase (G1) in which the content of a fluoropolymer is less than 1.00% by mass based on the mass of an aqueous dispersion (G), and the content of a nonionic surfactant is 0.50% by mass or more based on the mass of the aqueous dispersion (G); and
a phase (G2) in which the content of the fluoropolymer is 10.0% by mass or more based on the mass of the aqueous dispersion (G), and the content of the nonionic surfactant is less than 0.50% by mass based on the mass of the aqueous dispersion (G)

is prepared as the aqueous dispersion (G).

In another embodiment, an aqueous dispersion containing:

a phase (G1) in which the content of a fluoropolymer is 0.00% by mass or more and less than 1.00% by mass based on the mass of an aqueous dispersion (G), and the content of a nonionic surfactant is 0.50 to 10.0% by mass based on the mass of the aqueous dispersion (G); and
a phase (G2) in which the content of the fluoropolymer is 10.0 to 50.0% by mass based on the mass of the aqueous dispersion (G), and the content of the nonionic surfactant is 0.50% by mass or more and less than 2.00% by mass based on the mass of the aqueous dispersion (G).

After preparation of the aqueous dispersion (G) containing phases (G1) and (G2), the phase (G2) may be collected, followed by addition of a nonionic surfactant to the phase (G2). By adding a nonionic surfactant to the phase (G2), a fluoropolymer aqueous dispersion can be obtained which has excellent dispersion stability although the content of a fluorine-containing surfactant and a polymer compound (I) having an ionic group is reduced.

Preferably, an aqueous dispersion having a nonionic surfactant content of 4.0 to 12.0% by mass based on the fluoropolymer is prepared by adding a nonionic surfactant to the collected phase (G2). The content of the nonionic surfactant in the aqueous dispersion is more preferably 4.5% by mass or more, and even more preferably 5.0% by mass or more, and more preferably 10% by mass or less, even more preferably 8.0% by mass or less, yet more preferably 7.0% by mass or less.

After the phase (G2) is collected, a viscosity adjuster, a pH adjuster, a preservative, a water soluble polymer and the like may be added to the phase (G2).

(Aqueous dispersion (C))

The content of the fluoropolymer in the aqueous dispersion (C) subjected to heating for preparing the aqueous dispersion (D) or the aqueous dispersion (E) is preferably 10.0 to 50.0% by mass, more preferably 15.0% by mass or more, and even more preferably 20.0% by mass or more, and is more preferably 45.0% by mass or less, even more preferably 40.0% by mass or less, and particularly preferably 35.0% by mass or less, based on the mass of the aqueous dispersion (C).

The content of the nonionic surfactant in the aqueous dispersion (C) subjected to heating for preparing the aqueous dispersion (D) or the aqueous dispersion (E) is preferably 2.00 to 20.0% by mass or more, more preferably 2.70% by mass or more, and particularly preferably 3.00% by mass or more, and is more preferably 9.0% by mass or less, even more preferably 8.0% by mass or less, yet more preferably 7.0% by mass or less, particularly preferably 6.0% by mass or less, and most preferably 5.0% by mass or less, based on the mass of the aqueous dispersion.

The content of the fluorine-containing surfactant in the aqueous dispersion (C) subjected to heating for preparing the aqueous dispersion (D) or the aqueous dispersion (E) is preferably 0 to 6,000 mass ppm, more preferably 5,000 mass ppm or less, even more preferably 4,500 mass ppm or less, yet more preferably 4,000 mass ppm or less, particularly preferably 3,500 mass ppm or less, and most preferably 3,000 mass ppm or less, based on the mass of the aqueous

dispersion (C). By heating the aqueous dispersion in which the content of the fluorine-containing surfactant is in the above-described range, the aqueous dispersion (E) separated into at least three phases can be easily prepared. If the content of the fluorine-containing surfactant in the aqueous dispersion is excessively large, there is a possibility that the aqueous dispersion is separated into two phases, and cannot be separated into three or more phases even when heated at an appropriate temperature. The content of the fluorine-containing surfactant in the aqueous dispersion can be adjusted using a conventional method for reducing the content of a fluorine-containing surfactant in an aqueous dispersion, such as a method in which the aqueous dispersion is subjected to ion exchange treatment.

The content of the fluorine-containing surfactant in the aqueous dispersion (C) may be 100 mass ppb or more, 200 mass ppb or more, 300 mass ppb or more, 400 mass ppb or more, or 500 mass ppb or more, based on the mass of the aqueous dispersion (C).

The content of the polymer compound (I) having an ionic group in the aqueous dispersion (C) subjected to heating for preparing the aqueous dispersion (D) or the aqueous dispersion (E) is, based on the mass of the aqueous dispersion (C), preferably 0 to 6,000 mass ppm, more preferably 5,000 mass ppm or less, even more preferably 4,500 mass ppm or less, yet more preferably 4,000 mass ppm or less, particularly preferably 3,500 mass ppm or less, and most preferably 3,000 mass ppm or less. By heating the aqueous dispersion in which the content of the polymer compound (I) having an ionic group is in the above-described range, the aqueous dispersion (E) separated into at least three phases can be easily prepared. If the content of the polymer compound (I) having an ionic group in the aqueous dispersion is excessively large, there is a possibility that the aqueous dispersion is separated into two phases, and cannot be separated into three or more phases even when heated at an appropriate temperature. The content of the polymer compound (I) having an ionic group in the aqueous dispersion can be adjusted using a conventional method for reducing the content of a polymer compound (I) having an ionic group in an aqueous dispersion, such as a method in which the amount of the polymer compound (I) used in polymerization for preparing an aqueous dispersion is adjusted.

The content of the polymer compound (I) having an ionic group in the aqueous dispersion (C) may be 10 mass ppm or more, 100 mass ppm or more, more than 500 mass ppm, or 1,000 mass ppm or more, based on the mass of the aqueous dispersion (C).

(Ion exchange treatment)

In the first production method, the aqueous dispersion (C) can be prepared by a method in which an aqueous dispersion (B) containing a nonionic surfactant and a fluorine-containing surfactant is subjected to ion exchange treatment. The ion exchange treatment can be performed by bringing the aqueous dispersion (B) and an ion exchange resin into contact with each other. A fluoropolymer aqueous dispersion in which the content of a fluorine-containing surfactant is further reduced can be produced by subjecting the aqueous dispersion (B) to ion exchange treatment, and separating the resulting aqueous dispersion (C) into three phases.

In the second production method, the aqueous dispersion (B) obtained by adding a nonionic surfactant to the aqueous dispersion (A) can be directly used as the aqueous dispersion (C).

Even in the second production method, the aqueous dispersion (C) may be prepared by a method in which the aqueous dispersion (B) containing a nonionic surfactant and a polymer compound (I) having an ionic group is subjected to ion exchange treatment. A fluoropolymer aqueous dispersion in which the content of a fluorine-containing surfactant is further reduced can be produced by subjecting the aqueous dispersion (B) to ion exchange treatment, and separating the resulting aqueous dispersion (C) into three phases even in the case where the aqueous dispersion (B), in particular, contains a fluorine-containing surfactant in addition to a polymer compound (I) having an ionic group. In the second production method, ion exchange treatment can be performed in the same manner as in the first production method.

As the ion exchange resin, an anion exchange resin can be suitably used. The anion exchange resin is preferably a resin having an ion-exchange group represented by the following general formula (A1):

$$-N^+R^1R^2R^3X^-$$

wherein $R^1$, $R^2$ and $R^3$ are the same or different, and are each a hydrogen atom or an organic group, and at least one of $R^1$, $R^2$ and $R^3$ is an organic group having 3 or more carbon atoms; and X represents a counter ion, or an ion exchange group represented by the following general formula (A2):

$$-NR^4R^5$$

wherein $R^4$ and $R^5$ are the same or different, and are each a hydrogen atom or an organic group, and at least one of $R^4$ and $R^5$ is an organic group having 2 or more carbon atoms.

In the general formula (A1), $R^1$, $R^2$ and $R^3$ are the same or different, and are each a hydrogen atom or an organic group. Of $R^1$, $R^2$ and $R^3$, all may each be an organic group, or one may be a hydrogen atom, with two being each an organic

group. Further, two may each be a hydrogen atom, with one being an organic group. The number of carbon atoms of the organic group is 1 or more. The number of carbon atoms of the organic group is preferably 2 or more. In one preferable embodiment, $R^1$, $R^2$ and $R^3$ are each an organic group having 2 or more carbon atoms.

In the general formula (A1), at least one of $R^1$, $R^2$ and $R^3$ is an organic group having 3 or more carbon atoms. Of $R^1$, $R^2$ and $R^3$, one may be an organic group having 3 or more carbon atoms, with two being each a hydrogen atom or an organic group having 1 or 2 carbon atoms. In addition, two may each be an organic group having 3 or more carbon atoms, with one being a hydrogen atom or an organic group having 1 or 2 carbon atoms. All of $R^1$, $R^2$ and $R^3$ may each be an organic group having 3 or more carbon atoms.

In $R^1$, $R^2$ and $R^3$, the number of carbon atoms of the organic group is preferably 10 or less, more preferably 8 or less, and even more preferably 6 or less. The number of carbon atoms of the organic group may be 5 or less.

In the general formula (A1), at least one of $R^1$, $R^2$ and $R^3$ is preferably an organic group having 4 or more carbon atoms. By having such a configuration, a specific fluorine-containing compound can be more efficiently removed.

The organic group in $R^1$, $R^2$ and $R^3$ is preferably an alkyl group, an alkanol group or an alkenyl group, more preferably an alkyl group or an alkanol group, and even more preferably an alkyl group.

In the present disclosure, the "alkyl group" is a collective term for groups remaining after removal of one hydrogen atom from an aliphatic saturated hydrocarbon, and includes a linear or branched chain alkyl group having 1 or more carbon atoms, or a cyclic alkyl group having 3 or more carbon atoms.

In the present disclosure, the "alkanol group" is a collective term for groups remaining after removal of one hydrogen atom from an alkanol, and includes a linear or branched chain alkanol group having 1 or more carbon atoms, or a cyclic alkanol group having 3 or more carbon atoms.

Preferably, $R^1$, $R^2$ and $R^3$ are the same or different, and are each an alkyl group having 2 or more carbon atoms, or an alkanol group having 1 or more carbon atoms, and at least one of $R^1$, $R^2$ and $R^3$ is an alkyl group having 3 or more carbon atoms.

In one more preferable embodiment, $R^1$, $R^2$ and $R^3$ are the same or different, and are each an alkyl group having 2 or more carbon atoms, or an alkanol group having 2 or more carbon atoms, and at least one of $R^1$, $R^2$ and $R^3$ is an alkyl group having 3 or more carbon atoms.

In one preferable embodiment, $R^1$, $R^2$ and $R^3$ are the same or different, and are each an alkyl group having 2 or more carbon atoms, or an alkanol group having 1 or more carbon atoms, and at least one of $R^1$, $R^2$ and $R^3$ is an alkyl group having 4 or more carbon atoms.

In one preferable embodiment, $R^1$, $R^2$ and $R^3$ are the same or different, and are each an alkyl group having 2 or more carbon atoms, or an alkanol group having 2 or more carbon atoms, and at least one of $R^1$, $R^2$ and $R^3$ is an alkyl group having 4 or more carbon atoms.

The number of carbon atoms of the alkyl group is preferably 10 or less, more preferably 8 or less, and even more preferably 6 or less. The number of carbon atoms of the alkyl group may be 5 or less.

The number of carbon atoms of the alkanol group is preferably 10 or less, more preferably 8 or less, and even more preferably 6 or less. The number of carbon atoms of the alkanol group may be 5 or less.

In the general formula (A1), X is a counter ion. Examples of X include Cl, OH, Br, I, $NO_3$, and $SO_4$, with Cl or OH being preferable. In the case of a divalent anion such as $SO_4$, one counter ion coordinates to two molecules of the repeating unit of the general formula (A1).

In the general formula (A2), $R^4$ and $R^5$ are the same or different, and are each a hydrogen atom or an organic group, and at least one of $R^4$ and $R^5$ is an organic group having 2 or more carbon atoms. All of $R^4$ and $R^5$ may each be an organic group. In addition, one may be a hydrogen atom, with one being an organic group.

In the general formula (A2), at least one of $R^4$ and $R^5$ is an organic group having 2 or more carbon atoms.

Of $R^4$ and $R^5$, one may be an organic group having 2 or more carbon atoms, with one being a hydrogen atom or an organic group having 1 carbon atom. Both of $R^4$ and $R^5$ may each be an organic group having 2 or more carbon atoms.

At least one of $R^4$ and $R^5$ may be an organic group having 3 or more carbon atoms, or an organic group having 4 or more carbon atoms.

It is also preferable that $R^4$ and $R^5$ be each an organic group having 2 or more carbon atoms.

In $R^4$ and $R^5$, the number of carbon atoms of the organic group is preferably 10 or less, more preferably 8 or less, and even more preferably 6 or less. The number of carbon atoms of the organic group may be 5 or less.

The organic group in $R^4$ and $R^5$ is preferably an alkyl group, an alkanol group or an alkenyl group, more preferably an alkyl group or an alkanol group, and even more preferably an alkyl group.

In one more preferable embodiment, $R^4$ and $R^5$ are the same or different, and are each an alkyl group or an alkanol group, and at least one of $R^4$ and $R^5$ is an alkyl group having 2 or more carbon atoms, or an alkanol group having 2 or more carbon atoms.

The number of carbon atoms of the alkyl group is preferably 10 or less, more preferably 8 or less, and even more preferably 6 or less. The number of carbon atoms of the alkyl group may be 5 or less.

The number of carbon atoms of the alkanol group is preferably 10 or less, more preferably 8 or less, and even

more preferably 6 or less. The number of carbon atoms of the alkanol group may be 5 or less.

In the anion exchange resin, a group represented by the general formula (A1) or a group represented by the general formula (A2) is preferably bonded to a resin base. Examples of the anion exchange resin include those in which a group represented by the general formula (A1) or a group represented by the general formula (A2) is bonded to a resin base made from a styrene-based or acryl-based polymer. The styrene-based or acryl-based polymer as a resin base is not limited, and may be, for example, a resin base that is used for known anion exchange resins. The anion exchange resin preferably has a styrene-based resin base from the viewpoint of the efficiency of removing a fluorine-containing compound having a hydrophilic group.

The basicity of the anion exchange resin can be variously set according to the polymer skeleton and/or the type of ion exchange group.

The pore size of the anion exchange resin is preferably 1 to 5,000 Å. From the viewpoint of the efficiency of removing, the pore size is preferably 50 Å or more, more preferably 100 Å or more, and even more preferably 150 Å or more. The pore size may be 200 Å or more, or 250 Å or more. The pore size may be 1,000 Å or less. A specific surface area and a total pore volume can be measured by, for example, a gas adsorption method and used to calculate the pore size.

The total exchange capacity of the anion exchange resin is preferably 0.1 eq/L-Resin or more from the viewpoint of the efficiency of removing. The total exchange capacity is more preferably 0.3 eq/L-Resin or more, even more preferably 0.5 eq/L-Resin or more, and particularly preferably 0.7 eq/L-Resin or more. The upper limit thereof is preferably 5.0 eq/L-Resin or less, more preferably 2.0 eq/L-Resin or less, and particularly preferably 1.5 eq/L-Resin or less.

The content of moisture of the anion exchange resin is preferably 20% by mass or more, more preferably 30 to 70% by mass, and even more preferably 35 to 65% by mass. When the content of moisture of the anion exchange resin is 30% by mass or more, the fluorine-containing compound can be efficiently removed. In addition, the fluorine-containing compound easily diffuses into the anion exchange resin. When the content of moisture of the anion exchange resin is 70% by mass or less, a decrease in strength of particles of the anion exchange resin due to insufficient crosslinking is suppressed.

The content of moisture of the anion exchange resin can be measured by the following method. First, 10 mL of a sample in a reference form is taken by accurate measurement with a measuring cylinder, the resin is wrapped in a fabric, and centrifuged to remove adhering moisture, and the mass of the resin is measured quickly. Subsequently, the resin is dried in a constant-temperature dryer at 105°C for 4 hours, and then allowed to cool in a desiccator for 30 minutes, the mass of the resin after drying is measured, and the content of moisture is calculated by the following equation.

Content of moisture (% by mass) = (mass of resin before drying (g) - mass of resin after drying (g)) / mass of resin before drying (g) $\times$ 100

The anion exchange resin is usually spherical. The average particle size of the anion exchange resin is preferably 0.1 to 5 mm, more preferably 0.2 to 2 mm, and particularly preferably 0.3 to 1.5 mm. When the average particle size of the anion exchange resin is within the above-described range, a packing column of the anion exchange resin is hardly blocked. The average particle size is a value determined by a sieving method. Specifically, first, the anion exchange resin is put in a sieve shaker, and a particle size distribution is measured by sieving. A size of a sieve opening which corresponds to a cumulative residue fraction of 50% is determined, and taken as an average particle size.

As the anion exchange resin, a commercially available product may be used, and examples thereof include PFA694E and A592E manufactured by Purolite LLC.

As the anion exchange resin, resins having an ion-exchange group (except for groups represented by the general formula (A1) and groups represented by the general formula (A2)) may be used. Examples of the anion exchange resin include resins having at least one ion-exchange group selected from an amino group and a quaternary ammonium group (except for groups represented by the general formula (A1) and groups represented by the general formula (A2)). The anion exchange resin is preferably a group represented by the following general formula (B1):

$$-N^{+}(CH_3)_3X-$$

wherein X represents a counter ion, or a group represented by the following general formula (B2):

$$-N^{+}(CH_3)_2(C_2H_4OH)X^{-}$$

wherein X represents a counter ion. Examples of X in the general formulae (B1) and (B2) include Cl, OH, Br, I, $NO_3$, and $SO_4$, with Cl or OH being preferable. In the case of a divalent anion such as $SO_4$, one counter ion coordinates to two molecules of the repeating unit of the general formula (A1).

In the anion exchange resin, an ion-exchange group (except for groups represented by the general formula (A1)

and groups represented by the general formula (A2)) is preferably bonded to a resin base, and examples of the resin base include styrene-based or acryl-based polymers. The styrene-based or acryl-based polymer as a resin base is not limited, and may be, for example, a resin base that is used for known anion exchange resins. The anion exchange resin B preferably has a styrene-based resin base from the viewpoint of the efficiency of removing a fluorine-containing compound having a hydrophilic group.

The resin having an ion-exchange group (except for groups represented by the general formula (A1) and groups represented by the general formula (A2)) may be weakly basic, or strongly basic. The ion exchange resin is preferably a strongly basic anion exchange resin. The basicity of the anion exchange resin can be variously set according to the polymer skeleton and/or the type of ion exchange group.

The pore size of the resin having an ion-exchange group (except for groups represented by the general formula (A1) and groups represented by the general formula (A2)) is preferably 1 to 5,000 Å. From the viewpoint of the efficiency of removing, the pore size is preferably 50 Å or more, more preferably 100 Å or more, and even more preferably 150 Å or more. The pore size may be 200 Å or more, or 250 Å or more. The pore size may be 1,000 Å or less. A specific surface area and a total pore volume can be measured by, for example, a gas adsorption method and used to calculate the pore size.

The total exchange capacity of the resin having an ion-exchange group (except for groups represented by the general formula (A1) and groups represented by the general formula (A2)) is preferably 0.1 eq/L-Resin or more from the viewpoint of the efficiency of removing. The total exchange capacity is more preferably 0.3 eq/L-Resin or more, even more preferably 0.5 eq/L-Resin or more, and particularly preferably 0.7 eq/L-Resin or more. The larger the total exchange capacity, the better. For example, the upper limit thereof is preferably 5.0 eq/L-Resin, more preferably 2.0 eq/L-Resin or less, and particularly preferably 1.5 eq/L-Resin or less.

The content of moisture of the resin having an ion-exchange group (except for groups represented by the general formula (A1) and groups represented by the general formula (A2)) is preferably 20% by mass or more, more preferably 30 to 70% by mass, and even more preferably 35 to 65% by mass.

The resin having an ion-exchange group (except for groups represented by the general formula (A1) and groups represented by the general formula (A2)) is usually spherical.

The average particle size of the resin having an ion-exchange group (except for groups represented by the general formula (A1) and groups represented by the general formula (A2)) is preferably 0.1 to 5 mm, more preferably 0.2 to 2 mm, and particularly preferably 0.3 to 1.5 mm. When the average particle size is within the above-described range, a packing column of the anion exchange resin is hardly blocked. The average particle size is a value determined by a sieving method. Specifically, first, the anion exchange resin is put in a sieve shaker, and a particle size distribution is measured by sieving. A size of a sieve opening which corresponds to a cumulative residue fraction of 50% is determined, and taken as an average particle size.

As the resin having an ion-exchange group (except for groups represented by the general formula (A1) and groups represented by the general formula (A2)), commercially available products may be used. For example, Diaion (TM) SA Series manufactured by Mitsubishi Chemical Corporation, A400 and A300 manufactured by Purolite LLC, and Amberlite (TM) Series and Amberjet (TM) such as IRA4002H manufactured by DuPont de Nemours, Inc. may be used.

The ion exchange resin is preferably at least one selected from the group consisting of a resin in which a group represented by the general formula (B1) is bonded to a styrene-based polymer, and a resin in which a group represented by the general formula (B2) is bonded to a styrene-based polymer. X in the general formulae (B1) and (B2) is preferably OH among others.

The pressure at the aqueous dispersion and the ion exchange resin are brought into contact with each other is limited, and may be, for example, 0.1 to 10 atm, thus being able to apply normal pressure (about 1 atm).

The time of contact between the aqueous dispersion and the ion exchange resin is not limited, and may be 0.1 seconds to 100 hours, 1 second to 50 hours, or 1 second to 10 hours.

The amount of the ion exchange resin brought into contact with the aqueous dispersion is preferably 10,000 g or less, preferably 0.1 g or more, more preferably 1 g or more, even more preferably 5 g or more, yet more preferably 10 g or more, and particularly preferably 100 g or more, based on 1,000 g of the fluoropolymer in the aqueous dispersion.

After the aqueous dispersion (B) and the ion exchange resin are brought into contact with contact with each other, the aqueous dispersion and the ion exchange resin can be separated, followed by collection of the aqueous dispersion (C).

The method for bringing the aqueous dispersion (B) and the ion exchange resin into contact with each other may be of batch type or flow type.

The number of times the aqueous dispersion (B) and the ion exchange resin are brought into contact with each other may be 1, or may be 2 or more.

The aqueous dispersion (B) and the ion exchange resin may be brought into contact with each other by a conventionally utilized method. It is possible to apply, for example, a method in which an ion exchange resin is added to the aqueous dispersion (B), and the mixture is stirred, or a method in which the aqueous dispersion (B) is poured into a column filled with an ion exchange resin. The packing column for use in the column method may be of mobile type, fixed bed type or fluidized bed type.

When a method in which an ion exchange resin is added to the aqueous dispersion (B), and the mixture is stirred is used, the aqueous dispersion (B) and the ion exchange resin are brought into contact with each other, and the ion exchange resin and the aqueous dispersion are then separated. The method for separating the ion exchange resin and the aqueous dispersion is not limited, and may be, for example, a filtration method.
After the ion exchange treatment, the nonionic surfactant may be added to the collected aqueous dispersion (C).

(Aqueous dispersion (B))

In the first production method, the content of the fluoropolymer in the aqueous dispersion (B) subjected to ion exchange treatment for preparing the aqueous dispersion (C) is preferably 10.0 to 50.0% by mass, more preferably 15.0% by mass or more, and even more preferably 20.0% by mass or more, and is more preferably 15.0% by mass or less, even more preferably 40.0% by mass or less, and particularly preferably 35.0% by mass or less, based on the mass of the aqueous dispersion (B).
In the first production method, the content of the nonionic surfactant in the aqueous dispersion (B) subjected to ion exchange treatment for preparing the aqueous dispersion (C) is preferably 1.00 to 10.0% by mass, more preferably 1.50% by mass or more, and even more preferably 2.00% by mass or more, and is more preferably 8.0% by mass or less, even more preferably 7.0% by mass or less, particularly preferably 6.0% by mass or less, and most preferably 5.0% by mass or less, based on the mass of the aqueous dispersion (B).
In the first production method, the content of the fluorine-containing surfactant in the aqueous dispersion (B) subjected to ion exchange treatment for preparing the aqueous dispersion (C) is preferably 0 to 6,000 mass ppm, more preferably 5,000 mass ppm or less, even more preferably 4,500 mass ppm or less, yet more preferably 4,000 mass ppm or less, particularly preferably 3,500 mass ppm or less, and most preferably 3,000 mass ppm or less, based on the mass of the aqueous dispersion (B).
The content of the fluorine-containing surfactant in the aqueous dispersion (B) may be 100 mass ppb or more, 1,000 mass ppb or more, 3,000 mass ppb or more, 5,000 mass ppb or more, or 7,000 mass ppb or more, based on the mass of the aqueous dispersion (B).

(Polymerization of fluoromonomer)

In the first production method, the aqueous dispersion (B) can be prepared by a method in which a fluoromonomer is polymerized in the presence of a fluorine-containing surfactant, a polymerization initiator and an aqueous medium to prepare an aqueous dispersion (A) containing a fluoropolymer, and a nonionic surfactant is added to the aqueous dispersion (A) to prepare the aqueous dispersion (B).
In the second production method, the aqueous dispersion (B) can be prepared by a method in which a fluoromonomer is polymerized in the presence of a polymer compound (I) having an ionic group, a polymerization initiator and an aqueous medium to prepare an aqueous dispersion (A) containing a fluoropolymer, and a nonionic surfactant is added to the aqueous dispersion (A) to prepare the aqueous dispersion (B).
In the production method of the present disclosure, the phase (E3) is collected, or the phase (G2) is collected, whereby a fluoropolymer aqueous dispersion can be produced in which the content of a fluorine-containing surfactant and a polymer compound (I) having an ionic group is reduced. In one embodiment, the content of the fluorine-containing surfactant in the fluoropolymer aqueous dispersion obtained by the first production method of the present disclosure is equal to or smaller than an amount corresponding to 0.001% by mass based on the content of the fluorine-containing surfactant contained in the aqueous dispersion (A).
The content of the fluorine-containing surfactant in the aqueous dispersion (A) obtained by polymerization may be 10 mass ppm or more, 100 mass ppm or more, or 1,000 mass ppm, and may be 10% by mass or less, 5% by mass or less, or 1% by mass or less, based on the fluoropolymer in the aqueous dispersion (A).
The content of the polymer compound (I) having an ionic group in the aqueous dispersion (A) obtained by polymerization may be 10 mass ppb or more, 100 mass ppm or more, more than 500 mass ppm, or 1,000 ppm or more, and may be 10% by mass or less, 5% by mass or less, or 1% by mass or less, based on the fluoropolymer in the aqueous dispersion (A).
The polymerization of a fluoromonomer can be performed by charging a reactor with a fluoromonomer, a fluorine-containing surfactant or a polymer compound (I) having an ionic group, a polymerization initiator, an aqueous medium, and optionally other additives, stirring the contents of the reactor, maintaining the reactor at a predetermined polymerization temperature, and then adding a predetermined amount of a polymerization initiator to initiate the polymerization reaction. After the polymerization reaction is initiated, the fluoromonomer, the polymerization initiator, the fluorine-containing surfactant, and a chain transfer agent may be further added depending on the purpose. The method for polymerizing the fluoromonomer is not limited, and is preferably an emulsion polymerization method.

(Fluorine-containing surfactant)

The fluorine-containing surfactant used in the polymerization of the fluoromonomer is not limited as long it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of $F(CF_2)_{n1}COOM$ represented by a formula (I), which will be described below, the anionic moiety is the "$F(CF_2)_{n1}COO$" portion.

Examples of the fluorine-containing surfactant also include fluorine-containing surfactants having a LogPOW of 3.5 or less. The LogPOW of the fluorine-containing surfactant is preferably 3.4 or less, and is more preferably 2.0 or more, and even more preferably 2.5 or more. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced with F; the alkylene group optionally containing one or more ether bonds in which some of H are replaced with Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In the $Rf^{n0}$, 50% or more of H atoms may be replaced with fluorine atoms.

Examples of the compound represented by general formula ($N^0$) include: a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;
a compound represented by the following general formula ($N^2$):

$Rf^{n1}$-O-(CF(CF$_3$)CF$_2$O)$_{m2}$CFX$^{n1}$-Y$^0$ (N$^2$)

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;
a compound represented by the following general formula ($N^3$):

$Rf^{n2}(CH_2)_{m3}$-$(Rf^{n3})_q$-$Y^0$ ($N^3$)

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms; q is 0 or 1; and $Y^0$ is as defined above; a compound represented by the following general formula ($N^4$):

$Rf^{n4}$-O-$(CY^{n1}Y^{n2})_p$$CF_2$-$Y^0$ ($N^4$)

wherein $Rf^{n4}$ is a linear or branched, partially or fully fluorinated alkyl group having 1 to 12 carbon atoms and optionally containing an ether bond; $Y^{n1}$ and $Y^{n2}$ are the same or different and are each independently H or F; p is 0 or 1; and $Y^0$ is as defined above; and a compound represented by the following general formula ($N^5$):

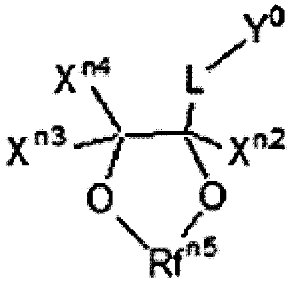

($N^5$)

wherein $X^{n2}$, $X^{n3}$, and $X^{n4}$ may be the same or different and are each H, F, or a linear or branched, partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and $Y^0$ is as defined above, provided that the total number of carbon atoms in $X^{n2}$, $X^{n3}$, $x^{n4}$, and $Rf^{n5}$ is 18 or less.

More specific examples of the compound represented by the general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).
The perfluorocarboxylic acid (I) is represented by the following general formula (I):

$F(CF_2)_{n1}COOM$ (I)

wherein n1 is an integer of 3 to 14; and M is H, a metal atom, $NR^7_4$, imidazolium optionally having a substituent, pyridinium optionally having a substituent, or phosphonium optionally having a substituent, wherein $R^7$ is H or an organic group.
The ω-H perfluorocarboxylic acid (II) is represented by the following general formula (II):

$H (CF_2)_{n2}COOM$ (II)

wherein n2 is an integer of 4 to 15; and M is as defined above.
The perfluoroethercarboxylic acid (III) is represented by the following general formula (III):

$Rf^1$-O-(CF(CF$_3$)CF$_2$O)$_{n3}$CF(CF$_3$)COOM (III)

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$$F\ (CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H\ (CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched partially or fully fluorinated alkyl group having 1 to 6 carbon atoms and optionally containing an ether bond and/or a chlorine atom; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

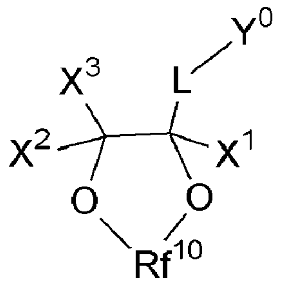

(XII)

wherein $X^1$, $X^2$, and $X^3$ may be the same or different and are H, F, and a linear or branched, partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms and containing chlorine; n9 is an integer of 0 to 3; n10 is an integer of 0 to 3; and M is as defined above. An example of the compound (XIII) may be $CF_2ClO(CF_2CF(CF_3)O)_{n9}(CF_{20})_{n10}CF_2COONH_4$ (a mixture having an average molecular weight of 750, n9 and n10 in the formula are as described above).

As described above, examples of the anionic fluorine-containing surfactant include a carboxylic acid-based surfactant and a sulfonic acid-based surfactant.

The fluorine-containing surfactant may be one type of fluorine-containing surfactant or it may be a mixture containing two or more types of fluorine-containing surfactants.

The fluorine-containing surfactant preferably does not have a methylene group ($-CH_2-$), and more preferably does not have a C-H bond. The use of a fluorine-containing surfactant that does not have a methylene group ($-CH_2-$) or a C-H bond within the molecule enables the fluoromonomer to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables the fluoromonomer to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group $Y^0$. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula ($N^1$), compounds represented by general formula ($N^2$), and compounds represented by general formula ($N^4$):

$$Rf^{n4}\text{-O-}(CY^{n1}F)_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond (provided that those having $-CH_2-$ are excluded), $Y^{n1}$ is H or F, p is 0 or 1, and $Y^0$ is as defined above; and compounds represented by general formula ($N^5$):

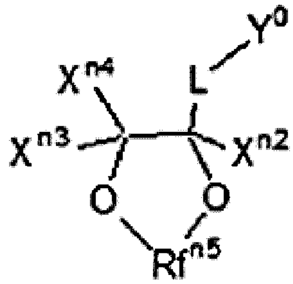

(N5)

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond (provided that those having $-CH_2-$ are excluded), provided that $X^{n3}$ and $X^{n4}$ are not simultaneously H; $Rf^{n5}$ is a linear or branched, partially or fully fluorinated alkylene group having 1 to 3 carbon atoms and optionally containing an ether bond (provided that those having $-CH_2-$ are excluded); L is a linking group; and $Y^0$ is as defined above, provided that the total number of carbon atoms of $X^{n2}$, $X^{n3}$, $X^{n4}$, and $Rf^{n5}$ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): $Rf^7-O-Rf^8-O-CF_2-COOM$ wherein $Rf^7$ is a linear or branched, partially or fully fluorinated alkyl group having 1 to 6 carbon atoms and optionally containing an ether bond and/or a chlorine atom (provided that those having $-CH_2-$ are excluded), $Rf^8$ is a linear or branched, partially or fully fluorinated alkyl group having 1 to 6 carbon atoms (provided that those having $-CH_2-$are excluded), and M is as defined above, an alkoxyfluorosulfonic acid (XI) represented by general formula (XI): $Rf^9-O-CY^1FCF_2-SO_3M$

wherein $Rf^9$ is a linear or branched, partially or fully fluorinated alkyl group having 1 to 12 carbon atoms, optionally containing chlorine, and optionally containing an ether bond (provided that those having $-CH_2-$ are excluded), $Y^1$ is H or F, and M is as defined above, a compound (XII) represented by general formula (XII):

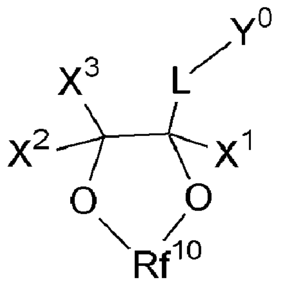

(XII)

wherein $X^1$, $X^2$, and $X^3$ may be the same or different and are each independently H, F, and a linear or branched, partially or fully fluorinated alkyl group having 1 to 6 carbon atoms and optionally containing an ether bond (provided that those having $-CH_2-$ are excluded), provided that $X^2$ and $X^3$ are not simultaneously H, $Rf^{10}$ is a perfluoroalkylene group having 1 to 3 carbon atoms, L is a linking group, and $Y^0$ is an anionic group, and

a compound (XIII) represented by general formula (XIII): $Rf^{11}-O-(CF_2CF(CF_3)O)_{n9}(CF_2O)_{n10}CE_2COOM$

wherein $Rf^{11}$ is a fluoroalkyl group having 1 to 5 carbon atoms containing chlorine (provided that those having $-CH_2-$ are excluded), n9 is an integer of 0 to 3, n10 is an integer of 0 to 3, and M is as defined above. The use of such a fluorine-containing surfactant enables the fluoromonomer to be smoothly polymerized in the presence of an aqueous medium.

Examples of the fluorine-containing surfactant include compounds represented by the formulae below. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

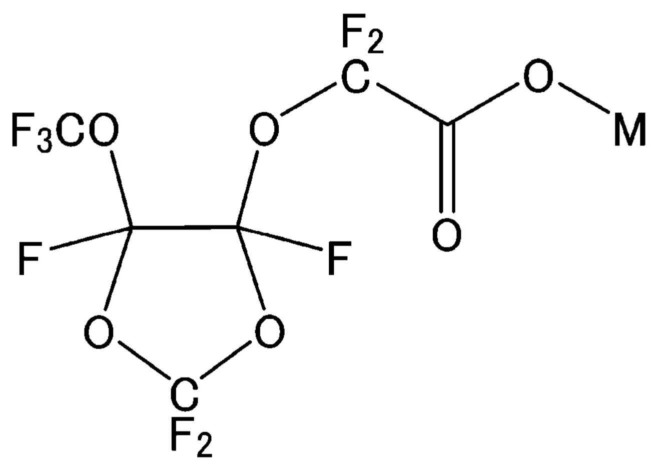

in each formula, M is H, a metal atom, $NR^7_4$, imidazolium optionally having a substituent, pyridinium optionally having a substituent, or phosphonium optionally having a substituent; and $R^7$ is H or an organic group.

The amount of the fluorine-containing surfactant added is preferably 10 mass ppm to 10% by mass, more preferably 100 mass ppm or more, and even more preferably 300 mass ppm or more, and is more preferably 5% by mass or less and even more preferably 1% by mass or less, based on the aqueous medium.

(Polymer compound (I) having an ionic group)

The polymer compound (I) having an ionic group, which is used in polymerization of a fluoromonomer, is a polymer having one or more ionic groups in the molecule. The ionic group is preferably an anionic group.

The anionic group of the polymer compound (I) includes a functional group that imparts an anionic group, e.g., an acid group such as -COOH and an acid base such as $-COONH_4$, in addition to anionic groups such as a sulfate group and a carboxylate group. The anionic group is preferably a sulfate group, a carboxylate group, a phosphate group, a

phosphonate group, a sulfonate group, or $-C(CF_3)_2OM$, wherein M is -H, a metal atom, $-NR^7_4$, imidazolium optionally having a substituent, pyridinium optionally having a substituent, or phosphonium optionally having a substituent and $R^7$ is H or an organic group.

The ion exchange capacity of the polymer compound (I) is, in ascending order of preference, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer compound (I), and can be calculated from the composition of the polymer compound (I).

In the polymer compound (I), the ionic groups (anionic groups) are typically distributed along the polymer backbone. The polymer compound (I) contains the polymer backbone together with a repeating side chain bonded to this backbone, and this side chain preferably has an ionic group.

The polymer compound (I) preferably contains an ionic group having a pKa of less than 10, and more preferably less than 7. The ionic group of the polymer compound (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. Preferable ionic groups are a carboxylate group and a sulfonate group.

The ionic group is preferably $-SO_3M$, -COOM or $-P(O)(OM)_2$. "M" in the ionic group (anionic group) is the same as "M" in an "anionic group ($A^0$)" described later.

The polymer compound is preferably a polymer compound in which the proportion of hydrogen atoms replaced with fluorine atoms in hydrogen atoms bonded to carbon atoms is 50% or more. The "proportion of hydrogen atoms replaced with fluorine atoms in hydrogen atoms bonded to carbon atoms" is determined as a ratio of the number of fluorine atoms to the total number of hydrogen atoms bonded to carbon atoms and halogen atoms (including fluorine atoms) bonded to carbon atoms.

The polymer compound (I) preferably has an ion exchange rate (IXR) of 53 or less. The IXR described above is defined as the number of carbon atoms in the polymer main chain relative to the ionic group. A precursor group that becomes ionic by hydrolysis (such as $-SO_2F$) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is also more preferably 43 or less, even more preferably 33 or less, and particularly preferably 23 or less.

The polymer compound (I) preferably has water solubility. Water solubility means the property of being readily dissolved or dispersed in an aqueous medium. When the polymer compound (I) has water solubility, the particle size cannot be measured, or a particle size of 10 nm or less is indicated, by, for example, dynamic light scattering (DLS).

The number average molecular weight of the polymer compound (I) is preferably $0.1 \times 10^4$ or more, more preferably $0.2 \times 10^4$ or more, even more preferably $0.3 \times 10^4$ or more, yet more preferably $0.4 \times 10^4$ or more, further preferably $0.5 \times 10^4$ or more, particularly preferably $1.0 \times 10^4$ or more, more particularly preferably $3.0 \times 10^4$ or more, and most preferably $3.1 \times 10^4$ or more. The number average molecular weight of the polymer compound (I) is preferably $75.0 \times 10^4$ or less, more preferably $50.0 \times 10^4$ or less, even more preferably $40.0 \times 10^4$ or less, yet more preferably $30.0 \times 10^4$ or less, and particularly preferably $20.0 \times 10^4$ or less. The number average molecular weight and the weight average molecular weight are molecular weight values calculated by gel permeation chromatography (GPC) using monodisperse polystyrene as a standard. When measurement by GPC is not possible, the number average molecular weight of the polymer compound (I) can be determined by the correlation between the number average molecular weight calculated from the number of terminal groups obtained by NMR, FT-IR, or the like, and the melt flow rate. The melt flow rate can be measured in accordance with JIS K 7210.

The lower limit of the weight average molecular weight of the polymer compound (I) is, in ascending order of preference, $0.2 \times 10^4$ or more, $0.4 \times 10^4$ or more, $0.6 \times 10^4$ or more, $0.8 \times 10^4$ or more, $1.0 \times 10^4$ or more, $2.0 \times 10^4$ or more, $5.0 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight of the polymer compound (I) is, in ascending order of preference, $150.0 \times 10^4$ or less, $100.0 \times 10^4$ or less, $60.0 \times 10^4$ or less, $50.0 \times 10^4$ or less, or $40.0 \times 10^4$ or less.

The viscosity of the aqueous solution of polymer compound (I) is preferably 5.0 mPa.s or more, more preferably 8.0 mPa.s or more, more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer compound (I) can be determined by regulating the content of the polymer compound (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer compound (I) is preferably 0.1% by mass or more, more

preferably 0.5% by mass or more, and even more preferably 1% by mass or more, and is preferably 20% by mass or less, more preferably 10% by mass or less, and even more preferably 5% by mass or less.

The critical micelle concentration of the polymer compound (I) can be determined by measuring surface tension. Surface tension can be measured with, for example, a surface tensiometer DY-300 manufactured by Kyowa Interface Science Co., Ltd.

The acid value of the polymer compound (I) is preferably 60 or more, more preferably 90 or more, even more preferably 120 or more, particularly preferably 150 or more, and most preferably 180 or more, and while the upper limit is not specified, it is preferably 300 or less.

When the polymer compound (I) has an anionic group such as -COOM, $-SO_3M$, $-OSO_3M$, or $-C(CF_3)_2OM$ (M is a metal atom, $NR^7_4$, imidazolium optionally having a substituent, pyridinium optionally having a substituent, or phosphonium optionally having a substituent, and $R^7$ is H or an organic group) other than an acid-type functional group, the acid value of the polymer compound (I) can be determined by acid-base titration after converting the anionic group into an acid-type group.

The polymer compound (I) is preferably a polymer containing a polymerization unit (I) derived from a monomer (I) represented by the general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

R is a linking group. The "linking group" in the present disclosure is a (m+1)-valent linking group, and refers to a divalent linking group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may contain no carbon atoms, and may be a catenary heteroatom such as oxygen, sulfur, or nitrogen.

m is an integer of 1 or more, and is preferably 1 or 2 and more preferably 1. When m is an integer of 2 or more, $Z^1$, $Z^2$, and $A^0$ may be the same or different.

Next, a suitable configuration wherein m is 1 in the general formula (I) will now be described.

R is preferably a catenary heteroatom such as oxygen, sulfur or nitrogen, or a divalent organic group.

When R is a divalent organic group, a hydrogen atom bonded to a carbon atom may be replaced with halogen other than fluorine, such as chlorine, and the divalent organic group may or may not contain a double bond. R may be linear or branched, and may be cyclic or acyclic. Also, R may contain a functional group (such as ester, ether, ketone (a keto group), amine, or halide).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from $-(CH_2)_a-$, $- (CF_2)_a-$, $-(CF_2)_a-O-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]-$, $-[(CF_2)_a-O]_b-[(CF_2)-_c-O]_d-$ , $-O[(CF_2)_a-O]_b-$, $-O[(CF_2)_a-O]_b-[(CF_2)-O]_d-$, $-O-[CF_2CF(CF_3)O]_a-(CF_2)_b-$, $-O-(CF_2)_a-O-[CF(CF_3)CF_2O]_b-$, $-O-[CF_2CF(CF_3)O]_a-(CF_2)_b-O-$, $-O-[CF_2CF(CF_3)O]_a-(CF_2)_b-O-[CF(CF_3)CF_2O]_c-$, $-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, $-[CF_2CF(CF_3)]_a-CO-(CF_2)_b-$, and a combination thereof.

In the formulae, a, b, c, and d are independently at least 1 or more. a, b, c, and d may independently be 2 or more, 3 or more, 4 or more, 10 or more, or 20 or more. The upper limits of a, b, c, and d are, for example, 100.

R is more preferably at least one selected from $-O-CF_2-$, $- O-CF_2CF_2-$, $-O-CF_2CF_2-O-$, $-O-CF_2CF_2CF_2-$, $-O-CF_2CF_2CF_2-O-$, $-O-CF_2CF(CF_3)-O-$, $-O-CF_2CF_2-O-CF(CF_3)CF_2-O-$, $-O-CF_2CF(CF_3)-O-CF_2CF_2-O-$, and $-O-CF_2CF(CF_3)-O-CF_2-$.

R is preferably a divalent group represented by the general formula (r1):

$$-CF_2-O-(CX^6{}_2)_e-\{O-CF(CF_3)\}_f-(O)_g- \quad (r1)$$

(wherein $X^6$ is each independently H, F, or $CF_3$; e is an integer of 0 to 3; f is an integer of 0 to 3; and g is 0 or 1), and more preferably a divalent group represented by the general formula (r2):

$$-CF_2-O-(CX^7{}_2)_e-(O)_q- \quad (r2)$$

(wherein $X^7$ is each independently H, F, or $CF_3$; e is an integer of 0 to 3; and g is 0 or 1).

Specific suitable examples of R include $-CF_2-O-$, $-CF_2-O-CF_2-$, $-CF_2-O-CH_2-$, $-CF_2-O-CH_2CF_2-$, $-O-CF_2-$, $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. In particular, R is preferably a perfluoroalkylene group optionally containing an oxygen atom and, specifically, is preferably $-CF_2-O-$, $-CF_2-O-CF_2-$, $-O-CF_2-$, $-O-CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$.

$-R-CZ^1 2^2-$ in the general formula (I) is preferably represented by the general formula (s1):

$$-CF_2-O-(CX^6{}_2)_e-\{O-CF(CF_3)\}_f-(O)_g-CZ^1Z^2- \quad (s1)$$

(wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group), and more preferably, in the formula (s1), $Z^1$ and $Z^2$ are F or $CF_3$, and yet more preferably one is F, and the other is $CF_3$.

Also, $-R-CZ^1Z^2-$ in the general formula (I) is preferably represented by the general formula (s2):

$$-CF_2-O-(CX^7{}_2)_e-(O)_g-CZ^1Z^2- \quad (s2)$$

(wherein $X^7$ is each independently H, F, or $CF_3$; e is an integer of 0 to 3; g is 0 or 1; and $Z^1$ and $Z^2$ are each independently H, F, an alkyl group, or a fluorine-containing alkyl group), and more preferably, in the formula (s2), $Z^1$ and $Z^2$ are F or $CF_3$, and yet more preferably one is F, and the other is $CF_3$.

$-R-CZ^1Z^2-$ in the general formula (I) is preferably $-CF_2-O-CF_2-$, $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-O-CF_2CF(CF_3)-O-CF_2CF_2CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$,$-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, more preferably $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, or $-CF_2-O-CF(CF_3)CF_2-O-CF(CF_3)-$, and even more preferably $-O-CF_2CF_2-$ and $-O-CF_2CF(CF_3)-O-CF_2CF_2-$.

Also preferably, the polymer compound (I) is highly fluorinated. Except for the anionic group ($A^0$) such as a phosphate group moiety (such as $CH_2OP(O)(OM)_2$) or a sulfate group moiety (such as $CH_2OS(O)_2OM$), 80% or more, 90% or more, 95% or more, or 100% of the C-H bonds in the polymer compound (I) are preferably replaced with C-F bonds.

The monomer (I) and the polymer compound (I) also preferably have a C-F bond and does not have a C-H bond, except for the anionic group ($A^0$). In other words, in the general formula (I), preferably, $X^1$, $X^2$, and $X^3$ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer compound (I) may be partially fluorinated. That is to say, the monomer (I) and the polymer compound (I) also preferably have at least one hydrogen atom bonded to a carbon atom and at least one fluorine atom bonded to a carbon atom, in the portion excluding the anionic group ($A^0$).

The anionic group ($A^0$) may be $-SO_2M$, $-SO_3M$, $-OSO_3M$, $-COOM$, $-SO_2NR'CH_2COOM$, $-CH_2OP(O)(OM)_2$, $[-CH_2O]_2P(O)(OM)$, $-CH_2CH_2OP(O)(OM)_2$, $[-CH_2CH_2O]_2(O)(OM)$, $-CH_2CH_2OSO_3M$, $-P(O)(OM)_2$, $-SO_2NR'CH_2CH_2O-P(O)(OM)_2$, $[-SO_2NR'CH_2CH_2O]_2P(O)(OM)$, $-CH_2OSO_3M$, $-SO_2NR'CH_2CH_2OSO_3M$, or $-C(CF_3)_2OM$. In particular, it is preferably $-SO_3M$, $-OSO_3M$, $-COOM$, $-P(O)(OM)_2$, or $-C(CF_3)_2OM$; more preferably $-COOM$, $-SO_3M$, $-OSO_3M$, $-P(O)(OM)_2$, or $-C(CF_3)_2OM$; even more preferably $-SO_3M$, $-COOM$, or $-P(O)(OM)_2$; and particularly preferably $-SO_3M$ or $-COOM$.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), and Na, K, or Li is preferable.

M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $NH_4$, yet more preferably -H, -Na, -K, or $NH_4$, particularly preferably -H, -Na or $NH_4$, and most preferably -H, or $-NH_4$.

In the polymer compound (I), each polymerization unit (I) may have a different anionic group or may have the same anionic group.

The monomer (I) is preferably a monomer (1) represented by the general formula (1). The polymer compound (I) is preferably a polymer compound (1) containing a polymerization unit (1) derived from a monomer represented by the general formula (1):

$$CX_2=CY(-CZ_2-O-Rf-A) \qquad (1)$$

wherein X is the same or different and is -H or F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, and $R^7$ is H or an organic group, provided that at least one of X, Y, and Z contains a fluorine atom.

The polymer compound (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be - F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and may have one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or $CF_3$, and more preferably - F.

In the general formula (1), Z is the same or different, and is -H, -F, an alkyl group, or a fluoroalkyl group. The alkyl group is an alkyl group not containing a fluorine atom, and may have one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or $CF_3$, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include $-CF_2-$, $-CH_2CF_2-$, $-CF_2CF_2-$, $-CF_2CH_2-$, $-CF_2CF_2CF_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group, for example, represented by the general formula:

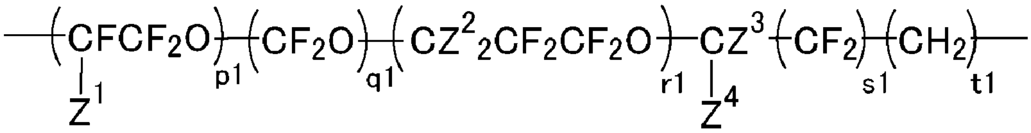

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (1), A is -COOM, $-SO_3M$, $-OSO_3M$, or $-C(CF_3)_2OM$, wherein M is H, a metal atom, $NR^7_4$, imidazolium optionally having a substituent, pyridinium optionally having a substituent, or phosphonium optionally having a substituent, and $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably H, a metal atom, or $NR^7_4$, more preferably H, an alkali metal (Group 1), an alkaline earth metal (Group 2), or $NR^7_4$, even more preferably H, Na, K, Li, or $NH_4$, yet more preferably H, Na, K, or $NH_4$, particularly preferably H, Na or $NH_4$, and most preferably H or $NH_4$.

A is preferably -COOM or $-SO_3M$.

Examples of the monomer represented by the general formula (1) include the monomer represented by the general formula (1a):

$$CX_2=CFCF_2-O-(CF\ (CF_3)CF_2O)_{n3}-CF(CF_3)-A \qquad (1a)$$

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

The polymer compound (1) may be a homopolymer of a monomer represented by the general formula (1a), or may be a copolymer with a further monomer.

The monomer (1) is preferably a monomer represented by the general formula (1A) below.

The polymerization unit (1) is preferably a polymerization unit (1A) derived from a monomer represented by the general formula (1A):

$$CH_2=CF(-CF_2-O-Rf-A) \qquad (1A)$$

wherein Rf and A are as described above.

The polymer compound (1) may be a homopolymer of a monomer represented by the general formula (1A), or may be a copolymer with a further monomer.

Specific examples of the monomer represented by the formula (1A) include a monomer represented by the following formula:

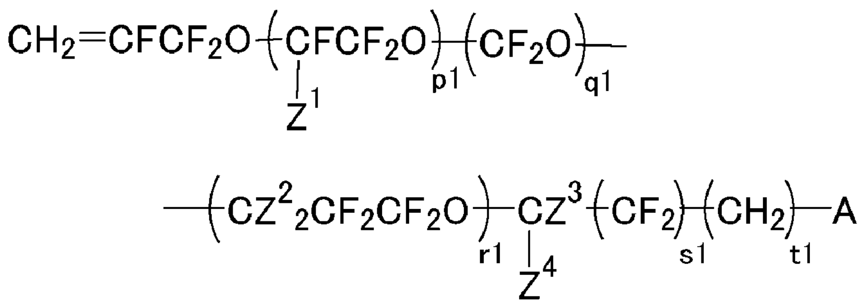
,

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5, provided that when $Z^3$ and $Z^4$ are both H, p1+q1+r1+s1 is not 0; and A is as defined above. More

specifically, preferable examples include

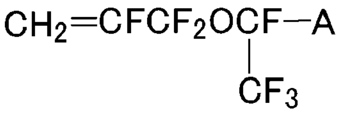 , 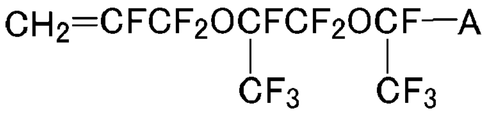 ,

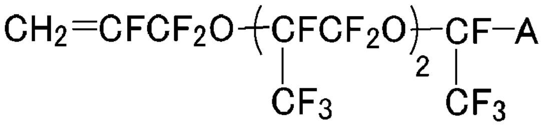 , 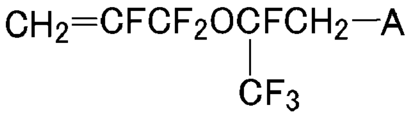 ,

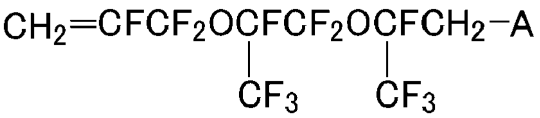 , 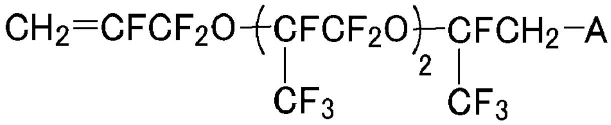 ,

$CH_2=CFCF_2OCH_2CF_2$-A , $CH_2=CFCF_2O(CH_2CF_2CF_2O)CH_2CF_2$-A ,

$CH_2=CFCF_2OCH_2CF_2CH_2$-A ,

$CH_2=CFCF_2O(CH_2CF_2CF_2O)CH_2CF_2CH_2$-A ,

$CH_2=CFCF_2OCF_2CF_2$-A , $CH_2=CFCF_2O(CF_2CF_2CF_2O)CF_2CF_2$-A ,

$CH_2=CFCF_2OCF_2CF_2CH_2$-A ,

$CH_2=CFCF_2O(CF_2CF_2CF_2O)CF_2CF_2CH_2$-A ,

$CH_2=CFCF_2OCF_2$-A , $CH_2=CFCF_2O(CF_2CF_2O)CF_2$-A ,

$CH_2=CFCF_2OCF_2CH_2$-A ,

$CH_2=CFCF_2O(CF_2CF_2O)CF_2CH_2$-A ,

and, in particular,

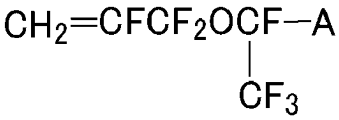 , 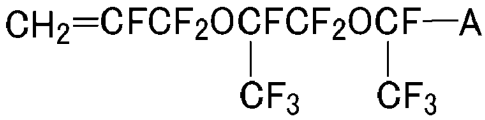 ,

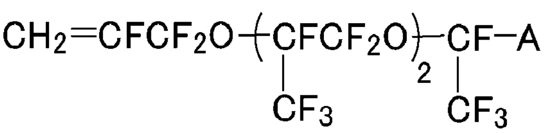 , 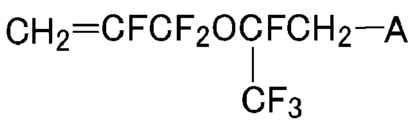 ,

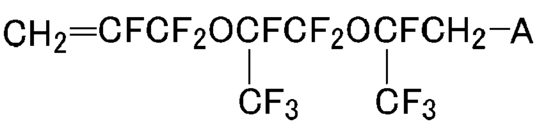 , 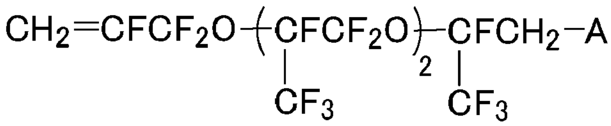 ,

are preferable.

In the monomer represented by the general formula (1A), A in the formula (1A) is preferably -COOM, and, in particular, at least one selected from the group consisting of $CH_2=CFCF_2OCF(CF_3)COOM$ and $CH_2=CFCF_2OCF(CF_3)$

$CF_2OCF(CF_3)COOM$ (wherein M is as defined above) is preferable, and $CH_2=CFCF_2OCF(CF_3)COOM$ is more preferable.

The monomer (I) is also preferably a monomer (2) represented by the general formula (2).

The polymer compound (I) is preferably a polymer compound (2) containing a polymerization unit (2) derived from a monomer represented by the general formula (2):

$CX_2=CY(-O-Rf\ -A)$ (2)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

The monomer (I) is also preferably a monomer (3) represented by the general formula (3).

The polymer compound (I) is also preferably a polymer compound (3) containing a polymerization unit (3) derived from a monomer represented by the general formula (3):

$CX_2=CY(-Rf-A)$ (3)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The polymer compound (I) may be a homopolymer composed solely of the polymerization unit (I), or may be a copolymer containing the polymerization unit (I) and a polymerization unit derived from a further monomer copolymerizable with the monomer represented by the general formula (I). From the viewpoint of solubility in the aqueous medium, a homopolymer composed solely of the polymerized unit (I) is preferable. The polymerization unit (I) may be the same or different at each occurrence, and may contain the polymerization unit (I) derived from two or more different monomers represented by the general formula (I).

The polymer compound (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or the fluoroalkyl group preferably has 1 to 20 carbon atoms. These terminal groups are, in general, produced from an initiator or a chain transfer agent used to form the polymer compound (I) or produced during a chain transfer reaction.

In the polymer compound (I), the content of the polymerization unit (I) is, in ascending order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on the entirety of polymerization units. The content of the polymerization unit (I) is, particularly preferably, substantially 100 mol%, and the polymer compound (I) is most preferably composed solely of the polymerization unit (I).

In the polymer compound (I), the content of the polymerization unit derived from the further monomer copolymerizable with the monomer represented by the general formula (I) is, in ascending order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on the entirety of polymerization units. The content of the polymerization unit derived from the further monomer copolymerizable with the monomer represented by the general formula (I) is, particularly preferably, substantially 0 mol%, and most preferably the polymer compound (I) does not contain the polymerization unit derived from the further monomer.

(Polymerization initiator)

The polymerization initiator used in the polymerization of the fluoromonomer is not limited as long as it can generate radicals within the polymerization temperature range, and known oil-soluble and/or water-soluble polymerization initiators can be used. The polymerization initiator can also be combined with a reducing agent or the like to form a redox agent and initiate polymerization. The concentration of the polymerization initiator is suitably determined according to the types of the monomers, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide or the like, t-butyl permaleate, and t-butyl hydroperoxide. A reducing agent such as a sulfite may be contained together, and may be used in an amount of 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, in the case of using potassium permanganate/oxalic acid, preferably, a polymerization tank is charged with oxalic acid, and potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing the fluoromonomer, the concentration of radicals during polymerization can be regulated. Examples of the decomposer include sulfites, bisulfites, bromates, diimines, oxalic acid, copper salts, and iron salts. Examples of sulfites include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. The decomposer is preferably added after 5% by mass of the entirety of the fluoromonomer to be consumed in the polymerization reaction is polymerized, and more preferably added after 10% by mass is polymerized. The amount of the decomposer added is preferably an amount corresponding to 0.1 to 20 mass ppm and more preferably an amount corresponding to 3 to 10 mass ppm of the mass of the aqueous medium used.

(Aqueous medium)

The aqueous medium for use in the polymerization of the fluoromonomer is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and more preferably an aqueous medium solely containing water.

The content of the aqueous medium is preferably 90% or more, more preferably 95% or more, even more preferably 99.0% or more, yet more preferably 99.5% or more, and particularly preferably 99.9% or more, and may be 100%, based on the mass of the aqueous medium.

(Fluoromonomer)

The fluoromonomer for use in polymerization has at least one fluorine atom and at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VdF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by general formula (100): $CHX^{101}=CX^{102}Rf^{101}$, wherein one of $X^{101}$ and $X^{102}$ is H, the other is F, and $Rf^{101}$ is a linear or branched fluoroalkyl group having 1 to 12 carbon atoms, a fluorinated vinyl heterocyclic compound, and a monomer that provides a crosslinking site.

The fluoroalkyl vinyl ether (FAVE) is preferably, for example, at least one selected from the group consisting of:

a fluoromonomer represented by general formula (110): $CF_2=CF-ORf^{111}$
wherein $Rf^{111}$ represents a perfluoroorganic group;
a fluoromonomer represented by the general formula (120): $CF_2=CF-OCH_2-Rf^{121}$
wherein $Rf^{121}$ is a perfluoroalkyl group having 1 to 5 carbon atoms;
a fluoromonomer represented by the general formula (130) : $CF_2=CFOCF_2ORf^{131}$
wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : $CF_2=CFO(CF_2CF(Y^{141})O)_m(CF_2)_nF$
wherein $Y^{141}$ represents a fluorine atom or a trifluoromethyl group; m is an integer of 1 to 4, and n is an integer of 1 to 4; and
a fluoromonomer represented by the general formula (150) : $CF_2=CF-O-(CF_2CFY^{151}-O)_n-(CFY^{152})_m-A^{151}$

wherein $Y^{151}$ represents a fluorine atom, a chlorine atom, a - $SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents $-SO_2X^{151}$, $-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same or different, and each independently represent $-NR^{154}R^{155}$ or $-OR^{156}$; and $R^{151}$, $R^{152}$, $R^{153}$, $R^{154}$, $R^{155}$, and $R^{156}$ are the same or different, and each independently represent H, ammonium, an alkali metal, or an alkyl group, aryl group, or sulfonyl-containing group optionally containing a fluorine atom.

The "perfluoroorganic group" in the present disclosure, means an organic group in which all hydrogen atoms bonded to the carbon atoms are replaced with fluorine atoms. The perfluoroorganic group optionally has ether oxygen.

The fluoromonomer represented by the general formula (110) may be a fluoromonomer in which $Rf^{111}$ is a perfluoroalkyl group having 1 to 10 carbon atoms. The perfluoroalkyl group preferably has 1 to 5 carbon atoms.

Examples of the perfluoroorganic group in general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by general formula (110) also include those represented by general formula (110) in which $Rf^{111}$ is a perfluoro(alkoxyalkyl) group having 4 to 9 carbon atoms; those in which $Rf^{111}$ is a group represented by the following formula:

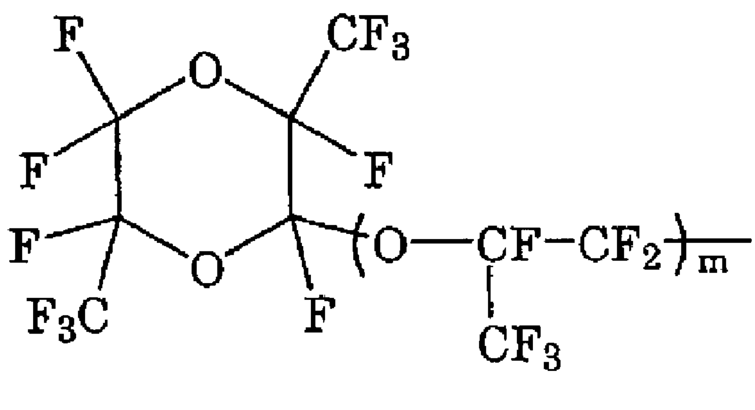

wherein m represents 0 or an integer of 1 to 4; and those in which $Rf^{111}$ is a group represented by the following formula:

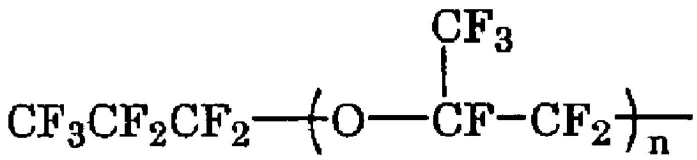

wherein n represents an integer of 1 to 4.

In particular, the fluoromonomer represented by the general formula (110) is preferably a fluoromonomer represented by the general formula (160): $CF_2=CF-ORf^{161}$
wherein $Rf^{161}$ represents a perfluoroalkyl group having 1 to 10 carbon atoms. $Rf^{161}$ is preferably a perfluoroalkyl group having 1 to 5 carbon atoms.

The fluoroalkyl vinyl ether is preferably at least one selected from the group consisting of fluoromonomers represented by general formulae (160), (130), and (140).

The fluoromonomer represented by the general formula (160) is generally called a perfluoro(alkylvinyl ether). The fluoromonomer represented by general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether) .

The fluoromonomer represented by general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The fluoromonomer represented by general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.

The fluoromonomer represented by the general formula (100) is preferably a fluoromonomer in which $Rf^{101}$ is a linear fluoroalkyl group, and more preferably a fluoromonomer in which $Rf^{101}$ is a linear perfluoroalkyl group. $Rf^{101}$ preferably has 1 to 6 carbon atoms. Examples of the fluoromonomer represented by the general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E isomer), and $CHF=CHCF_3$ (Z isomer), and, in particular, 2,3,3,3-tetrafluoropropylene represented by $CH_2=CFCF_3$ is preferable.

The fluoroalkyl ethylene is preferably a fluoroalkyl ethylene represented by the general formula (170):

$$CH_2=CH-(CF_2)_n-X^{171}$$

(wherein $X^{171}$ is H or F; and n is an integer of 3 to 10), and more preferably at least one selected from the group consisting of $CH_2=CH-C_4F_9$ and $CH_2=CH-C_6F_{13}$.

An example of the fluoroalkyl allyl ether is a fluoromonomer represented by the general formula (180): $CF_2=CF-CF_2-ORf^{111}$
wherein $Rf^{111}$ represents a perfluoroorganic group.

$Rf^{111}$ in the general formula (180) is the same as $Rf^{111}$ in the general formula (110). $Rf^{111}$ is preferably a perfluoroalkyl group having 1 to 10 carbon atoms or a perfluoroalkoxyalkyl group having 1 to 10 carbon atoms. The fluoroalkyl allyl ether represented by general formula (180) is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and even more preferably $CF_2=CF-CF_2-O-CF_2CF_2CF_3$.

An example of the fluorinated vinyl heterocyclic compound may be a fluorinated vinyl heterocyclic compound represented by the general formula (230):

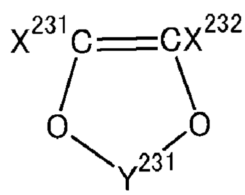

wherein $X^{231}$ and $X^{232}$ are each independently F, Cl, a methoxy group, or a fluorinated methoxy group; and $Y^{231}$ is

represented by the formula $Y^{232}$ or the formula $Y^{233}$:

$$-FC=CF- \qquad (Y^{232})$$

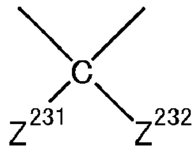

$(Y^{233})$

wherein $Z^{231}$ and $Z^{232}$ are each independently F or a fluorinated alkyl group having 1 to 3 carbon atoms.

The monomer that provides a crosslinking site is preferably at least one selected from the group consisting of:

a fluoromonomer represented by the general formula (180): $CX^{181}_2=CX^{182}-R_f^{181}CHR^{181}X^{183}$
wherein $X^{181}$ and $X^{182}$ are each independently a hydrogen atom, a fluorine atom, or $CH_3$; $R_f^{181}$ is a fluoroalkylene group, a perfluoroalkylene group, a fluoro(poly)oxyalkylene group, or a perfluoro(poly)oxyalkylene group; $R^{181}$ is a hydrogen atom or $CH_3$; and $X^{183}$ is an iodine atom or a bromine atom;
a fluoromonomer represented by the general formula (190): $CX^{191}_2=CX^{192}-R_f^{191}X^{193}$
wherein $X^{191}$ and $X^{192}$ are each independently a hydrogen atom, a fluorine atom, or $CH_3$; $R_f^{191}$ is a fluoroalkylene group, a perfluoroalkylene group, a fluoropolyoxyalkylene group, or a perfluoropolyoxyalkylene group; and $X^{193}$ is an iodine atom or a bromine atom;
a fluoromonomer represented by the general formula (200): $CF_2=CFO(CF_2CF(CF_3)O)_m(CF_2)_n-X^{201}$
wherein m is an integer of 0 to 5; n is an integer of 1 to 3; and $X^{201}$ is a cyano group, a carboxyl group, an alkoxycarbonyl group, an iodine atom, a bromine atom, or $-CH_2I$; and
a fluoromonomer represented by the general formula (210): $CH_2=CFCF_2O(CF(CF_3)CF_2O)_m(CF(CF_3))_n-X^{211}$
wherein m is an integer of 0 to 5; n is an integer of 1 to 3; and $X^{211}$ is a cyano group, a carboxyl group, an alkoxycarbonyl group, an iodine atom, a bromine atom, or-$CH_2OH$; and
a monomer represented by the general formula (220): $CR^{221}R^{222}=CR^{223}-Z^{221}-CR^{224}=CR^{225}R^{226}$
wherein $R^{221}$, $R^{222}$, $R^{223}$, $R^{224}$, $R^{225}$, and $R^{226}$ are the same as or different from each other, and are each a hydrogen atom or an alkyl group having 1 to 5 carbon atoms; $Z^{221}$ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by:

- $(Q)_p-CF_2O-(CF_2CF_2O)_m(CF_2O)_n-CF_2-(Q)_p-$

(wherein Q is an alkylene group or an oxyalkylene group; p is 0 or 1; and m/n is 0.2 to 5) and has a molecular weight of 500 to 10,000.

$X^{183}$ and $X^{193}$ are each preferably an iodine atom. $R_f^{181}$ and $R_f^{191}$ are each preferably a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or $-CH_2I$. $X^{211}$ is preferably a cyano group, an alkoxycarbonyl group, an iodine atom, a bromine atom, or $-CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and more preferably at least one selected from the group consisting of $CF_2=CFOCF_2CF(CF_3)OCF_2CF_2CN$ and $CF_2=CFOCF_2CF_2CH_2I$.

In the polymerization, the fluoromonomer may be polymerized with a fluorine-free monomer. An example of the fluorine-free monomer is a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate,

vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth) acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (provided that a monomer that provides a crosslinking site is excluded). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group such as aminoalkyl vinyl ether and aminoalkyl allyl ether; fluorine-free monomers having an amide group such as (meth)acrylamide and methylol acrylamide; and fluorine-free monomers having a nitrile group, such as acrylonitrile and methacrylonitrile.

In the polymerization, particles of the desired fluoropolymer can be obtained by polymerizing one or two or more of the above fluoromonomers.

(Chain transfer agent)

In the production method of the present disclosure, the fluoromonomer can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound may be a method involving polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

$$R^aI_xBr_y$$

wherein x and y are each an integer of 0 to 2 and satisfy $1 \le x + y \le 2$; and $R^a$ is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used singly or in any combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 mass ppm, and preferably 1 to 20,000 mass ppm, based on the total amount of the fluoromonomer fed. The amount of the chain transfer agent used is preferably an amount such that the chain transfer agent is completely consumed during the polymerization of the fluoromonomer and does not remain in the aqueous dispersion containing the fluoropolymer so as to minimize deterioration of the efficiency of removing the fluorine-containing compound having a hydrophilic group. Accordingly, the amount of the chain transfer agent used is more preferably 10,000 mass ppm or less, even more preferably 5,000 mass ppm or less, yet more preferably 1,000 mass ppm or less, particularly preferably 500 mass ppm or less, and most preferably 200 mass ppm or less, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

(Other additives)

Additives such as buffers, pH adjusters, stabilizing aids, and dispersion stabilizers can be used in the polymerization of the fluoromonomer. In the polymerization of the fluoromonomer, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of the fluoromonomer.

The stabilizing aid is preferably paraffin wax, fluorine-containing oil, a fluorine-containing solvent, silicone oil, or the like. One stabilizing aid may be used singly or used as a combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

(Polymerization conditions)

The fluoromonomer can be polymerized at normal pressure and temperature. Usually, the polymerization temperature is 5 to 120°C, and the polymerization pressure is 0.05 to 10 MPaG. The polymerization temperature and the polymerization pressure are suitably determined according to the types of the monomers, the molecular weight of the target fluoropolymer, and the reaction rate.

(Polymerization terminator)

To terminate the polymerization reaction of the fluoromonomer, a polymerization terminator (a radical scavenger) may be added.

The polymerization terminator may be a compound having no reinitiation ability after addition or chain transfer to a free radical in the polymerization system. Specifically, used is a compound that readily undergoes a chain transfer reaction with a primary radical or a propagating radical and then generates a stable radical that does not react with a monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0% reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride ($CuCl_2$). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate ($NH_4SCN$), potassium thiocyanate (KSCN), and sodium thiocyanate (NaSCN). In particular, the polymerization terminator is preferably a quinone compound, and more preferably hydroquinone.

(Nonionic surfactant)

A fluoromonomer is polymerized to prepare an aqueous dispersion (A) containing a fluoropolymer, and a nonionic surfactant is then added to the aqueous dispersion (A) to prepare the aqueous dispersion (B).

In the production method of the present disclosure, the nonionic surfactant can be appropriately added to the aqueous dispersion.

The nonionic surfactant usually does not contain a charged group and has a hydrophobic moiety that is a long chain hydrocarbon. The hydrophilic moiety of the nonionic surfactant contains water-soluble functional groups such as chains of ethylene ether derived from polymerization with ethylene oxide.

Examples of the nonionic surfactant include the following.

Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, polyoxyethylene behenyl ether, and the like.

Specific examples of polyoxyethylene alkyl phenyl ether: polyoxyethylene nonylphenyl ether, polyoxyethylene octylphenyl ether, and the like.

Specific examples of polyoxyethylene alkyl esters: polyethylene glycol monolaurylate, polyethylene glycol monooleate, polyethylene glycol monostearate, and the like.

Specific examples of sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.

Specific examples of polyoxyethylene sorbitan alkyl ester: polyoxyethylene sorbitan monolaurate, polyoxyethylene sorbitan monopalmitate, polyoxyethylene sorbitan monostearate, and the like.

Specific examples of glycerol ester: glycerol monomyristate, glycerol monostearate, glycerol monooleate, and the like.

Specific examples of the derivatives: polyoxyethylene alkylamine, polyoxyethylene alkyl phenyl-formaldehyde condensate, and polyoxyethylene alkyl ether phosphate.

The ethers and esters may have an HLB value of 10 to 18.

The HLB value of the nonionic surfactant is preferably 10 to 18, more preferably 11 to 15, even more preferably 12 to 14. The HLB value of the nonionic surfactant is a value defined by the following calculating equation based on the Griffin method.

HLB value = 20 × [sum of chemical formula weight of hydrophilic moiety] / molecular weight

The static surface tension of the nonionic surfactant is preferably less than 30 mN/m, more preferably less than 29 mN/m, even more preferably less than 28 mN/m. An aqueous solution of the nonionic surfactant at 0.1% by mass is prepared, and with the aqueous solution, the static surface tension of the nonionic surfactant can be measured by the Wilhelmy method at 25°C.

The molecular weight of the nonionic surfactant is preferably 200 g/mol or more, and more preferably 300 g/mol or more, and is preferably 800 g/mol or less, more preferably 700 g/mol or less, and even more preferably 600 g/mol or less. When the molecular weight of the nonionic surfactant is within the above-described range, phase formation is likely to occur.

The nonionic surfactant may be a surfactant that is liquid at 25°C and solid at normal temperature. The nonionic surfactant is preferably a surfactant that is liquid at 25°C because of excellent handleability.

Examples of nonionic surfactants include the Triton(R) X series (X15, X45, X100, etc.), the Tergitol(R) 15-S series, the Tergitol(R) TMN series (TMN-6, TMN-10, TMN-100X, etc.), and the Tergitol(R) L series manufactured by The Dow Chemical Company, and the Pluronic(R) R series (31R1, 17R2, 10R5, 25R4 (m ~22, n ~23) and the Iconol(R) TDA series (TDA-6, TDA-9, TDA-10) manufactured by BASF.

The nonionic surfactant is preferably a fluorine-free nonionic surfactant. Examples include ether-type nonionic surfactants such as polyoxyethylene alkyl phenyl ether, polyoxyethylene alkyl ether, and polyoxyethylene alkylene alkyl ether; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-based nonionic surfactants such as polyoxyethylene alkyl amine and alkylalkanolamide.

The hydrophobic group of the nonionic surfactant may be any of an alkylphenol group, a linear alkyl group, and a branched alkyl group.

The nonionic surfactant is preferably a nonionic surfactant represented by the general formula (i):

$$R^6\text{-O-}A^1\text{-H} \qquad \text{(i)}$$

wherein $R^6$ is a linear or branched primary or secondary alkyl group having 8 to 18 carbon atoms, and $A^1$ is a polyoxyalkylene chain.

In the general formula (i), the number of carbon atoms in $R^6$ is preferably 10 to 16, and more preferably 12 to 16. When the number of carbon atoms in $R^6$ is 18 or less, excellent precipitation stability of the aqueous dispersion is easily obtained. On the other hand, if the number of carbon atoms in $R^6$ exceeds 18, it is difficult to handle because of the high flow temperature. When the number of carbon atoms in $R^6$ is less than 8, the surface tension of the aqueous dispersion is increased, thus, permeability and wettability are likely impaired.

The HLB value of the nonionic surfactant represented by the general formula (i) is preferably 10 to 18, more preferably 11 to 15, even more preferably 12 to 14.

The static surface tension of the nonionic surfactant represented by the general formula (i) is preferably less than 30 mN/m, more preferably less than 29 mN/m, even more preferably less than 28 mN/m.

The molecular weight of the nonionic surfactant represented by the general formula (i) is preferably 200 g/mol or more, and more preferably 300 g/mol or more, and is preferably 800 g/mol or less, more preferably 700 g/mol or less, and even more preferably 600 g/mol or less. When the molecular weight of the nonionic surfactant is within the above-described range, phase formation is likely to occur.

The nonionic surfactant represented by the general formula (i) may be a surfactant that is liquid at 25°C and solid at normal temperature. The nonionic surfactant is preferably a surfactant that is liquid at 25°C because of excellent handleability.

The cloud point of the nonionic surfactant represented by the general formula (i) is preferably 40 to 80°C, more preferably 45°C or higher, and even more preferably 50°C or higher, and is more preferably 76°C or lower, and even more preferably 73°C or lower.

The polyoxyalkylene chain of $A^1$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the aqueous dispersion, a polyoxyalkylene chain, in which the average number of the repeating oxyethylene groups is 7 to 12 and the average number of repeating oxypropylene groups is 0 to 2, is preferable. In particular, $A^1$ having 0.5 to 1.5 oxypropylene groups on average favorably results in reduced foamability, and is thus preferable. The polyoxyalkylene chain of $A^1$ is preferably a polyoxyalkylene chain having 4 to 18, preferably 7 to 12, and more preferably 8 to 11 alkylene oxide units. The polyoxyalkylene chain of $A^1$ is preferably a polyoxyethylene chain having 4 to 18, preferably 7 to 12, and more preferably 8 to 11 ethylene oxide units.

More preferably, $R^6$ is (R') (R")HC-, wherein R' and R'' are the same or different linear, branched, or cyclic alkyl groups, and the total amount of carbon atoms is at least 5, preferably 7 to 17. Preferably, at least one of R' and R'' is a branched or cyclic hydrocarbon group.

Specific examples of the polyoxyethylene alkyl ether include $C_{13}H_{27}$-O-$(C_2H_4O)_n$-H, $C_{12}H_{25}$-O-$(C_2H_4O)_n$-H, $C_{10}H_{21}CH(CH_3)CH_2$-O-$(C_2H_4O)_n$-H, $C_{13}H_{27}$-O-$(C_2H_4O)_n$-$(CH(CH_3)CH_2O)$-H, $C_{16}H_{33}$-O-$(C_2H_4O)_n$-H, and HC $(C_5H_{11})$ $(C_7H_{15})$-O-$(C_2H_4O)_n$-H, wherein n is an integer of 1 or greater. Examples of commercially available products of the polyoxyethylene alkyl ether include Genapol X series (manufactured by Clariant AG) such as Genapol X080 (trade name), NOIGEN TDS series (manufactured by DKS Co., Ltd.) such as NOIGEN TDS-80 (trade name), LEOCOL TD series (manufactured by Lion Corporation) such as LEOCOL TD-90 (trade name), LIONOL(R) TD series (manufactured by Lion Corporation), T-Det A series (manufactured by Harcros Chemicals Inc.) such as T-Det A 138 (trade name), and Tergitol(R) 15 S series (manufactured by The Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by The Dow Chemical Company).

The hydrophobic group of the nonionic surfactant may be any of an alkylphenol group, a linear alkyl group, and a branched alkyl group. Examples of the nonionic surfactant include a nonionic surfactant represented by the general formula (ii):

$$R^7\text{-}C_6H_4\text{-O-}A^2\text{-H} \qquad \text{(ii)}$$

wherein $R^7$ is a linear or branched alkyl group having 4 to 12 carbon atoms, and $A^2$ is a polyoxyalkylene chain. Specific examples of the nonionic surfactant include Triton(R) X-100 (trade name, manufactured by The Dow Chemical Company).

The polyoxyalkylene chain of $A^2$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as usually provided, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the aqueous dispersion, a polyoxyalkylene chain, in which the average number of the repeating oxyethylene groups is 7 to 12 and the average number of repeating oxypropylene groups is 0 to 2, is preferable.

In particular, $A^2$ having 0.5 to 1.5 oxypropylene groups on average favorably results in reduced foamability, and is thus preferable.

More preferably, $R^7$ is a primary or secondary alkyl group, and is more preferably (R') (R'')HC-, wherein R' and R'' are the same or different linear, branched, or cyclic alkyl groups, and the total amount of carbon atoms is at least 5, preferably 7 to 17. Preferably, at least one of R' and R'' is a branched or cyclic hydrocarbon group.

Examples of the nonionic surfactant also include polyol compounds. Specific examples include those described in International Publication No. WO 2011/014715. Typical examples of the polyol compound include compounds having one or more sugar units as polyol units. The sugar units may be modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as polyol compounds include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars are modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety. The sugar-based polyol may contain a single sugar unit or a plurality of sugar units. The single sugar unit or the plurality of sugar units may be modified with long chain moieties as described above. Specific examples of sugar-based polyol compounds include glycosides, sugar esters, sorbitan esters, and mixtures and combinations thereof.

A preferable type of polyol compound is an alkyl or modified alkyl glucoside. These types of surfactant contain at least one glucose moiety.

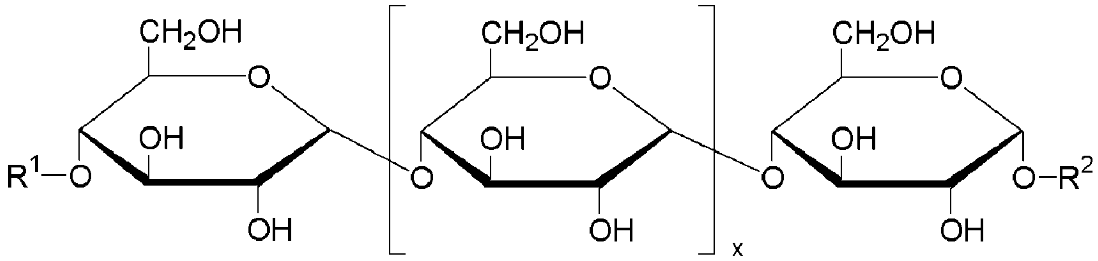

wherein x represents 0, 1, 2, 3, 4, or 5 and $R^1$ and $R^2$ each independently represent H or a long chain unit containing at least 6 carbon atoms, provided that at least one of $R^1$ or $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that the above formula represents specific examples of alkyl poly glucosides showing glucose in its pyranose form but other sugars or the same sugars but in different enantiomeric or diastereomeric forms may also be used.

Alkyl glucosides are obtainable by, for example, acid-catalyzed reactions of glucose, starch, or n-butyl glucoside with aliphatic alcohols, which typically yields a mixture of various alkyl glucosides (Alkylpolygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

The nonionic surfactant is preferably at least one selected from the group consisting of a nonionic surfactant represented by the general formula (i) and a nonionic surfactant represented by the general formula (ii), and more preferably a nonionic surfactant represented by the general formula (i).

Preferably, the nonionic surfactant does not contain an aromatic moiety.

In particular, the nonionic surfactant is preferably at least one selected from the group consisting of an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, and $C_{13}H_{27}$-O-$(C_2H_4O)_n$-H, $C_{12}H_{25}$-O-$(C_2H_4O)_n$-H, $C_{10}H_{21}CH(CH_3)CH_2$-O-$(C_2H_4O)_n$-H, $C_{13}H_{27}$-O-$(C_2H_4O)_n$-$(CH(CH_3)CH_2O)$-H, $C_{16}H_{33}$-O-$(C_2H_4O)_n$-H and HC $(C_5H_{11})(C_7H_{15})$-O-$(C_2H_4O)_n$-H, wherein n is an integer of 1 or greater.

The cloud point of the nonionic surfactant is preferably 40 to 80°C, more preferably 45°C or higher, and even more preferably 50°C or higher, and is more preferably 76°C or lower, and even more preferably 73°C or lower.

In one embodiment of the production method of the present disclosure, a radical generator is not added in any of the steps after an aqueous dispersion is prepared by polymerization of a fluoromonomer. The radical generator is a compound that can generate radicals by decomposing at the temperature of the aqueous dispersion after heating. Examples of the radical generator include organic peroxides, inorganic peroxides, organic azo compounds, and combinations of oxidizing agents and reducing agents. In the production method of the present disclosure, the content of a fluorine-containing surfactant and a polymer compound (I) having an ionic group can be reduced even when a radical generator is not added to the aqueous dispersion. Therefore, it is possible to avoid disadvantages caused by adding a radical generator, such as occurrence of aggregation of the fluoropolymer.

By using the production method of the present disclosure as described above, a fluoropolymer aqueous dispersion can be produced in which the content of a fluorine-containing surfactant and a polymer compound (I) having an ionic group is reduced.

2. Fluoropolymer aqueous dispersion

The first fluoropolymer aqueous dispersion of the present disclosure contains a fluoropolymer and an anionic fluorine-containing surfactant, and has an anionic fluorine-containing surfactant content of more than 0 mass ppb and less than 100 mass ppb based on the fluoropolymer. The first fluoropolymer aqueous dispersion of the present disclosure can be suitably produced by the first production method of the present disclosure.

The second fluoropolymer aqueous dispersion of the present disclosure contains a fluoropolymer and a polymer compound (I) having an ionic group, and is substantially free from an anionic fluorine-containing surfactant. In the second fluoropolymer aqueous dispersion, the content of the polymer compound (I) having an ionic group is more than 0 mass ppm and 500 mass ppm or less based on the fluoropolymer, and the proportion of hydrogen atoms replaced with fluorine atoms in hydrogen atoms bonded to the carbon atoms of the polymer compound (I) having an ionic group is 50%. The second fluoropolymer aqueous dispersion of the present disclosure can be suitably produced by the second production method of the present disclosure.

The content of the fluoropolymer in the fluoropolymer aqueous dispersion may be 30% by mass or more, is preferably 50% by mass or more, more preferably 55% by mass or less, even more preferably 57% by mass or more, and yet more preferably 60% by mass or more, and is preferably 70% by mass or less, more preferably 68% by mass or less, even more preferably 67% by mass or less, and yet more preferably 65% by mass or less, based on the mass of the aqueous dispersion.

The fluoropolymer contained in the fluoropolymer aqueous dispersion of the present disclosure will be described later.

The content of the anionic fluorine-containing surfactant in the first fluoropolymer aqueous dispersion is more than 0 mass ppb and less than 100 mass ppb based on the mass of the aqueous dispersion.

The second fluoropolymer aqueous dispersion is substantially free from an anionic fluorine-containing surfactant.

Herein, the expression "substantially free from an anionic fluorine-containing surfactant" means that the content of the anionic fluorine-containing surfactant in the aqueous dispersion is 10 mass ppm or less, preferably 1 mass ppm or less, more preferably 100 mass ppb or less, even more preferably 10 mass ppb or less, yet more preferably 1 mass ppb or less, and particularly preferably less than the detection limit as measured by liquid chromatography-mass spectrometry (LC/MS).

The anionic fluorine-containing surfactant contained in the fluoropolymer aqueous dispersion of the present disclosure is the same, or preferably the same as the anionic fluorine-containing surfactant for use in the production method of the present disclosure. The content of the anionic fluorine-containing surfactant in the fluoropolymer aqueous dispersion can be measured by the method for measuring the content of a fluorine-containing surfactant in an aqueous dispersion.

The content of the polymer compound (I) having an ionic group in the second fluoropolymer aqueous dispersion is preferably 800 mass ppm or less, more preferably 600 mass ppm or less, even more preferably 500 mass ppm or less, yet more preferably 400 mass ppm or less, and particularly preferably 350 mass ppm or less, and is preferably more than 0 mass ppm, and more preferably 0.1 mass ppm or more, based on the fluoropolymer.

The polymer compound (I) having an ionic group, which is contained in the fluoropolymer aqueous dispersion of the present disclosure, is the same, or preferably the same as the polymer compound (I) having an ionic group, which is used in the production method of the present disclosure. The content of the polymer compound (I) having an ionic group in

the fluoropolymer aqueous dispersion can be measured by the method for measuring the content of a polymer compound (I) having an ionic group in an aqueous dispersion.

The fluoropolymer aqueous dispersion of the present disclosure preferably contains a nonionic surfactant. The nonionic surfactant is the same as, or preferably the same as a nonionic surfactant that can be used in the production method of the present disclosure. The content of the nonionic surfactant in the fluoropolymer aqueous dispersion is 4.0 to 12.0% by mass, more preferably 4.5% by mass or more, even more preferably 5.0% by mass or more, and is more preferably 10% by mass or less, even more preferably 8.0% by mass or less, and yet more preferably 7.0% by mass or less, based on the fluoropolymer.

It is also preferable that the fluoropolymer aqueous dispersion of the present disclosure contain a viscosity adjuster. The content of the viscosity adjuster in the fluoropolymer aqueous dispersion is preferably 10 to 5,000 mass ppm, more preferably 50 mass ppm or more, and even more preferably 100 mass ppm or less, and is more preferably 4,000 mass ppm or less, and even more preferably 3,000 mass ppm or less, based on the fluoropolymer.

As the viscosity adjuster, a fluorine-free anionic surfactant can be suitably used. The fluorine-free anionic surfactant usually has a hydrophilic moiety such as a carboxylate, a sulfonate or a sulfate and a hydrophobic moiety that is a long chain hydrocarbon moiety such as alkyl.

Examples of the fluorine-free anionic surfactant include alkylsulfuric acids such as laurylsulfuric acid, alkylarylsulfonic acids such as dodecylbenzenesulfonic acid, alkyl sulfosuccinates, and salts thereof. The fluorine-free anionic surfactant may be one or a combination of two or more of such compounds.

The sulfosuccinic acid alkyl ester and a salt thereof may be a monoester, and is preferably a diester.

Examples of the sulfosuccinic acid alkyl ester and a salt thereof include sulfosuccinic acid alkyl esters represented by the general formula: $R^{21}$-OCOCH($SO_3A^{21}$)$CH_2$COO-$R^{22}$ and salts thereof, wherein $R^{21}$ and $R^{22}$ are the same or different and represent an alkyl group having 4 to 12 carbon atoms, and $A^{21}$ represents an alkali metal, an alkaline earth metal, or $NH_4$).

Examples of $R^{21}$ and $R^{22}$ include linear or branched alkyl groups such as n-butyl, iso-butyl, sec-butyl, n-pentyl, isopentyl, neopentyl, tert-pentyl, n-hexyl, iso-hexyl, tert-hexyl, n-heptyl, iso-heptyl, tert-heptyl, n-octyl, iso-octyl, tert-octyl, n-nonyl, iso-nonyl, tert-nonyl, n-decyl, and 2-ethylhexyl.

$A^{21}$ is preferably Na, $NH_4$, or the like. Examples of the sulfosuccinic acid alkyl ester include di-n-octyl sulfosuccinate and di-2-ethylhexyl sulfosuccinate.

The fluorine-free anionic surfactant may have an acid group. The acid group is preferably selected from the group consisting of a carboxyl group, a sulfuric acid group, a sulfonic acid group, a phosphoric acid group, and a salt thereof, and, in particular, is preferably selected from the group consisting of a carboxyl group, a sulfuric acid group, a sulfonic acid group, and a salt thereof.

The fluorine-free anionic surfactant may further contain, in addition to the acid group, another group such as a polyoxyalkylene group having an oxyalkylene group with 2 to 4 carbon atoms, or an amino group. The amino group is not protonated.

The fluorine-free anionic surfactant is preferably an anionic hydrocarbon surfactant having a main chain composed of a hydrocarbon. Examples of the hydrocarbon include those having a saturated or unsaturated aliphatic chain with 6 to 40 carbon atoms, and preferably 8 to 20 carbon atoms. The saturated or unsaturated aliphatic chain may be either linear or branched, or may have a cyclic structure. The hydrocarbon may be aromatic, or may have an aromatic group. The hydrocarbon may contain a hetero atom such as oxygen, nitrogen, or sulfur.

Examples of the fluorine-free anionic surfactant include alkylsulfonic acids such as laurylsulfonic acid and salts thereof; alkylaryl sulfates and salts thereof; aliphatic (carboxylic) acids such as lauric acid and salts thereof; and alkyl phosphates, alkylaryl phosphates, and salts thereof; and in particular, those selected from the group consisting of sulfonic acids, carboxylic acids, and salts thereof are preferable; and aliphatic carboxylic acids and salts thereof are preferable. The aliphatic carboxylic acid or a salt thereof is preferably, for example, a saturated or unsaturated aliphatic carboxylic acid having 9 to 13 carbon atoms in which the terminal H may be replaced with -OH, or a salt thereof; the aliphatic carboxylic acid is preferably a monocarboxylic acid; and the monocarboxylic acid is preferably decanoic acid, undecanoic acid, undecenoic acid, lauric acid, or hydroxydodecanoic acid.

The fluorine-free anionic surfactant is preferably at least one selected from the group consisting of sulfosuccinic acid alkyl esters and salts thereof, alkylsulfuric acids and salts thereof, and monocarboxylic acids and salts thereof, more preferably at least one selected from the group consisting of dioctylsulfosuccinic acid, laurylsulfuric acid, decanoic acid, and salts thereof, and even more preferably at least one selected from the group consisting of dioctylsulfosuccinic acid, ammonium dioctylsulfosuccinate, ammonium laurylsulfate, and ammonium decanoate.

The viscosity of the fluoropolymer aqueous dispersion of the present disclosure is preferably 2.0 mPa·s or more, more preferably 5.0 mPa·s or more, even more preferably 10.0 mPa·s or more, particularly preferably 15.0 mPa·s or more, and is preferably 100 mPa·s or less, more preferably 80 mPa·s or less, even more preferably 70 mPa·s or less, and yet more preferably 60 mPa·s or less.

The viscosity of the aqueous dispersion is measured using a B-type rotary viscometer (manufactured by Toki

Sangyo Co., Ltd., rotor No. 1) under conditions of a rotational speed of 60 rpm, a measurement time of 120 seconds, and 25°C.

It is also preferable that the fluoropolymer aqueous dispersion of the present disclosure contain an antiseptic agent. The content of the antiseptic agent in the fluoropolymer aqueous dispersion is preferably 0.01 to 0.5% by mass, more preferably 0.05% by mass or more, and is more preferably 0.2% by mass or less.

Examples of the preservative include isothiazolones, azoles, pronopol, chlorothalonil, methylsulfonyltetrachloropyrrolidine, carbendazim, fluoroforbet, sodium diacetate, and diiodomethyl p-tolylsulfone.

The fluoropolymer aqueous dispersion of the present disclosure may contain a further component. Examples of the further component also include water soluble polymer compounds. Examples of the water soluble polymer compound include methyl cellulose, alumina sol, polyvinyl alcohol, carboxylated vinyl polymer, polyethylene oxide (dispersion stabilizer), polyethylene glycol (dispersion stabilizer), polyvinylpyrrolidone (dispersion stabilizer), phenol resin, urea resin, epoxy resin, melamine resin, polyester resin, polyether resin, acrylic silicone resin, silicone resin, silicone polyester resin, and polyurethane resin.

The fluoropolymer aqueous dispersion of the present disclosure may be used in the form of an aqueous coating material by being mixed with, for example, a known compounding agent such as a pigment, a thickener, a dispersant, a antifoaming agent, an antifreezing agent, or a film-forming aid, or by being blended with another polymer compound.

Next, the fluoropolymer in the aqueous dispersion obtained by the production method of the present disclosure and the fluoropolymer in the aqueous dispersion of the present disclosure will now be described in more detail.

(Fluoropolymer)

A fluoropolymer such as fluororesin or fluoroelastomer is obtained by polymerizing the fluoromonomer.

Examples of the fluoropolymer include a TFE polymer in which TFE is the monomer having the highest mole fraction (hereinafter, "the most abundant monomer") among the monomers in the polymer, a VDF polymer in which VDF is the most abundant monomer, and a CTFE polymer in which CTFE is the most abundant monomer.

It is preferable that the fluoropolymer has an ion exchange rate (IXR) of higher than 53. The preferable fluoropolymer has either no ionic groups at all or a limited number of ionic groups resulting in an ion exchange rate higher than about 100. The preferable ion exchange rate of the fluoropolymer is preferably 1,000 or more, more preferably 2,000 or more, and still more preferably 5,000 or more.

The fluoropolymer is preferably a fluoropolymer that is different from the polymer compound (I) having an ionic group. In one embodiment, the fluoropolymer has no ionic group.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) a further monomer. Examples of the further monomer (3) include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro (alkyl vinyl ether) having an alkyl group having 1 to 5 carbon atoms, particularly 1 to 3 carbon atoms, or the like.

The CTFE polymer may suitably be a CTFE homopolymer, or may be a copolymer consisting of (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

In the production method of the present disclosure, a fluororesin is preferably produced as the fluoropolymer. The fluoropolymer aqueous dispersion of the present disclosure preferably contains a fluororesin as the fluoropolymer.

In the production method of the present disclosure, for example, a tetrafluoroethylene polymer [TFE polymer (PTFE)] can be suitably produced as the non melt-processible fluororesin (I), and an ethylene/TFE copolymer [ETFE], a TFE/HFP copolymer [FEP], a TFE/perfluoro(alkyl vinyl ether) copolymer [such as PFA or MFA], a TFE/perfluoroallyl ether copolymer, a TFE/VDF copolymer, or an electrolytic polymer precursor can be suitably produced as the melt-fabricable fluororesin (II).

The fluoropolymer is preferably a fluororesin, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of 55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin.

Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) × 100 Formula

The perfluororesin is more preferably a fluororesin having the fluorine substitution percentage of 95 to 100%, even more preferably polytetrafluoroethylene (PTFE), FEP, or PFA, yet more preferably PTFE or PFA, and particularly preferably PTFE.
The fluoropolymer may have a core-shell structure. An example of the fluoropolymer having a core-shell structure is modified PTFE including a core of high-molecular-weight PTFE and a shell of a lower-molecular-weight PTFE or a modified PTFE in the particle. Examples of such modified PTFE include PTFE described in Japanese National Publication of International Patent Application No. 2005/527652.
The core-shell structure may have the following structures.

Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluoropolymer having a core-shell structure, the lower limit of the proportion of the core is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.
In the fluoropolymer having a core-shell structure, the lower limit of the proportion of the shell is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.
In the fluoropolymer having the core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.
Examples of the fluoropolymer having a core-shell structure also include those in which a single particle of the fluoropolymer has a plurality of cores.
The non melt-processible fluororesin (I) and the melt-fabricable fluororesin (II) suitably produced by the production method of the present disclosure are preferably produced in the following manner.

(I) Non melt-processible fluororesin

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. The polymerization temperature is more preferably 120°C or lower, and even more preferably 100°C or lower. The polymerization pressure is more preferably 0.3 MPaG or higher, even more preferably 0.5 MPaG or higher, and more preferably 5.0 MPaG or lower, and even more preferably 3.0 MPaG or lower. In particular, from the viewpoint of improving the yield of fluoropolymer, the polymerization pressure is preferably 1.0 MPaG or higher, more preferably 1.2 MPaG or higher, even more preferably 1.5 MPaG or higher, and even more preferably 2.0 MPaG or higher.
In one embodiment, the polymerization reaction is initiated by introducing pure water into a pressure-resistant

reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. The TFE polymer in the present disclosure is a concept that encompasses not only a TFE homopolymer but also a non melt-processible copolymer of TFE and a modifying monomer (hereinafter, referred to as "modified PTFE").

The modifying monomer is not limited as long as it is copolymerizable with TFE, and examples include fluoromonomers and non-fluoromonomers. One modifying monomer may be used, and two or more may be used.

An example of the non-fluoromonomer may be, but not limited to, a monomer represented by the general formula: $CH_2=CR^{Q1}-LR^{Q2}$

wherein $R^{Q1}$ represents a hydrogen atom or an alkyl group; L represents a single bond, -CO-O-*, -O-CO-*, or -O-; * represents the site of bonding to $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. In particular, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the following general formula (A):

$$CF_2=CF-ORf \qquad (A)$$

wherein Rf represents a perfluoroorganic group. The "perfluoroorganic group" in the present disclosure, means an organic group in which all hydrogen atoms bonded to the carbon atoms are replaced with fluorine atoms. The perfluoroorganic group optionally has ether oxygen.

Examples of the perfluorovinyl ether include a perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula:

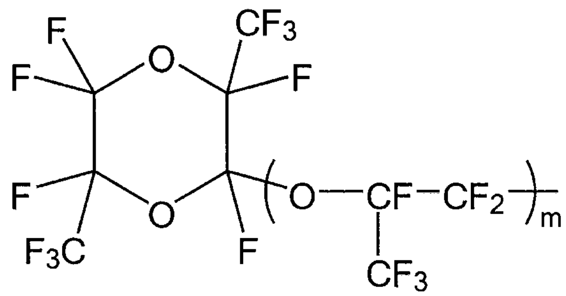

wherein m represents 0 or an integer of 1 to 4; and those in which Rf is a group represented by the following formula:

$$CF_3CF_2CF_2-(O-CF(CF_3)-CF_2)_n-$$

wherein n represents an integer of 1 to 4.

Examples of hydrogen-containing fluoroolefins include $CH_2=CF_2$, $CFH=CH_2$, $CFH=CF_2$, $CH_2=CFCF_3$, $CH_2=CHCF_3$, $CHF=CHCF_3$ (E-form), and $CHF=CHCF_3$ (Z-form).

Examples of the (perfluoroalkyl)ethylene (PFAE) include, but are not limited to, (perfluorobutyl)ethylene (PFBE) and (perfluorohexyl)ethylene.

An example of the perfluoroallyl ether may be a fluoromonomer represented by the general formula:

$CF_2=CF-CF_2-ORf$

wherein Rf represents a perfluoroorganic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and even more preferably $CF_2=CF-CF_2-O-CF_2CF_2CF_3$.

A preferable example of the modifying monomer is also (3) a modifying monomer having a monomer reactivity ratio of 0.1 to 8. The presence of the modifying monomer (3) makes it possible to obtain PTFE particles having a small particle size, and to thereby obtain an aqueous dispersion having high dispersion stability.

The monomer reactivity ratio in the copolymerization with TFE is a value obtained by dividing a rate constant attained when the propagating radical reacts with TFE when the propagating radical is less than a repeating unit based on TFE by a rate constant attained when the propagating radical reacts with a modifying monomer. A smaller monomer reactivity ratio indicates higher reactivity of the modifying monomers with TFE. The monomer reactivity ratio can be calculated by copolymerizing TFE and the modifying monomer, determining the composition of the polymer formed immediately after initiation, and calculating the reactivity ratio by Fineman-Ross equation.

The copolymerization is carried out by using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added into the reactor, and then 0.072 g of ammonium persulfate (20 ppm by mass based on the water) is added thereto. To maintain the polymerization pressure at 0.78 MPaG, TFE is continuously fed thereinto. When the amount of TFE charged reaches 1,000 g, stirring is stopped, and the pressure is released until the pressure in the reactor decreases to the atmospheric pressure. After cooling, the paraffin wax is separated to give an aqueous dispersion containing the produced polymer. The aqueous dispersion is stirred so that the resulting polymer coagulates, and the polymer is dried at 150°C. The composition of the resulting polymer is calculated by suitably combining NMR, FT-IR, elemental analysis, and X-ray fluorescence analysis according to the type of monomer.

The modifying monomer having a monomer reactivity ratio of 0.1 to 8 (3) is preferably at least one selected from the group consisting of modifying monomers represented by the formulae (3a) to (3d):

$CH_2=CH-Rf^1$ (3a)

wherein $Rf^1$ is a perfluoroalkyl group having 1 to 10 carbon atoms;

$CF_2=CF-O-Rf^2$ (3b)

wherein $Rf^2$ is a perfluoroalkyl group having 1 to 2 carbon atoms;

$CF_2=CF-O-(CF_2)_nCF=CF_2$ (3c)

wherein n is 1 or 2;

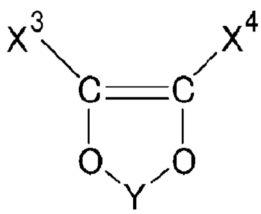

(3d)

wherein $X^3$ and $X^4$ are each F, Cl, or a methoxy group; and Y is represented by the formula Y1 or Y2; and

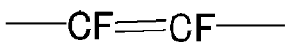

(Y1)

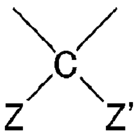

(Y2)

in the formula Y2, Z and Z' are each F or a fluorinated alkyl group having 1 to 3 carbon atoms.

The content of the modifying monomer (3) unit is preferably in the range of 0.00001 to 1.0% by mass based on the entirety of polymerized units in PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ethers), (perfluoroalkyl)ethylenes, ethylene, and modifying monomers having a functional group capable of reaction by radical polymerization and a hydrophilic group, in view of obtaining an aqueous dispersion with a small average primary particle size of a primary particle, a small aspect ratio of primary particles, and excellent stability. The use of the modifying monomer makes it possible to obtain an aqueous dispersion of PTFE with a smaller average primary particle size, a small aspect ratio of primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl) ethylene, and (perfluorooctyl)ethylene.

The total amount of hexafluoropropylene unit, the perfluoro(alkyl vinyl ether) unit, and the (perfluoroalkyl) ethylene unit is preferably in the range of 0.00001 to 1% by mass based on the entirety of polymerized units in PTFE. The lower limit of the total amount is more preferably 0.0001% by mass, more preferably 0.0005% by mass, even more preferably 0.001% by mass, and yet more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer also preferably includes a modifying monomer having a functional group capable of reaction by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Moreover, the aspect ratio of the primary particles can be reduced.

The amount of the modifying monomer (A) used is preferably an amount exceeding 0.1 mass ppm of the aqueous medium, more preferably an amount exceeding 0.5 mass ppm, even more preferably an amount exceeding 1.0 mass ppm, yet more preferably 5 mass ppm or more, and particularly preferably 10 mass ppm or more. When the amount of the modifying monomer (A) used is too small, the average primary particle size of PTFE obtained may not be small enough.

The amount of the modifying monomer (A) used may be within the above range, but for example, the upper limit can be set to 5,000 ppm by mass. In the production method, the modifying monomer (A) may also be added to the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed by the concentration step or the coagulation and washing steps.

The modifying monomer (A) is incorporated into the resulting polymer during the course of polymerization, and since the concentration of the modifying monomer (A) in the polymerization system itself is low and the amount incorporated into the polymer is small, there is no problem such as an impaired heat resistance of PTFE or coloring of PTFE after sintering.

Examples of the hydrophilic group in the modifying monomer (A) include $-NH_2$, $-PO_3M$, $-OPO_3M$, $-SO_3M$, $-OSO_3M$, and - COOM, wherein M represents H, a metal atom, $NR^{7y}_4$, imidazolium optionally having a substituent, pyridinium optionally having a substituent, or phosphonium optionally having a substituent, wherein $R^{7y}$ is H or an organic group and may be the same or different, and any two thereof may be bonded to each other to form a ring. In particular, the hydrophilic group is preferably $-SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

The metal atom may be a monovalent or divalent metal atom, such as an alkali metal (Group 1) or an alkaline earth metal (Group 2), and is preferably Na, K, or Li.

Examples of the "functional group capable of reaction by radical polymerization" in the modifying monomer (A) include a group having an ethylenically unsaturated bond such as a vinyl group or an allyl group. The group having an

ethylenically unsaturated bond can be represented by the following formula: $CX^eX^g=CX^fR$-
wherein $X^e$, $X^f$, and $X^g$ are each independently F, Cl, H, $CF_3$, $CF_2H$, $CFH_2$, or $CH_3$; and R is a linking group. The linking group R may be a linking group $R^a$, which will be described below. Preferable examples include groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reaction by radical polymerization, it is presumed that, when used in the polymerization, it reacts with the fluorine-containing monomer in the initial stage of the polymerization reaction to form particles that have a hydrophilic group derived from the modifying monomer (A) and are highly stable. Thus, polymerization in the presence of the modifying monomer (A) is considered to increase the number of particles.

The polymerization may be carried out in the presence of one or more modifying monomers (A).

In the polymerization, a compound having an unsaturated bond can be used as the modifying monomer (A).

The modifying monomer (A) is preferably a compound represented by the general formula (4):

$$CX^iX^k=CX^jR^a\text{-}(CZ^1Z^2)_k\text{-}Y^3 \qquad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, - $OPO_3M$, $-SO_3M$, $-OSO_3M$, and -COOM, wherein M represents H, a metal atom, $NR^{7y}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring. In particular, the hydrophilic group is preferably $-SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group. The metal atom may be a monovalent or divalent metal atom, such as an alkali metal (Group 1) or an alkaline earth metal (Group 2), and is preferably Na, K, or Li.

The use of the modifying monomer (A) makes it possible to obtain an aqueous dispersion having a smaller average primary particle size and superior stability. Also, the aspect ratio of the primary particles can be more reduced.

$R^a$ is a linking group. In the present disclosure, the term "linking group" refers to a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be a group that does not contain a carbon atom and that is a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced with a halogen other than fluorine, such as chlorine, and may or may not contain a double bond. $R^a$ may be linear or branched, and may be cyclic or acyclic. $R^a$ may contain a functional group (e.g., ester, ether, ketone, amine, halide, etc.).

$R^a$ may be a fluorine-free divalent organic group or a partially fluorinated or perfluorinated divalent organic group.

$R^a$ may be, for example, a hydrocarbon group in which a fluorine atom is not bonded to a carbon atom, a hydrocarbon group in which some of the hydrogen atoms bonded to a carbon atom are replaced with fluorine atoms, a hydrocarbon group in which all of the hydrogen atoms bonded to the carbon atoms are replaced with fluorine atoms, -(C=O)-, -(C=O)-O-, or a hydrocarbon group containing an ether bond, and these groups optionally contain an oxygen atom, optionally contain a double bond, and optionally contain a functional group.

$R^a$ is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced with fluorine.

$R^a$ is preferably at least one selected from $-(CH_2)_a-$, - $(CF_2)_a-$, $-O-(CF_2)_a-$, $-(CF_2)_a-O-(CF_2)_b-$, $-O(CF_2)_a-O-(CF_2)_b-$, - $(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, - (C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$ $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, - $(C=O)-O-(CF_2)_a-O-(CF_2)_b-$, $(C=O)-O-C_6H_4-$, and combinations thereof.

In the formulae, a, b, c, and d are each independently at least 1 or more. a, b, c and d may independently be 2 or more, 3 or more, 4 or more, 10 or more, or 20 or more. The upper limits of a, b, c, and d are 100, for example.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, - (C=O) -, - (C=O) -O-, -(C=O) - $(CH_2)$-, -(C=O)-$(CF_2)$-, -(C=O)-O-$(CH_2)$-, -(C=O)-O-$(CF_2)$-(C=O)-$[(CH_2)_2-O]_n$-, -(C=O)-$[(CF_2)_2-O]_n$-, -(C=O)-O$[(CH_2)_2-O]_n$-, -(C=O)-O$[(CF_2)_2-O]_n$-, -(C=O)-O $[(CH_2)_2-O]_n$-$(CH_2)$-, -(C=O)-O$[(CF_2)_2-O]_n$-$(CF_2)$-, -(C=O)-$(CH_2)_2$-O-$(CH_2)$-, -(C=O)-$(CF_2)_2$-O-$(CF_2)$-, -(C=O)-O-$(CH_2)_2$-O-$(CH_2)$-, -(C=O)-O-$(CF_2)_2$-O-$(CF_2)$-, and - (C=O)-O-$C_6H_4$-. In particular, preferable $R^a$ is specifically $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, -(C=O)-$(CH_2)$-, -(C=O)-O-$(CH_2)$-, -(C=O)-O$[(CH_2)_2-O]_n$-, -(C=O)-O$[(CH_2)_2-O]_n$-$(CH_2)$-, -(C=O)-$(CH_2)_2$-O-$(CH_2)$-, or - (C=O) -O-$C_6H_4$-.

In the formulae, n is an integer of 1 to 10.

$-R^a-(CZ^1Z^2)_k-$ in the general formula (4) is preferably - $CF_2-O-CF_2-$, $-CF_2-O-CF(CF_3)-$, $-CF_2-O-C(CF_3)_2-$, $-CF_2-O-CF_2-CF_2-$, - $CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, - $CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, -(C=O) -, -(C=O) -O-, -(C=O) - $(CH_2)$-, - (C=O) -$(CF_2)$-, -(C=O)-O-$(CH_2)$-, -(C=O)-O-$(CF_2)$-, -(C=O)-$[(CH_2)_2-O]_n$- $(CH_2)$-, -(C=O)-$[(CF_2)_2-O]_n$-$(CF_2)$-, -(C=O)-$[(CH_2)_2-O]_n$-$(CH_2)$-$(CH_2)$-, -(C=O)-$[(CF_2)_2-O]_n$-$(CF_2)$-$(CF_2)$-, -(C=O)-O$[(CH_2)_2-O]_n$-$(CF_2)$-, -(C=O)-O $[(CH_2)_2-O]_n$-$(CH_2)$-$(CH_2)$-, -(C=O)-O$[(CF_2)_2-O]_n$-$(CF_2)$-, -(C=O)-O$[(CF_2)_2-O]_n$-$(CF_2)$-$(CF_2)$-, -(C=O)-$(CH_2)_2$-O-$(CH_2)$-$(CH_2)$-, -(C=O)-$(CF_2)_2$-O-$(CF_2)$-$(CF_2)$-, -(C=O)-O-$(CH_2)_2$-O-$(CH_2)$-$(CH_2)$-, -(C=O)-O-$(CF_2)_2$-O-$(CF_2)$-$(CF_2)$-, -(C=O)-O-$(CH_2)_2$-O-$(CH_2)$-$C(CF_3)_2$-, - (C=O)-O-$(CF_2)_2$-O-$(CF_2)$-$C(CF_3)_2$-, or -(C=O)-O-$C_6H_4$-$C(CF_3)_2$-, and is more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, -(C=O)-, - (C=O)-O-$(CH_2)$-, -(C=O)-O-$(CH_2)$-$(CH_2)$-, -(C=O)-O$[(CH_2)_2-O]_n$-$(CH_2)$-$(CH_2)$-, - (C=O)-O-$(CH_2)_2$-O-$(CH_2)$-$C(CF_3)_2$-, or - (C=O) -O-$C_6H_4$-$C(CF_3)$2-.

In the formulae, n is an integer of 1 to 10.

Specific examples of the compound represented by the general formula (4) include compounds represented by the following formulae:

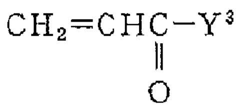、 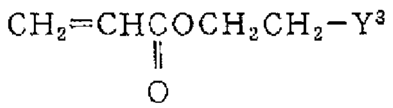、 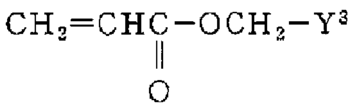、

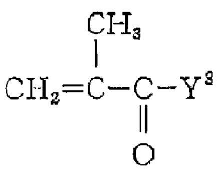、 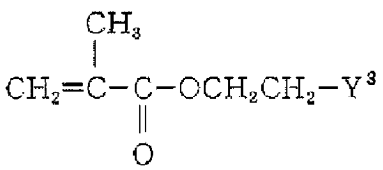、 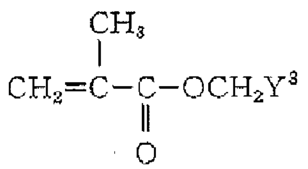、

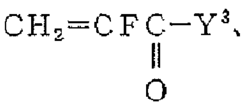、 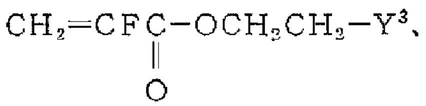、 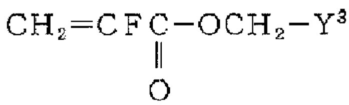、

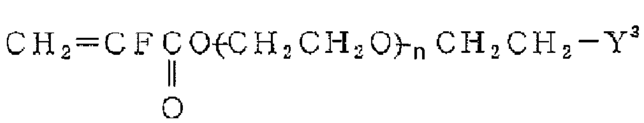、

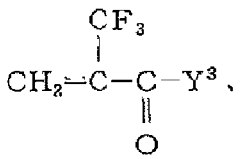、 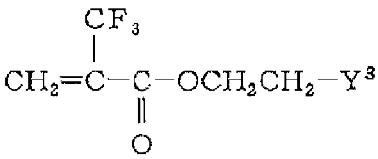、

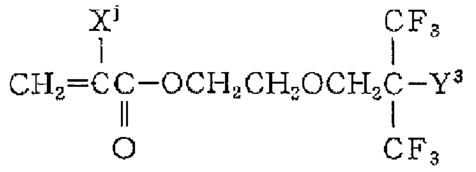

(i)、

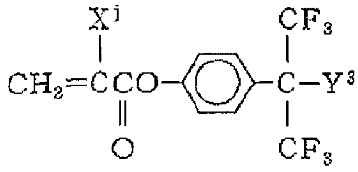

(i i)

wherein $X^j$ and $Y^3$ are as described above; and n is an integer of 1 to 10.

$R^a$ is preferably a divalent group represented by the general formula (r1):

$$-(C=O)_h-(O)_i-CF_2-O-(CX^6{}_2)_e-\{O-CF(CF_3)\}_f-(o)_g- \quad (r1)$$

wherein $X^6$ is each independently H, F, or $CF_3$; e is an integer of 0 to 3; f is an integer of 0 to 3; g is 0 or 1; h is 0 or 1; and i is 0 or 1, and is also preferably a divalent group represented by the general formula (r2):

$$-(C=O)_h-(O)_i-CF_2-O-(CX^7{}_2)_e-(O)_g- \quad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4) is also preferably a divalent group represented by the following formula (t1):

$$-(C=O)_h-(O)_i-CF_2-O-(CX^6{}_2)_e-\{O-CF\ (CF_3)\}_f-(O)_g-CZ^1Z^2- \quad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$, and is more preferably a group in which one of $Z^1$ and $Z^2$ is F and the other is $CF_3$ in the formula (t1).

Also, in the general formula (4), $-R^a-(CZ^1Z^2)_k-$ is preferably a divalent group represented by the following formula (t2):

$$-(C=O)_h-(o)_i-CF_2-O-(CX^7{}_2)_e-(O)_g-CZ^1Z^2- \quad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently F, or $CF_3$, and is more preferably a group in which one of $Z^1$ and $Z^2$ is F and the other is $CF_3$ in the formula (t2).

The compound represented by the general formula (4) also preferably has a C-F bond and does not have a C-H bond, in the portion excluding the hydrophilic group ($Y^3$). In other words, in the general formula (4), $X^i$, $X^j$, and $X^k$ are all F, and $R^a$ is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group ($Y^3$).

The compound represented by the general formula (4) is also preferably a compound represented by the following formula (4a):

$$CF_2=CF-O-Rf^0-Y^3 \quad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

$$CH_2=CH\text{-}O\text{-}Rf^0\text{-}Y^3 \qquad (4b)$$

wherein $Y^3$ is a hydrophilic group; and $Rf^0$ is a perfluorinated divalent linking group as defined in the formula (4a).

In one preferable embodiment, $Y^3$ in the general formula (4) is $-OSO_3M$. Examples of the compound represented by the general formula (4) when $Y^3$ is $-OSO_3M$ include $CF_2=CF(OCF_2CF_2CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, and $CF_2=CF(OCF_2CF_2CF_2CF_2SO_2N(CH_3)CH_2CH_2OSO_3M)$. In the formulae, M is as described above.

In one preferable embodiment, $Y^3$ in the general formula (4) is $-SO_3M$. Examples of the compound represented by the general formula (4) when $Y^3$ is $-SO_3M$ include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the formulae, M is as described above.

In one preferable embodiment, $Y^3$ in the general formula (4) is -COOM. Examples of the compound represented by the general formula (4) when $Y^3$ is -COOM include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$(n is greater than 1), $CH_2=CH((CF_2)_4COOM)$, $CH_2=CH(CF_2CF_2COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the formulae, R' is H or a $C_{1-4}$ alkyl group, and M is as described above.

In one preferable embodiment, $Y^3$ in the general formula (4) is $-OPO_3M$ or $-OP(o)(OM)_2$. Examples of the compound represented by the general formula (4) when $Y^3$ is $-OPO_3M$ or $-OP(O)(OM)_2$ include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2)$, $CH_2=CH((CF_2)_4CH_2OP(O)(OM)_2)$, and $CH_2=CH((CF_2)_3CH_2OP(O)(OM)_2)$. In the formulae, M is as described above.

In one preferable embodiment, $Y^3$ in the general formula (4) is also $-PO_3M$ or $-P(O)(OM)_2$. Examples of the compound represented by the general formula (4) when $Y^3$ is $-PO_3M$ or $-P(O)(OM)_2$ include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(o)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, wherein M is as described above.

The compound represented by the general formula (4) is preferably at least one selected from the group consisting of: a compound represented by the general formula (5):

$$CX_2=CY(\text{-}CZ_2\text{-}O\text{-}Rf\text{-}Y^3) \qquad (5)$$

wherein X is the same or different and is -H or -F; Y is -H, - F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; a compound represented by the general formula (6):

$$CX_2=CY(\text{-}O\text{-}Rf\text{-}Y^3) \qquad (6)$$

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and a compound represented by the general formula (7):

$$CX_2=CY(\text{-}Rf\text{-}Y^3) \qquad (7)$$

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above.

The fluorine-containing alkylene group having 2 to 100 carbon atoms and having an ether bond is an alkylene group that does not include a structure wherein an oxygen atom is an end and that contains an ether bond between carbon atoms.

In the general formula (5), each X is -H or -F. X may be both -F, or at least one thereof may be -H. For example, one may be -F and the other may be -H, or both may be -H.

In the general formula (5), Y is -H, -F, an alkyl group, or a fluorine-containing alkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or $-CF_3$, and more preferably -F.

In the general formula (5), Z is the same or different and is -H, -F, an alkyl group, or a fluoroalkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Z is preferably -H, -F, or $-CF_3$, and more preferably -F.

In the general formula (5), at least one of X, Y, and Z preferably contains a fluorine atom. For example, X, Y, and Z may be -H, -F, and -F, respectively.

In the general formula (5), Rf is a fluorine-containing alkylene group having 1 to 40 carbon atoms or a fluorine-containing alkylene group having 2 to 100 carbon atoms and having an ether bond.
The fluorine-containing alkylene group preferably has 2 or more carbon atoms. The fluorine-containing alkylene group also preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.
The fluorine-containing alkylene group having an ether bond is also preferably a divalent group represented by the following formula:

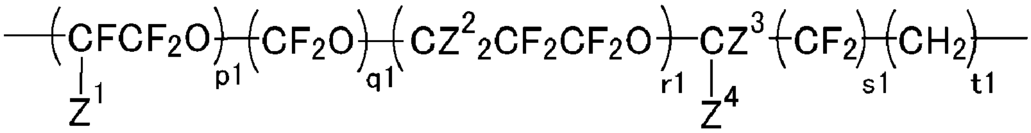

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$, $-(CF(CF_3)CF_2-O)_n-CF(CF_3)CH_2-$ (where n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (5), $Y^3$ is preferably -COOM, $-SO_3M$, or $-OSO_3M$, wherein M is H, a metal atom, $NR^{7y}_4$, imidazolium optionally having a substituent, pyridinium optionally having a substituent, or phosphonium optionally having a substituent, wherein $R^{7y}$ is H or an organic group, and may be the same or different, and any two may be bonded to each other to form a ring.

The organic group in $R^{7y}$ is preferably an alkyl group.

$R^{7y}$ is preferably H or a $C_{1-10}$ organic group, more preferably H or a $C_{1-4}$ organic group, and even more preferably H or a $C_{1-4}$ alkyl group.

The metal atom may be an alkali metal (Group 1), an alkaline earth metal (Group 2), or the like, and is preferably Na, K, or Li.

M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $NH_4$, yet more preferably -H, -Na, -K, or $NH_4$, particularly preferably -H, -Na or $NH_4$, and most preferably -H, or $-NH_4$.
$Y^3$ is preferably -COOM or $-SO_3M$, and more preferably -COOM.

The compound represented by the general formula (5) is preferably a compound (5a) represented by the general formula (5a):

$CH_2=CF(-CF_2-O-Rf-Y^3)$ (5a)

wherein Rf and $Y^3$ are as described above.

Specific examples of the compound represented by the general formula (5a) include a compound represented by the following formula:

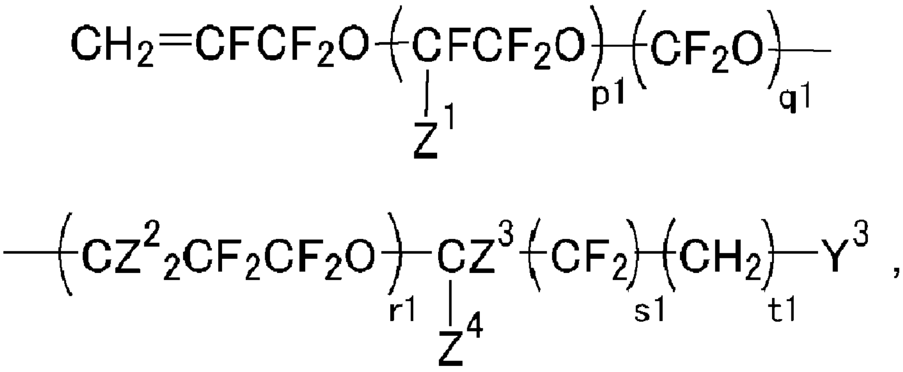

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5; and $Y^3$ is as described above, provided that when $Z^3$ and $Z^4$ are both H, p1 + q1 + r1 + s1 is not 0. More specifically, preferable examples include

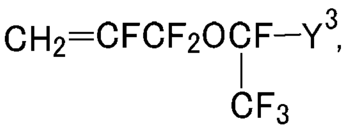
,
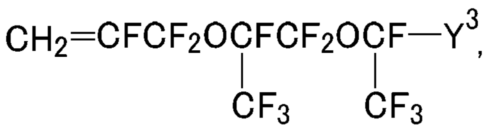
,

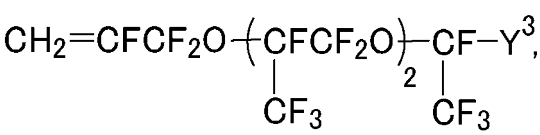
,
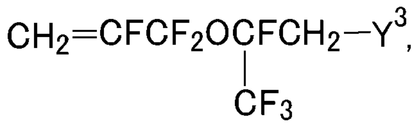
,

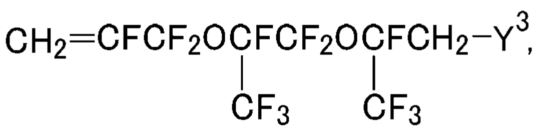
,
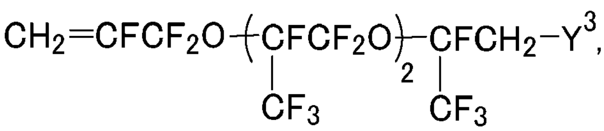
,

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

and, in particular,

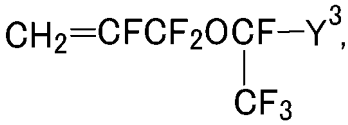, 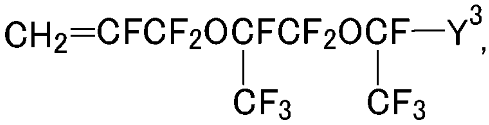,

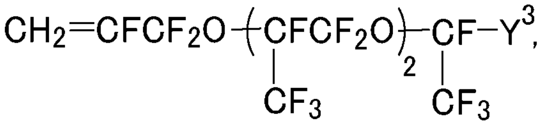, 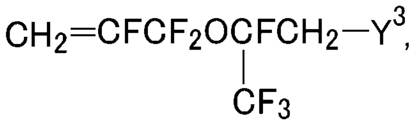,

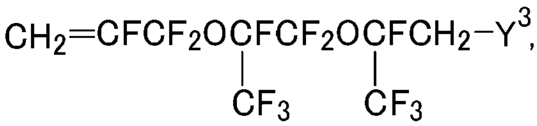, 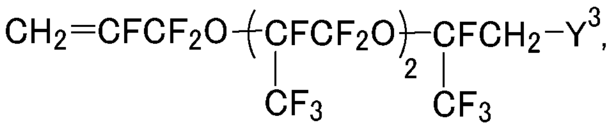,

are preferable.

In the compound represented by the general formula (5a), $Y^3$ in formula (5a) is preferably -COOM, and specifically the compound represented by general formula (5a) is preferably at least one selected from the group consisting of $CH_2$=$CFCF_2OCF(CF_3)COOM$ and $CH_2$=$CFCF_2OCF(CF_3)CF_2OCF(CF_3)COOM$ (wherein M is as defined above), and more preferably $CH_2$=$CFCF_2OCF(CF_3)COOM$.

The compound represented by the general formula (5) is preferably a compound (5b) represented by the general formula (5b):

$CX^2_2$=$CFCF_2$-O-$(CF(CF_3)CF_2O)_{n5}$-$CF(CF_3)$-$Y^3$ (5b)

wherein each $X^2$ is the same, and each represent F or H; n5 represents 0 or an integer of 1 to 10; and $Y^3$ is as defined above.

In the formula (5b), n5 is preferably 0 or an integer of 1 to 5, more preferably 0, 1, or 2, and even more preferably 0 or 1 from the viewpoint of stability of the resulting aqueous dispersion. $Y^3$ is preferably -COOM from the viewpoint of obtaining suitable water-solubility and stability of the aqueous dispersion, and M is preferably H or $NH_4$ from the viewpoint of less likely remaining as impurities and improving the heat resistance of the resulting formed article.

Examples of the compound represented by the formula (5b) include $CH_2$=$CFCF_2OCF(CF_3)COOM$ and $CH_2$=$CFCF_2OCF(CF_3)CF_2OCF(CF_3)COOM$, wherein M is as defined above.

Examples of the compound represented by the general formula (5) further include a compound represented by the general formula (5c):

$CF_2$=$CFCF_2$-O-Rf-$Y^3$ (5c)

wherein Rf and $Y^3$ are as described above.

More specifically, preferable examples include

$CF_2$=$CFCF_2OCF_2CF_2CF_2$-$Y^3$,

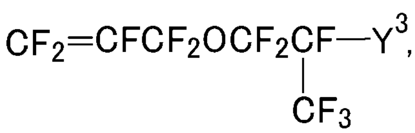,

$CF_2$=$CFCF_2OCF_2CF_2CF_2CH_2$-$Y^3$,

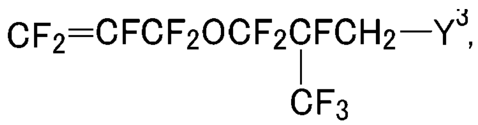

and the like.

In the general formula (6), each X is -H or -F. X may be both -F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or $-CF_3$, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In the general formula (6), $Y^3$ is preferably -COOM, $-SO_3M$, or $-OSO_3M$, wherein M is H, a metal atom, $NR^{7y}_4$, imidazolium optionally having a substituent, pyridinium optionally having a substituent, or phosphonium optionally having a substituent, where $R^{7y}$ is H or an organic group, and may be the same or different, and any two may be bonded to each other to form a ring.

The organic group of $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $NH_4$, yet more preferably -H, -Na, -K, or $NH_4$, particularly preferably -H, -Na or $NH_4$, and most preferably -H, or $-NH_4$.

$Y^3$ is preferably -COOM or $-SO_3M$, and more preferably -COOM.

The compound represented by the general formula (6) is preferably at least one selected from the group consisting of compounds represented by the general formulae (6a), (6b), (6c), (6d), and (6e):

$CF_2=CF-O-(CF_2)_{n1}-Y^3$ (6a)

wherein n1 represents an integer of 1 to 10, and $Y^3$ is as defined above;

$CF_2=CF-O-(CF_2C(CF_3)F)_{n2}-Y^3$ (6b)

wherein n2 represents an integer of 1 to 5, and $Y^3$ is as defined above;

$CF_2=CF-O-(CFX^1)_{n3}-Y^3$ (6c)

wherein $X^1$ represents F or $CF_3$; n3 represents an integer of 1 to 10; and $Y^3$ is as defined above;

$CF_2=CF-O-(CF_2CFX^1O)_{n4}-(CF_2)_{n6}-Y^3$ (6d)

wherein n4 represents an integer of 1 to 10, n6 represents an integer of 1 to 3, and $Y^3$ and $X^1$ are as defined above; and $CF_2=CF-O-(CF_2CF_2CFX^1O)_{n5}-CF_2CF_2CF_2-Y^3$ (6e)

wherein n5 represents an integer of 0 to 10, and $Y^3$ and $X^1$ are as defined above.

In the formula (6a), n1 is preferably an integer of 5 or less, and more preferably an integer of 2 or less. $Y^3$ is preferably -COOM or $-SO_3M$ from the viewpoint of obtaining suitable water-solubility and stability of the aqueous dispersion, and M is preferably H or $NH_4$ from the viewpoint of being less likely to remain as impurities and improving the heat resistance of the resulting formed article.

Examples of the compound represented by the formula (6a) include $CF_2=CF-O-CF_2COOM$, $CF_2=CF(OCF_2CF_2COOM)$, $CF_2=CF(OCF_2CF_2CF_2COOM)$, $CF_2=CF-O-CF_2SO_3M$, $CF_2=CF(OCF_2CF_2SO_3M)$, and $CF_2=CF(OCF_2CF_2CF_2SO_3M)$, wherein M is as defined above.

In the formula (6b), n2 is preferably an integer of 3 or less from the viewpoint of stability of the resulting aqueous dispersion, $Y^3$ is preferably -COOM or $-SO_3M$ from the viewpoint of obtaining suitable water-solubility and stability of the aqueous dispersion, and M is preferably H or $NH_4$ from the viewpoint of being less likely to remain as impurities and improving the heat resistance of the resulting formed article.

In the formula (6c), n3 is preferably an integer of 5 or less from the viewpoint of water-solubility, $Y^3$ is preferably -COOM or $-SO_3M$ from the viewpoint of obtaining suitable water-solubility and stability of the aqueous dispersion, and M is preferably H or $NH_4$ from the viewpoint of improving dispersion stability.

In the formula (6d), $X^1$ is preferably $-CF_3$ from the viewpoint of stability of the aqueous dispersion, n4 is preferably an integer of 5 or less from the viewpoint of water-solubility, $Y^3$ is preferably -COOM or $-SO_3M$ from the viewpoint of obtaining suitable water-solubility and stability of the aqueous dispersion, and M is preferably H or $NH_4$.

Examples of the compound represented by the formula (6d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2CF_2SO_3M$, $CF_2=CFOCF_2CF(CF_3)OCF_2SO_3M$, and $CF_2=CFOCF_2CF(CF_3)OCF_2CF_2CF_2SO_3M$, wherein M represents H, $NH_4$, or an alkali metal.

In the general formula (6e), n5 is preferably an integer of 5 or less from the viewpoint of water-solubility, $Y^3$ is preferably -COOM or $-SO_3M$ from the viewpoint of obtaining suitable water-solubility and stability of the aqueous dispersion, and M is preferably H or $NH_4$.

Examples of the compound represented by the general formula (6e) include $CF_2=CFOCF_2CF_2CF_2COOM$ and $CF_2=CFOCF_2CF_2CF_2SO_3M$, wherein M represents H, $NH_4$, or an alkali metal.

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of: a compound represented by the general formula (7a):

$$CF_2=CF-(CF_2)_{n1}-Y^3 \qquad (7a)$$

wherein n1 represents an integer of 1 to 10; and $Y^3$ is as defined above; and a compound represented by the general formula (7b):

$$CF_2=CF-(CF_2C(CF_3)F)_{n2}-Y^3 \qquad (7b)$$

wherein n2 represents an integer of 1 to 5; and $Y^3$ is as defined above.

$Y^3$ is preferably $-SO_3M$ or -COOM, and M is preferably H, a metal atom, $NR^{7y}_4$, imidazolium optionally having a substituent, pyridinium optionally having a substituent, or phosphonium optionally having a substituent. $R^{7y}$ represents H or an organic group.

In the formula (7a), n1 is preferably an integer of 5 or less, and more preferably an integer of 2 or less. $Y^3$ is preferably -COOM or $-SO_3M$ from the viewpoint of obtaining suitable water-solubility and stability of the aqueous dispersion, and M is preferably H or $NH_4$ from the viewpoint of being less likely to remain as impurities and improving the heat resistance of the resulting formed article.

Examples of the compound represented by the formula (7a) include $CF_2=CFCF_2COOM$ and $CF_2=CFCF_2SO_3M$, wherein M is as defined above.

In the formula (7b), n2 is preferably an integer of 3 or less from the viewpoint of stability of the resulting aqueous dispersion, $Y^3$ is preferably -COOM or $-SO_3M$ from the viewpoint of obtaining suitable water-solubility and stability of the aqueous dispersion, and M is preferably H or $NH_4$ from the viewpoint of being less likely to remain as impurities and improving the heat resistance of the resulting formed article.

The modifying monomer preferably includes the modifying monomer (A), preferably includes at least one selected from the group consisting of compounds represented by the general formula (5a), the general formula (5c), the general formula (6a), the general formula (6b), the general formula (6c), and the general formula (6d), and more preferably

includes the compound represented by the general formula (5a) or the general formula (5c).

When the modifying monomer (A) is used as the modifying monomer, the content of the modifying monomer (A) unit is preferably in the range of 0.00001 to 1.0% by mass based on the entirety of polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The aqueous dispersion of the TFE polymer is preferably mixed with, depending on its purpose, an organic or inorganic filler to form a composition and used in various applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls and cooking utensils and impregnation of glass cloth.

The aqueous dispersion may also be used to prepare an organosol of the TFE polymer. The organosol may contain the TFE polymer and an organic solvent, examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents, and N-methyl-2-pyrrolidone and dimethylacetamide are suitably used. The organosol may be prepared by the method described in International Publication No. WO 2012/002038, for example.

The aqueous dispersion of the TFE polymer is also preferably used as a processing aid. When used as a processing aid, the aqueous dispersion is mixed with a host polymer, for example, to improve the melt strength of the host polymer in melt fabrication and to improve the mechanical strength, electric properties, incombustibility, anti-drop performance during combustion, and slidability of the resulting polymer.

The aqueous dispersion of the TFE polymer is also preferably used as a binder for batteries or used for dustproof applications.

The aqueous dispersion of the TFE polymer is also preferably combined with a resin other than the TFE polymer to form a processing aid before use. The aqueous dispersion is suitable as a raw material of the PTFEs described in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion are not inferior in any way to the processing aids described in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), and, in particular, PFA or FEP is preferable.

The aqueous dispersion also preferably contains a melt-fabricable fluororesin. Examples of the melt-fabricable fluororesin include FEP, PFA, TFE/perfluoroallyl ether copolymers, ETFE, and EFEP. The aqueous dispersion containing the melt-fabricable fluororesin may be used as a coating material. The melt-fabricable fluororesin enables sufficient fusion of the TFE polymer particles, improving the film-formability and providing the resulting film with gloss.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to a compression-shear action at a temperature of 20 to 200°C to fibrillate the TFE polymer, for example, the methods described in Japanese Patent No. 2,827,152 and Japanese Patent No. 2,538,783.

The aqueous dispersion of the TFE polymer can suitably be used for the dust suppression treatment agent composition described in International Publication No. WO 2007/004250, and can also suitably be used for the method of dust suppression treatment described in International Publication No. WO 2007/000812.

The dust control treatment agent is suitably used for dust suppression treatment in the fields of building-products, soil stabilizers, solidifying materials, fertilizers, landfill of incineration ash and harmful substance, and explosion proof equipment, cosmetics, and sands for pet excretion represented by cat sand.

The aqueous dispersion of the TFE polymer is also preferably used as a raw material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is sintered to decompose the matrix polymer and sinter the TFE polymer particles, thereby providing TFE polymer fibers.

Low molecular weight PTFE can also be produced by the production method of the present disclosure.

The low-molecular-weight PTFE may be produced by polymerization, or may be produced by reducing the molecular weight of a high-molecular-weight PTFE obtained by polymerization by a known method (e.g., thermal decomposition, radiation decomposition).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

A low-molecular-weight PTFE may also be obtained by polymerizing TFE alone or TFE and a monomer copolymerizable with TFE in the presence of a chain transfer agent. In this case, the chain transfer agent is preferably at least one selected from the group consisting of alkanes having 2 to 4 carbon atoms. Specifically, the chain transfer agent is more preferably methane, ethane, propane, butane, or isobutane, and even more preferably ethane or propane. In this case, the amount of the chain transfer agent is preferably 10 ppm by mass or more or more than 10 ppm by mass based on the aqueous medium.

In the case of using the low-molecular-weight PTFE obtained by the polymerization in the form of powder, the powder particles may be obtained by coagulating the aqueous dispersion.

In the present disclosure, high molecular weight PTFE means non melt-processible and fibrillatable PTFE. On the other hand, low molecular weight PTFE means melt-fabricable and non-fibrillatable PTFE.

The term "non melt-processible" means a feature of polymer that the melt flow rate thereof cannot be measured at a temperature higher than the crystal melting point in accordance with ASTM D 1238 and D 2116.

The presence or absence of the fibrillation ability can be determined by "paste extrusion", a representative method of forming a "high-molecular-weight PTFE powder" which is a powder of a TFE polymer. Usually, the high-molecular-weight PTFE can be paste-extruded when it is fibrillatable. When a non-sintered formed product obtained by paste extrusion shows substantially no strength or elongation (for example, when it shows an elongation of 0% and is broken when stretched), it can be regarded as non-fibrillatable.

The high-molecular-weight PTFE preferably has a standard specific gravity (SSG) of 2.130 to 2.280. The standard specific gravity is determined by the water replacement method in accordance with ASTM D 792 using a sample formed in accordance with ASTM D4895-89. In the present disclosure, the "high-molecular-weight" means that the standard specific gravity is within the above range.

The low-molecular-weight PTFE has a melt viscosity at 380°C of $1 \times 10^2$ to $7 \times 10^5$ Pa·s. In the present disclosure, the "low-molecular-weight" means that the melt viscosity is within the above range. The melt viscosity is a value measured in accordance with ASTM D 1238, using a flow tester (manufactured by SHIMADZU CORPORATION) and a 2φ-8 L die, by keeping 2 g of the sample that has been heated in advance at 380°C for 5 minutes, at the above temperature under a load of 0.7 MPa.

The high-molecular-weight PTFE has a melt viscosity significantly higher than that of the low-molecular-weight PTFE, and the melt viscosity thereof is difficult to measure accurately. The melt viscosity of low molecular weight PTFE is measurable, but it is difficult to obtain a formed article usable in the measurement of standard specific gravity from low molecular weight PTFE, and it is thus difficult to measure the accurate standard specific gravity thereof. Accordingly, in the present disclosure, the standard specific gravity is used as an index of the molecular weight of the high-molecular-weight PTFE, while the melt viscosity is used as an index of the molecular weight of the low-molecular-weight PTFE. It should be noted that there is no known measuring method for directly specifying the molecular weight of either the high-molecular-weight PTFE or the low-molecular-weight PTFE.

The high-molecular-weight PTFE preferably has a peak temperature of 333 to 347°C, more preferably 335 to 345°C. The low-molecular-weight PTFE preferably has a peak temperature of 322 to 333°C, more preferably 324 to 332°C. The peak temperature can be specified as the temperature corresponding to the maximum value appearing in the differential thermal (DTA) curve obtained by increasing the temperature of PTFE without a history of being heated to a temperature of 300°C or higher at 10°C/min using TG/DTA (simultaneous thermogravimetric analyzer).

The peak temperature of the PTFE may be 322 to 347°C.

When the PTFE is a high-molecular-weight PTFE, the upper limit of the peak temperature of the PTFE may be 347°C or lower, 346°C or lower, 345°C or lower, 344°C or lower, 343°C or lower, 342°C or lower, 341°C or lower, or 340°C or lower.

When the PTFE is a high-molecular-weight PTFE, the lower limit of the peak temperature of the PTFE may be 333°C or higher, or 335°C or higher.

When the PTFE is a low-molecular-weight PTFE, the upper limit of the peak temperature of the PTFE may be 333°C or lower, or 332°C or lower.

When the PTFE is a low-molecular-weight PTFE, the lower limit of the peak temperature of the PTFE may be 322°C or higher, or 324°C or higher.

The average primary particle size of primary particles of low molecular weight PTFE is preferably 10 to 300 nm, more preferably 50 nm or more, even more preferably 100 nm or more, and yet more preferably 150 nm or more, and is more preferably 250 nm or less. A relatively small average primary particle size of primary particles can be obtained by, for example, adding a modifying monomer to the polymerization system at the initial stage of TFE polymerization.

The average primary particle size of primary particles of the low-molecular-weight PTFE can be measured by dynamic light scattering. The average primary particle size may be measured by first preparing a low-molecular-weight PTFE aqueous dispersion having a polymer solid concentration adjusted to about 1.0% by mass, and then using dynamic light scattering at a measurement temperature of 25°C with 70 times of measurement processes, wherein the solvent (water) has a refractive index of 1.3328 and the solvent (water) has a viscosity of 0.8878 mPa·s. In dynamic light scattering, for example, ELSZ-1000S (manufactured by Otsuka Electronics Co., Ltd.) can be used.

The average primary particle size can also be measured by the following method. A dispersion is diluted with water to a solid concentration of 0.15% by mass, the transmittance of incident light at 550 nm relative to the unit length of the resulting diluted latex is determined, the number-based length average particle size is determined by measuring the Feret diameter with a transmission electron microscope image, and based on these values, a calibration curve is drawn. Using this calibration curve, the average primary particle size can be determined from the measured transmittance of projected light at 550 nm of each sample.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The PTFE has an enthalpy of fusion of more preferably 55 mJ/mg or higher, and even more preferably 58 mJ/mg or higher.

(II) Melt-fabricable fluororesin

(1) In the production method of the present disclosure, the polymerization for FEP is preferably performed at a polymerization temperature of 10 to 150°C at a polymerization pressure of 0.3 to 6.0 MPaG.

The FEP preferably has a monomer composition ratio (% by mass) of TFE:HFP = (60 to 95):(5 to 40), more preferably (85 to 92): (8 to 15).

In addition to TFE and HFP, a further monomer copolymerizable with these monomers may be polymerized to obtain a copolymer of TFE, HFP, and the further monomer as the FEP. Examples of the further monomer include the above-mentioned fluoromonomers (except for TFE and HFP) and fluorine-free monomers. One further monomer may be used singly, or multiple further monomers may be used in combination. The further monomer is preferably perfluoro(alkyl vinyl ether). The content of the further monomer unit in the FEP may be 0.1 to 2% by mass based on the entirety of monomer units.

In the polymerization of FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

(2) In the production method of the present disclosure, the polymerization of a TFE/perfluoro(alkyl vinyl ether) copolymer such as PFA or MFA and a TFE/perfluoroallyl ether copolymer is usually preferably carried out at a polymerization temperature of 10 to 100°C at a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7):(0.3 to 10) and more preferably (97 to 99):(1 to 3). The perfluoro(alkyl vinyl ether) preferably used is one represented by the formula: $CF_2=CFORf^4$, wherein $Rf^4$ is a perfluoroalkyl group having 1 to 6 carbon atoms.

In addition to TFE and the perfluoro(alkyl vinyl ether), a further monomer copolymerizable with these monomers may be polymerized to obtain a copolymer of TFE, the perfluoro(alkyl vinyl ether), and the further monomer as the TFE/perfluoro(alkyl vinyl ether) copolymer. Examples of the further monomer include the above-mentioned fluoromonomers (except for TFE and the perfluoro(alkyl vinyl ether)) and fluorine-free monomers. One further monomer may be used singly, or multiple further monomers may be used in combination. The content of the further-monomer unit in the TFE/perfluoro (alkyl vinyl ether) copolymer may be 0.1 to 2% by mass based on all monomer units.

The TFE/perfluoroallyl ether copolymer preferably has a monomer composition ratio (mol%) of TFE:perfluoroallyl ether = (90 to 99.7): (0.3 to 10), and more preferably (97 to 99):(1 to 3). The perfluoroallyl ether used is preferably represented by the formula: $CF_2=CFCF_2ORf^4$, wherein $Rf^4$ is a perfluoroalkyl group having 1 to 6 carbon atoms.

In addition to TFE and perfluoroallyl ether, by polymerizing a further monomer that is copolymerizable with these monomers, a copolymer of TFE, perfluoroallyl ether, and the further monomer may be obtained as a copolymer of TFE/perfluoroallyl ether. Examples of the further monomer include the fluoromonomers (excluding TFE and perfluoroallyl ether) and fluorine-free monomers described above. One further monomer may be used singly, or multiple further monomers may be used in combination. The content of the further-monomer unit in the TFE/perfluoroallyl ether copolymer may be 0.1 to 2% by mass based on the entirety of monomer units.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent, and thereby a primer composition can be obtained. This primer composition may be used in a method for applying a fluororesin to a metal surface, wherein the method includes applying the primer composition to a metal surface, applying a melt-fabricable fluororesin composition to the resulting primer layer, and sintering the melt-fabricable fluororesin composition layer together with the primer layer.

(3) In the production method of the present disclosure, the polymerization for ETFE is preferably performed at a polymerization temperature of 10 to 100°C at a polymerization pressure of 0.3 to 2.0 MPaG.

ETFE preferably has a monomer composition ratio (mol%) of TFE:ethylene = (50 to 99):(50 to 1).

In addition to ethylene and TFE, by polymerizing a further polymer that is copolymerizable with these monomers, a copolymer of ethylene, TFE and a further monomer may be obtained as ETFE. Examples of the further monomer include the fluoromonomers (excluding TFE) and fluorine-free monomers (excluding ethylene) described above. One further monomer may be used singly, or multiple further monomers may be used in combination.

The further monomer is preferably hexafluoropropylene, perfluorobutyl ethylene, perfluorohexyl ethylene, 3,3,4,4,5,5,6,6,7,7,8,8,8-tridecafluorooct-1-ene, 2,3,3,4,4,5,5-heptafluoro-1-pentene ($CH_2=CFCF_2CF_2CF_2H$), or 2-trifluoromethyl-3,3,3-trifluoropropene ($(CF_3)_2CF=CH_2$).

The content of the further-monomer unit in ETFE may be 0 to 20% by mass based on the entirety of monomer units. A preferable mass ratio is TFE:ethylene:further monomer=(63 to 94):(27 to 2):(1 to 10).

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

(4) The production method of the present disclosure may be used to produce an electrolyte polymer precursor. In the production method of the present disclosure, the polymerization for the electrolyte polymer precursor is preferably performed at a polymerization temperature of 10 to 100°C and a polymerization pressure of 0.1 to 2.0 MPaG. The electrolyte polymer precursor contains a monomer containing a functional group represented by $-SO_2X^{151}$, $-COZ^{151}$, or $-POZ^{152}Z^{153}$ ($X^{151}$, $Z^{151}$, $Z^{152}$, and $Z^{153}$ are as described later), and can be converted into an ion-exchangeable polymer through a hydrolysis treatment.

An example of the monomer to be used for the electrolyte polymer precursor may be
a fluorine-containing monomer represented by the general formula (150):

$$CF_2=CF-O-(CF_2CFY^{151}-O)_n-(CFY^{152})_m-A^{151}$$

wherein $Y^{151}$ represents a fluorine atom, a chlorine atom, a $-SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents $-SO_2X^{151}$,$-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same as or different from each other, and each represent $-NR^{154}R^{155}$ or $-OR^{156}$; $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom. Examples of the monomer to be used for the electrolyte polymer precursor also include the compound containing two fluorosulfonyl groups described in International Publication No. WO 2007/013532 and the perfluoromonomer having a $-SO_2F$ group and a dioxolane ring described in International Publication No. WO 2014/175123. The electrolyte polymer precursor preferably has a monomer composition ratio (mol%) of TFE:vinyl ether = (50 to 99):(50 to 1), more preferably TFE:vinyl ether = (50 to 93):(50 to 7).

The electrolyte polymer precursor may be modified with a third monomer within a range of 0 to 20% by mass of all monomers. Examples of the third monomer include CTFE, vinylidene fluoride, perfluoroalkyl vinyl ether, and perfluorobutenyl vinyl ether; cyclic monomers such as perfluoro-2,2-dimethyl-1,3-dioxolane and perfluoro-2-methylene-4-methyl-1,3-dioxole; multifunctional monomers such as divinylbenzene.

The electrolyte polymer precursor thereby obtained may be formed into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymerization dispersion.

This dispersion may be then heated up to 120°C or higher in a pressurized vessel and thereby dissolved in, for example, a solvent mixture of water and an alcohol, i.e., converted into a solution state.
The solution thereby obtained may be used as a binder for electrodes. Also, the solution may be combined with a variety of additives and cast to form a film, and the film may be used for antifouling films, organic actuators, or the like.

(5) TFE/VDF copolymer

In the production method of the present disclosure, the polymerization for the TFE/VDF copolymer may be performed at any polymerization temperature, such as 0 to 100°C. The polymerization pressure is suitably determined according to other polymerization conditions such as the polymerization temperature, and may be usually 0 to 9.8 MPaG.
The TFE/VDF copolymer preferably has a monomer composition ratio (mol%) of TFE:VDF = (5 to 90):(95 to 10). The TFE/VDF copolymer may be modified with a third monomer within a range of 0 to 50 mol% of all monomers. The composition ratio thereof is preferably TFE:ethylene:third monomer = (30 to 85):(10 to 69.9):(0.1 to 10).
The third monomer is preferably a monomer represented by

the formula: $CX^{11}X^{12}=CX^{13}(CX^{14}X^{15})_{n11}X^{16}$
wherein $X^{11}$ to $X^{16}$ are the same or different, and each represent H, F, or Cl; n11 represents an integer of 0 to 8, provided that TFE and VDF are excluded; or
a monomer represented by the formula: $CX^{21}X^{22}=CX^{23}-O(CX^{24}X^{25})_{n21}X^{26}$

wherein $X^{21}$ to $X^{26}$ are the same as or different from each other, and each represent H, F, or Cl; and n21 represents an integer of 0 to 8.
The third monomer may be a fluorine-free ethylenic monomer. From the viewpoint of maintaining the heat resistance and the chemical resistance, the fluorine-free ethylenic monomer is preferably selected from ethylenic monomers having 6 or less carbon atoms. Examples include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.
The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.
While embodiments have been described above, it will be understood that various changes in form and detail can be made without departing from the gist and scope of the claims.

<1> According to the first viewpoint of the present disclosure, provided is

a method for producing a fluoropolymer aqueous dispersion in which a content of a fluorine-containing surfactant is reduced,
the method comprising at least preparing an aqueous dispersion (E) by heating an aqueous dispersion containing a fluoropolymer, a nonionic surfactant and a fluorine-containing surfactant,

the aqueous dispersion (E) containing:

a phase (E1) in which a content of the fluoropolymer is less than 1.00% by mass based on a mass of the phase (E1), and a content of the nonionic surfactant is less than 2.00% by mass based on the mass of the phase (E1);
a phase (E2) in which a content of the fluoropolymer is less than 1.00% by mass based on a mass of the phase (E2), and a content of the nonionic surfactant is 2.00% by mass or more based on the mass of the phase (E2); and
a phase (E3) in which a content of the fluoropolymer is 1.00% by mass or more based on a mass of the phase (E3), and a content of the nonionic surfactant is 2.00% by mass or more based on the mass of the phase (E3).

<2> According to the second viewpoint of the present disclosure, provided is
the production method according to the first viewpoint, wherein an aqueous dispersion containing:

the phase (E1) in which the content of the fluoropolymer is less than 1.00% by mass based on the mass of the phase (E1), and the content of the nonionic surfactant is less than 2.00% by mass based on the mass of the phase (E1);
the phase (E2) in which the content of the fluoropolymer is less than 1.00% by mass based on the mass of the phase (E2), and the content of the nonionic surfactant is 20.00% by mass or more based on the mass of the phase

(E2); and
the phase (E3) in which the content of the fluoropolymer is 30.00% by mass or more based on the mass of the phase (E3), and the content of the nonionic surfactant is 2.00% by mass or more based on the mass of the phase (E3)

is prepared as the aqueous dispersion (E).

<3> According to the third viewpoint of the present disclosure, provided is

the production method according to the first or second viewpoint, wherein an aqueous dispersion (C) containing a fluoropolymer, a nonionic surfactant and a fluorine-containing surfactant is heated to a first temperature range lower than a temperature higher by 10°C than a cloud point of the nonionic surfactant and equal to or higher than 35°C, the temperature of the heated aqueous dispersion (C) is maintained in the first temperature range for 5 minutes or more to prepare an aqueous dispersion (D) containing:

a phase (D1) in which a content of the fluoropolymer is less than 1.00% by mass based on a mass of the phase (D1), and a content of the nonionic surfactant is 5.00% by mass or more based on the mass of the phase (D1); and
a phase (D2) in which a content of the fluoropolymer is 1.00% by mass or more based on a mass of the phase (D2), and a content of the nonionic surfactant is less than 5.00% by mass based on the mass of the phase (D2),

the aqueous dispersion (D) is heated to a second temperature range equal to or higher than a temperature higher by 10°C than the cloud point of the nonionic surfactant, the temperature of the heated aqueous dispersion (D) is maintained in the second temperature range for 5 minutes or more to prepare the aqueous dispersion (E) containing phases (E1) to (E3), and
the phase (E3) is collected from the aqueous dispersion (E) containing phases (E1) to (E3).

<4> According to the fourth viewpoint of the present disclosure, provided is

the production method according to any one of the first to third viewpoints, wherein an aqueous dispersion (B) containing a fluoropolymer, a nonionic surfactant and a fluorine-containing surfactant and an ion exchange resin are brought into contact with each other, and an aqueous dispersion (C) is collected,
the aqueous dispersion (C) is heated to a first temperature range lower than a temperature higher by 10°C than the cloud point of the nonionic surfactant and equal to or higher than 35°C, the temperature of the heated aqueous dispersion (C) is maintained in the first temperature range for 5 minutes or more to prepare an aqueous dispersion (D) containing:

a phase (D1) in which a content of the fluoropolymer is less than 1.00% by mass based on a mass of the phase (D1), and a content of the nonionic surfactant is 5.00% by mass or more based on the mass of the phase (D1); and
a phase (D2) in which a content of the fluoropolymer is 1.00% by mass or more based on a mass of the phase (D2), and a content of the nonionic surfactant is less than 5.00% by mass based on the mass of the phase (D2),

the aqueous dispersion (D) is heated to a second temperature range equal to or higher than a temperature higher by 10°C than the cloud point of the nonionic surfactant, the temperature of the heated aqueous dispersion (D) is maintained in the second temperature range for 5 minutes or more to prepare the aqueous dispersion (E) containing phases (E1) to (E3), and
the phase (E3) is collected from the aqueous dispersion (E) containing phases (E1) to (E3).

<5> According to the fifth viewpoint of the present disclosure, provided is

the production method according to the first or second viewpoint, wherein an aqueous dispersion (C) containing a fluoropolymer, a nonionic surfactant and a fluorine-containing surfactant is heated to a third temperature range equal to or higher than a temperature higher by 10°C than the cloud point of the nonionic surfactant, the temperature of the heated aqueous dispersion (C) is maintained in the third temperature range for 5 minutes or more to prepare the aqueous dispersion (E) containing phases (E1) to (E3),
the aqueous dispersion (E) is subsequently stirred until disappearance of boundaries between the phases to

prepare an aqueous dispersion (F),
the temperature of the aqueous dispersion (F) is adjusted to a fourth temperature range lower than a temperature higher by 10°C than the cloud point of the nonionic surfactant and equal to or higher than 35°C, the temperature of the aqueous dispersion (F) is maintained in the fourth temperature range for 5 minutes or more to prepare an aqueous dispersion (G) containing:

a phase (G1) in which a content of the fluoropolymer is less than 1.00% by mass or more based on a mass of the phase (G1), and a content of the nonionic surfactant is 5.00% by mass or more based on the mass of the phase (G1); and
a phase (G2) in which a content of the fluoropolymer is 1.00% by mass or more based on a mass of the phase (G2), and a content of the nonionic surfactant is less than 5.00% by mass based on the mass of the phase (G2), and
the phase (G2) is collected from the aqueous dispersion (G) containing phases (G1) and (G2).

<6> According to the sixth viewpoint of the present disclosure, provided is

the production method according to the first, second or fifth viewpoint, wherein an aqueous dispersion (B) containing a fluoropolymer, a nonionic surfactant and a fluorine-containing surfactant and an ion exchange resin are brought into contact with each other, and an aqueous dispersion (C) is collected,
the aqueous dispersion (C) is heated to a third temperature range equal to or higher than a temperature higher by 10°C than the cloud point of the nonionic surfactant, the temperature of the heated aqueous dispersion (C) is maintained in the third temperature range for 5 minutes or more to prepare the aqueous dispersion (E) containing phases (E1) to (E3),
the aqueous dispersion (E) is subsequently stirred until disappearance of boundaries between the phases to prepare an aqueous dispersion (F),
the temperature of the aqueous dispersion (F) is adjusted to a fourth temperature range lower than a temperature higher by 10°C than the cloud point of the nonionic surfactant and equal to or higher than 35°C, the temperature of the aqueous dispersion (F) is maintained in the fourth temperature range for 5 minutes or more to prepare an aqueous dispersion (G) containing:

a phase (G1) in which a content of the fluoropolymer is less than 1.00% by mass or more based on the mass of the phase (G1), and a content of the nonionic surfactant is 5.00% by mass or more based on the mass of the phase (G1); and
a phase (G2) in which a content of the fluoropolymer is 1.00% by mass or more based on a mass of the phase (G2), and a content of the nonionic surfactant is less than 5.00% by mass based on the mass of the phase (G2), and

the phase (G2) is collected from the aqueous dispersion (G) containing phases (G1) and (G2).

<7> According to the seventh viewpoint of the present disclosure, provided is
the production method according to the fourth or sixth viewpoint, wherein the aqueous dispersion (C) is collected, a nonionic surfactant is added to the aqueous dispersion (C), and the aqueous dispersion (C) is then heated.
<8> According to the eighth viewpoint of the present disclosure, provided is

the production method according to the fourth or sixth viewpoint, wherein a fluoromonomer is polymerized in the presence of a fluorine-containing surfactant, a polymerization initiator and an aqueous medium to prepare an aqueous dispersion (A) containing a fluoropolymer, and
a nonionic surfactant is added to the aqueous dispersion (A) to prepare the aqueous dispersion (B) containing a fluoropolymer, a nonionic surfactant and a fluorine-containing surfactant.

<9> According to the ninth viewpoint of the present disclosure, provided is
the production method according to the eighth viewpoint, wherein a content of the fluorine-containing surfactant in the phase (E3) or the phase (G2) is reduced to an amount which is equal to or smaller than an amount corresponding to 0.001% by mass based on a content of the fluorine-containing surfactant contained in the aqueous dispersion (A).
<10> According to the tenth viewpoint of the present disclosure, provided is
the production method according to any one of the first to ninth viewpoints, wherein after the phase (E3) or the phase (G2) is collected, a nonionic surfactant is added to the collected phase.
<11> According to the eleventh viewpoint of the present disclosure, provided is

the production method according to any one of the third to ninth viewpoints, wherein the aqueous dispersion (C) contains a fluoropolymer, a nonionic surfactant and a fluorine-containing surfactant,
the fluoropolymer is polytetrafluoroethylene, a content of the polytetrafluoroethylene is 20.0 to 35.0% by mass based on a mass of the aqueous dispersion (C),
a cloud point of the nonionic surfactant is 40 to 80°C, a content of the nonionic surfactant is 2.00 to 10.0% by mass based on the mass of the aqueous dispersion (C),
the fluorine-containing surfactant is an anionic fluorine-containing surfactant having a LogPOW of 3.5 or less, and a content of the fluorine-containing surfactant is 100 mass ppb or more and 3,000 mass ppm or less based on the mass of the aqueous dispersion (C).

<12> According to the twelfth viewpoint of the present disclosure, provided is

a fluoropolymer aqueous dispersion comprising a fluoropolymer and an anionic fluorine-containing surfactant, wherein
a content of the anionic fluorine-containing surfactant is more than 0 mass ppb and less than 100 mass ppb based on the fluoropolymer.

<13> According to the thirteenth viewpoint of the present disclosure, provided is

the fluoropolymer aqueous dispersion according to the twelfth viewpoint, wherein the anionic fluorine-containing surfactant is a compound represented by:

$F (CF_2)_7COOM$,

$F (CF_2)_5COOM$,

$H (CF_2)_6COOM$,

$H (CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF (CF_3)CF_2OCF_2COOM$,

$CF_2ClCF(CF_3)OCF_2CF(CF_3)OCF_2COOM$,

and

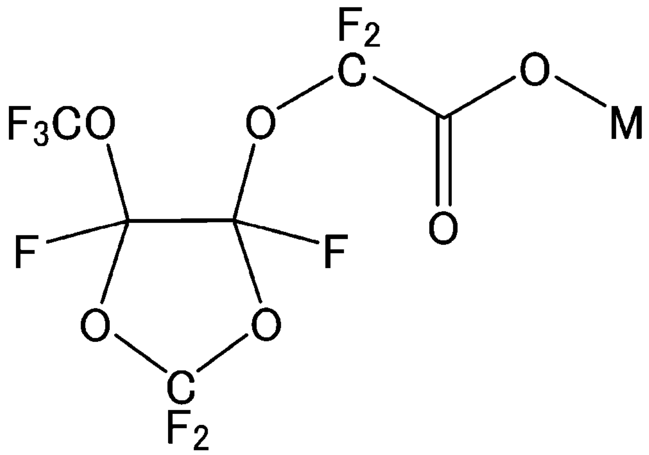

in each formula, M is H, a metal atom, $NR^7_4$, imidazolium optionally having a substituent, pyridinium optionally having a substituent, or phosphonium optionally having a substituent; and $R^7$ is H or an organic group. <14> According to the fourteenth viewpoint of the present disclosure, provided is

the fluoropolymer aqueous dispersion according to the twelfth or thirteenth viewpoint, wherein a LogPOW of the anionic fluorine-containing surfactant is 3.5 or less. <15> According to the fifteenth viewpoint of the present disclosure, provided is

the fluoropolymer aqueous dispersion according to any one of the twelfth to fourteenth viewpoints, further comprising a nonionic surfactant, wherein

a content of the nonionic surfactant is 4.0 to 12.0% by mass based on the fluoropolymer. <16> According to the sixteenth viewpoint of the present disclosure, provided is

the fluoropolymer aqueous dispersion according to the fifteenth viewpoint, wherein the nonionic surfactant is represented by the general formula (i):

$$R^6\text{-O-}A^1\text{-H} \qquad \text{(i)}$$

wherein $R^6$ is a linear or branched primary or secondary alkyl group having 8 to 18 carbon atoms, and $A^1$ is a polyoxyalkylene chain.

<17> According to the seventeenth viewpoint of the present disclosure, provided is
the fluoropolymer aqueous dispersion according to the fifteenth or sixteenth viewpoint, wherein a cloud point of the nonionic surfactant is 40 to 80°C.
<18> According to the eighteenth viewpoint of the present disclosure, provided is
the fluoropolymer aqueous dispersion according to any one of the twelfth to seventeenth viewpoints, wherein the fluoropolymer is polytetrafluoroethylene.
<19> According to the nineteenth viewpoint of the present disclosure, provided is

a method for producing a fluoropolymer aqueous dispersion in which a content of a polymer compound (I) having an ionic group is reduced,

the method comprising at least preparing an aqueous dispersion (E) by heating an aqueous dispersion containing a fluoropolymer, a nonionic surfactant, and a polymer compound (I) having an ionic group,

the aqueous dispersion (E) containing:

a phase (E1) in which a content of the fluoropolymer is less than 1.00% by mass based on the mass of the phase (E1), and a content of the nonionic surfactant is less than 2.00% by mass based on the mass of the phase (E1);
a phase (E2) in which a content of the fluoropolymer is less than 1.00% by mass based on a mass of the phase (E2), and a content of the nonionic surfactant is 2.00% by mass or more based on the mass of the phase (E2); and
a phase (E3) in which a content of the fluoropolymer is 1.00% by mass or more based on a mass of the phase (E3), and a content of the nonionic surfactant is 2.00% by mass or more based on the mass of the phase (E3).

<20> According to the twentieth viewpoint of the present disclosure, provided is
the production method according to the nineteenth viewpoint, wherein the polymer compound (I) having an ionic group

contains a polymerization unit (I) derived from a monomer (I) represented by the general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

## EXAMPLES

Hereinafter, the embodiments of the present disclosure will now be described by way of Examples, but the present disclosure is not limited only to the Examples.

### (1) Solid concentration (P)

The solid concentration was determined by P = Z / X × 100 (% by mass) from a non-volatile matter (Z g) obtained by putting about 1 g (X g) of a sample in an aluminum cup having a diameter of 5 cm, and heating the sample at 110°C for 30 minutes, followed by heating at 300°C for 30 minutes.

### (2) Average primary particle size

A PTFE aqueous dispersion was diluted with water to a solid concentration of 0.15% by mass. The transmittance of projected light at 550 nm relative to the unit length of the obtained diluted aqueous dispersion was determined and the number-based length average primary particle size was determined by measuring the Feret diameter with a transmission electron microscope image. Based on these values, a calibration curve was drawn. Using this calibration curve, the average primary particle size was determined from the measured transmittance of the projected light at 550 nm of each sample.

### (3) pH

Using a glass electrode (HORIBA, Ltd.), pH at 25°C was measured in accordance with JIS K6893.

### (4) Content of nonionic surfactant (N)

The content of the nonionic surfactant was calculated from the formula : N = [(Y-Z) / Z] × 100 (% by mass) from the non-volatile matter (Y g) obtained by heating about 1 g (X g) of a sample in an aluminum cup having a diameter of 5 cm at 110°C for 30 minutes and the non-volatile matter (Z g) obtained by heating the obtained non-volatile matter (Y g) at 300°C for 30 minutes.

### (5) Measurement of content of fluorine-containing surfactant

5.0 g of the aqueous dispersion was weighed, 10 g of methanol was added, the mixture was poured into a cylindrical filter paper, and Soxhlet extraction was carried out so that the total amount of methanol as an extraction solvent was 150 g, and the volume of the obtained extracted liquid adjusted to 250 ml with methanol to obtain an extracted liquid containing a fluorine-containing surfactant.

Calibration curve

Methanol standard solutions of the fluorine-containing surfactant with five known concentration levels of 0.1 to 100 ng/mL were prepared, and measurement was carried out using a liquid chromatograph mass spectrometer (Waters, LC-MS ACQUITY UPLC/TQD). First-order approximation was used to create calibration curves from the sample concentrations and peak integral values thereof.

The content of the fluorine-containing surfactant was measured using a liquid chromatograph-mass spectrometer. With the extracted liquid, the peak area of the fluorine-containing surfactant was determined by an MRM method to obtain the content of the fluorine-containing surfactant contained in the aqueous dispersion. The quantification limit is 5 mass ppb. The content of perfluoroethercarboxylic acid D was determined in terms of perfluorooctanoic acid with the perfluorooctanoic acid used as a standard substance.

Measurement equipment configuration and LC-MS measurement condition are below:

[Tbale 1]

Table 1

| LC unit | | | |
|---|---|---|---|
| Device | Acquity UPLC manufactured by Waters Corporation | | |
| Column | Acquity UPLC BEH Shield RP18 1.7 μm (2.1 × 50 mm) manufactured by Waters Corporation | | |
| Mobile phase | A $CH_3CN$ | | |
| | B 20mM $CH_3COONH_4/H_2O$ | | |
| | | 0 → 1.5 min | A:B = 10:90 |
| | | 1.5 → 8.5 min | A:B = 10:90 → A:B = 90:10 Linear gradient |
| | | 8.5 → 10 min | A:B = 90:10 |
| Flow rate | | 0.4 mL/min | |
| Column temperature | 40°C | | |
| Sample injection volume | 5 μL | | |
| **MS unit** | | | |
| Device | TQ Detecter | | |
| Measurement mode | MRM (Multiple Reaction Monitoring) | | |
| Ionization method | Electrospray ionization | | |
| | Negative mode | | |

MRM measurement parameters

[Table 2]

Table 2

| Compound | Precursor | Product |
|---|---|---|
| Perfluoroethercarboxylic acid A | 329 | 285 |
| Perfluoroethercarboxylic acid B | 345 | 135 |
| Perfluoroethercarboxylic acid C | 395 | 351 |
| Perfluoroethercarboxylic acid E | 495 | 185 |
| Perfluorooctanoic acid | 413 | 369 |

(6) Viscosity

Using a B-type rotary viscometer (manufactured by Toki Sangyo Co., Ltd., rotor No. 1), the viscosity at 25°C was measured under conditions of a rotation speed of 60 rpm and a measurement time of 120 seconds.

(7) Content of polymer compound (I) in PTFE aqueous dispersion

The content ($T_A$% by mass) of the polymer compound (I) in the PTFE aqueous dispersion obtained in each Production Example based on PTFE was calculated from the mass of water and the mass of the polymer compound (I) added to the reactor in the Production Example and the PTFE solid concentration in the obtained PTFE aqueous dispersion using the following equation:

$$T_A = W_D / [(W_W \times P_A / 100) / (1 - P_A / 100)] \times 100 \text{ (\% by mass)}$$

$W_W$ (g): Mass of water added to reactor
$W_D$ (g): Mass of polymer compound (I) added to reactor
$P_A$ (% by mass): PTFE solid concentration in PTFE aqueous dispersion

(8) Content of polymer compound (I) in supernatant phase

A predetermined amount of sodium trifluoroacetate was added to the supernatant phase, and $^{19}F$ NMR measurement was performed. From the peak area values of sodium trifluoroacetate and the polymer compound (I), the content ($T_S$% by mass) of the polymer compound (I) in the supernatant phase was determined.

(9) Content of polymer compound (I) in PTFE aqueous dispersion

The content ($T_D$% by mass) of the polymer compound (I) in the PTFE aqueous dispersion obtained in each of Experimental Examples based on PTFE was determined by the following formula:

$$T_D = T_A - W_S \times T_S / W_A$$

$T_A$ (% by mass): Content of polymer compound (I) in PTFE aqueous dispersion obtained in each Production Example based on PTFE
$T_S$ (% by mass): Content of polymer compound (I) D in supernatant phase
$W_S$ (g): Mass of supernatant phase
$W_A$ (g): Mass of PTFE in aqueous dispersion before concentration (i.e., mass of PTFE in condensed phase)

<Static surface tension of nonionic surfactant>

An aqueous solution of the nonionic surfactant at 0.1% by mass was prepared, and the surface tension of the obtained aqueous solution was measured by the Wilhelmy method at 25°C using a surface tensiometer DY-300 manufactured by Kyowa Interface Science Co., Ltd.
The following fluorine-containing surfactant was prepared.

Perfluoroethercarboxylic acid A ammonium salt:
Ammonium perfluoro (2-methyl-3-oxahexanoate) manufactured by FUJIFILM Wako Pure Chemical Corporation, structural formula: $CF_3CF_2CF_2OCF(CF_3)COONH_4$
Perfluoroethercarboxylic acid B ammonium salt:
Ammonium perfluoro-3,6-dioxaoctanoate, structural formula: $CF_3CF_2OCF_2CF_2OCF_2COONH_4$, perfluoroethercarboxylic acid B was purchased from Apollo Scientific Ltd., and made into an ammonium salt.
Perfluoroethercarboxylic acid C ammonium salt:
Ammonium 2,3,3,3-tetrafluoro-2-[1,1,2,3,3,3-hexafluoro-2-(trifluoromethoxy)propoxy]-propionate, structural formula: $CF_3OCF(CF_3)CF_2OCF(CF_3)COONH_4$
Perfluoroethercarboxylic acid D ammonium salt:
Ammonium perfluoro(2,5-dimethyl-3,6-dioxaoctanoate), structural formula: $CF_3CF_2OCF(CF_3)CF_2OCF(CF_3)COONH_4$
Perfluoroethercarboxylic acid E ammonium salt:
Ammonium 2,3,3,3-tetrafluoro-2-{1,1,2,3,3,3-hexafluoro-2-(heptafluoropropoxy)propoxy}propanoate, structural formula: $CF_3CF_2CF_2OCF(CF_3)CF_2OCF(CF_3)COONH_4$

The following nonionic surfactant was prepared. Surfactant (a): $C_{13}H_{27}O(CH_2CH_2O)_8H$, cloud point 60°C (HLB value: 13.3, static surface tension: 27.5 mN/m) Surfactant (b) : $C_{13}H_{27}O(CH_2CH_2O)_9H$, cloud point 56°C (HLB value: 13.3, static surface tension: 27.5 mN/m)
The polymer compounds (I) used in each of Experimental Examples are as follows.
Polymer H: Homopolymer of monomer D represented by formula: $CH_2=CF(CF_2OCFCF_3COOH)$ (number average molecular weight $12.2 \times 10^4$, weight-average molecular weight $46.0 \times 10^4$)
The number average molecular weight and the weight average molecular weight were determined by performing measurement by gel permeation chromatography (GPC) using GPC HLC-8020 manufactured by Tosoh Corporation,

using Shodex columns manufactured by SHOWA DENKO K.K. (one GPC KF-801, one GPC KF-802, and two GPC KF-806M connected in series), and allowing tetrahydrofuran (THF) to flow at a flow rate of 1 ml/min as the solvent, and by calculating the molecular weights using monodisperse polystyrene as the standard.

Production Example 1

A PTFE aqueous dispersion (1A) was prepared in accordance with Production Example 1 described in International Publication No. WO 2023/054723. The obtained PTFE aqueous dispersion (1A) had an average primary particle size of 295 nm, a solid concentration of 26.5% by mass and a perfluoroethercarboxylic acid A content of 12,372 mass ppm based on PTFE.

Comparative Example 1

To the PTFE aqueous dispersion (1A) obtained in Production Example 1, a surfactant (a) as a nonionic surfactant was added in an amount of 10 parts by mass based on 100 parts by mass of PTFE to prepare a PTFE aqueous dispersion (1B). Subsequently, a column having a diameter of 20 mm was filled with 250 ml of an OH-type anion exchange resin (trade name: Amberjet AMJ 4002 manufactured by Rohm and Haas Company), followed by passing of the dispersion at SV = 1. The surfactant (a) was added to the obtained PTFE aqueous dispersion in an amount of 18 parts by mass based on 100 parts by mass of PTFE to obtain a PTFE aqueous dispersion (1C). The PTFE aqueous dispersion (1C) had a solid concentration of 25.1% by mass, a nonionic surfactant content of 17.9% by mass based on PTFE, a pH of 9.70, and a perfluoroethercarboxylic acid A content of 2,417 mass ppb based on PTFE.

The PTFE aqueous dispersion (1C) was maintained at 63°C for 1 hour to obtain a PTFE aqueous dispersion (1D) containing two phases (D1 and D2). The phase (D1) had a solid concentration of 0.04% by mass based on the mass of the phase (D1), and a nonionic surfactant content of 10.2% by mass based on the mass of the phase (D1). The phase (D2) had a solid concentration of 70.0% by mass based on the mass of the phase (D2), a nonionic surfactant content of 2.66% by mass based on the mass of the phase (D2), and a perfluoroethercarboxylic acid A content of 711 mass ppb based on PTFE.

Experimental Example 1

The PTFE aqueous dispersion (1D) obtained in Comparative Example 1 was maintained at 82°C to form three phases (E1, E2 and E3). After 5 hours, the aqueous dispersion was cooled to room temperature, and the phase (E3) was collected. The phase (E1) had a solid concentration of 0.01% by mass based on the mass of the phase (E1), and a nonionic surfactant content of 1.05% by mass based on the mass of the phase (E1). The phase (E2) had a solid concentration of 0.56% by mass based on the mass of the phase (E2), and a nonionic surfactant content of 24.6% by mass based on the mass of the phase (E2). The phase (E3) had a solid concentration of 69.8% by mass based on the mass of the phase (E3), and a nonionic surfactant content of 2.41% by mass based on the mass of the phase (E3). In the phase (E3), the content of perfluoroethercarboxylic acid A was reduced to 48 mass ppb based on PTFE, which is equal to or smaller than an amount corresponding to 0.001% by mass based on the content of perfluoroethercarboxylic acid A contained in the PTFE aqueous dispersion (1A).

To the collected phase (E3) were added a surfactant (a) as a nonionic surfactant, ammonium lauryl sulfate as a viscosity adjuster at 500 ppm based on PTFE, an isothiazolone-based antiseptic agent at 1,000 ppm based on PTFE, and 28% aqueous ammonia as a pH adjuster. Further, deionized water was added to a solid content of 60% by mass to obtain a PTFE aqueous dispersion. The obtained PTFE aqueous dispersion had a solid concentration of 60.1% by mass, a nonionic surfactant content of 5.0% by mass based on PTFE, a pH of 9.61, and a viscosity of 25.1 mPa·s.

Production Example 2

A PTFE aqueous dispersion (2A) was prepared in accordance with Production Example 3 described in International Publication No. WO 2023/054723. The obtained PTFE aqueous dispersion (2A) had an average primary particle size of 234 nm, a solid concentration of 31.6% by mass, and a perfluoroethercarboxylic acid C content of 2,814 mass ppm based on PTFE.

Experimental Example 2

To the PTFE aqueous dispersion (2A) obtained in Production Example 2, a surfactant (a) as a nonionic surfactant was added in an amount of 18 parts by mass based on 100 parts by mass of PTFE, and pH was adjusted to 9.58 with 28% aqueous ammonia to obtain a PTFE aqueous dispersion (2B). The PTFE aqueous dispersion (2B) had a solid concentration of 24.3% by mass, and a nonionic surfactant content of 17.8% by mass based on PTFE. The PTFE

aqueous dispersion (2B) was maintained at 63°C for 1 hour to form two phases (D1 and D2). Subsequently, the aqueous dispersion was maintained at 82°C to form three phases (E1, E2 and E3). After 5 hours, the aqueous dispersion was cooled to room temperature, and the phase (E3) was collected. The phase (E1) had a solid concentration of 0.01% by mass based on the mass of the phase (E1), and a nonionic surfactant content of 1.12% by mass based on the mass of the phase (E1). The phase (E2) had a solid concentration of 0.52% by mass based on the mass of the phase (E2), and a nonionic surfactant content of 24.5% by mass based on the mass of the phase (E2). The phase (E3) had a solid concentration of 70.0% by mass based on the mass of the phase (E3), and a nonionic surfactant content of 2.51% by mass based on the mass of the phase (E3). The content of perfluoroethercarboxylic acid C in the phase (E3) was 85 mass ppb based on PTFE.

Experimental Example 3

To the PTFE aqueous dispersion (2A) obtained in Production Example 2, a surfactant (b) as a nonionic surfactant was added in an amount of 10 parts by mass based on 100 parts by mass of PTFE to prepare a PTFE aqueous dispersion (3B). Subsequently, a column having a diameter of 20 mm was filled with 250 ml of an OH-type anion exchange resin (trade name: Amberjet AMJ 4002 manufactured by Rohm and Haas Company), followed by passing of the dispersion at SV = 1. The surfactant (b) was added to the obtained PTFE aqueous dispersion in an amount of 14.5 parts by mass based on 100 parts by mass of PTFE to obtain a PTFE aqueous dispersion (3C). The PTFE aqueous dispersion (3C) had a solid concentration of 25.1% by mass, a nonionic surfactant content of 14.5% by mass based on PTFE, a pH of 9.70, and a perfluoroethercarboxylic acid C content of 1,503 mass ppb based on PTFE.

The obtained PTFE aqueous dispersion (3C) was maintained at 58°C for 1 hour to form two phases (D1 and D2). Subsequently, the aqueous dispersion was maintained at 82°C to form three phases (E1, E2 and E3). After 5 hours, the aqueous dispersion was cooled to room temperature, and the phase (E3) was collected. The phase (E1) had a solid concentration of 0.01% by mass based on the mass of the phase (E1), and a nonionic surfactant content of 1.21% by mass based on the mass of the phase (E1). The phase (E2) had a solid concentration of 0.51% by mass based on the mass of the phase (E2), and a nonionic surfactant content of 24.5% by mass based on the mass of the phase (E2). The phase (E3) had a solid concentration of 70.2% by mass based on the mass of the phase (E3), and a nonionic surfactant content of 2.79% by mass based on the mass of the phase (E3), and the content of perfluoroethercarboxylic acid C in the phase (E3) was 42 mass ppb based on PTFE.

Production Example 3

A PTFE aqueous dispersion (3A) was prepared in accordance with Production Example 2 described in International Publication No. WO 2023/054723. The obtained PTFE aqueous dispersion (3A) had an average primary particle size of 306 nm, a solid concentration of 29.9% by mass, and a perfluoroethercarboxylic acid B content of 5,962 mass ppm based on PTFE.

Experimental Example 4

A PTFE aqueous dispersion was prepared in the same manner as in Comparative Example 1 except that the PTFE aqueous dispersion (3A) obtained in Production Example 3 was used in place of the PTFE aqueous dispersion (1A). In maintaining of the PTFE aqueous dispersion at 63°C for 1 hour, weak stirring was applied to an extent that the aqueous dispersion was separated into two phases.

Subsequently, a PTFE aqueous dispersion was prepared in the same manner as in Experimental Example 1 except that the PTFE aqueous dispersion prepared in the same manner as in Comparative Example 1 was used. For the obtained PTFE aqueous dispersion, the phase (E1) had a solid concentration of 0.02% by mass based on the mass of the phase (E1), and a nonionic surfactant content of 1.40% by mass based on the mass of the phase (E1). The phase (E2) had a solid concentration of 0.64% by mass based on the mass of the phase (E2), and a nonionic surfactant content of 24.4% by mass based on the mass of the phase (E2). The phase (E3) had a solid concentration of 72.5% by mass based on the mass of the phase (E3), and a nonionic surfactant content of 2.46% by mass based on the mass of the phase (E3), and the content of perfluoroethercarboxylic acid B in the phase (E3) was 95 mass ppb based on PTFE.

Experimental Example 5

The PTFE aqueous dispersion (1C) obtained in Comparative Example 1 was maintained at 82°C to form three phases (E1, E2 and E3). After 5 hours, the aqueous dispersion was stirred until disappearance of boundaries between the phases, and maintained at 63°C for 1 hour to obtain a PTFE aqueous dispersion (5G) containing two phases (G1 and G2). The phase (G1) had a solid concentration of 0.01% by mass based on the mass of the phase (G1), and a nonionic surfactant content of 5.25% by mass based on the mass of the phase (G1). The phase (G2) had a solid concentration of

73.5% by mass based on the mass of the phase (G2), a nonionic surfactant content of 2.04% by mass based on the mass of the phase (G2), and a perfluoroethercarboxylic acid A content of 72 mass ppb based on PTFE.

The content of the fluorine-containing surfactant in the PTFE aqueous dispersion obtained in each of Experimental Examples 1 to 5 was below the quantification limit, or less than 100 mass ppb based on PTFE.

Production Example 4

A PTFE aqueous dispersion (4A) was prepared in accordance with Production Example 2 of International Publication No. WO 2022/191286. The obtained PTFE aqueous dispersion (4A) had an average primary particle size of 250 nm, a solid concentration of 29.1% by mass, and a polymer H content of 2,300 mass ppm based on PTFE.

Experimental Example 6

To the PTFE aqueous dispersion (4A) obtained in Production Example 4, a surfactant (b) as a nonionic surfactant and ammonium citrate were added in amounts of 14 parts by mass and 0.3 parts by mass, respectively, based on 100 parts by mass of PTFE, water was then added to a solid concentration of 25% by mass, and pH was adjusted to 10.2 with 28% aqueous ammonia to obtain a PTFE aqueous dispersion (6B). The PTFE aqueous dispersion (6B) had a solid concentration of 24.8% by mass, and a nonionic surfactant content of 15.1% by mass based on PTFE. The PTFE aqueous dispersion (6B) was maintained at 56°C for 1 hour to form two phases (D1 and D2). Subsequently, the aqueous dispersion was maintained at 82°C to form three phases (E1, E2 and E3). After 5 hours, the aqueous dispersion was cooled to room temperature, and the phase (E3) was collected. The phase (E1) had a solid concentration of 0.01% by mass based on the mass of the phase (E1), and a nonionic surfactant content of 1.10% by mass based on the mass of the phase (E1). The phase (E2) had a solid concentration of 0.53% by mass based on the mass of the phase (E2), and a nonionic surfactant content of 24.5% by mass based on the mass of the phase (E2). The phase (E3) had a solid concentration of 69.7% by mass based on the mass of the phase (E3), and a nonionic surfactant content of 2.96% by mass based on the mass of the phase (E3). The content of the polymer H in the phase (E3) was 350 mass ppm based on PTFE.

Production Example 5

A PTFE aqueous dispersion (5A) was prepared in the same manner as in Production Example 1 except that perfluoroethercarboxylic acid D was used in place of the perfluoroethercarboxylic acid A.

Experimental Example 7

The same treatment as in Comparative Example 1 was performed on the PTFE aqueous dispersion (5A) to obtain a PTFE aqueous dispersion (7D) containing two phases (D1 and D2). The content of perfluoroethercarboxylic acid D in the phase (D2) was 1,679 mass ppb based on PTFE.

Subsequently, a PTFE aqueous dispersion containing phases (E1, E2 and E3) was prepared in the same manner as in Experimental Example 1 except that the PTFE aqueous dispersion (7D) was used in place of the PTFE aqueous dispersion (1D). The phase (E1) had a solid concentration of 0.01% by mass based on the mass of the phase (E1), and a nonionic surfactant content of 1.12% by mass based on the mass of the phase (E1). The phase (E2) had a solid concentration of 0.52% by mass based on the mass of the phase (E2), and a nonionic surfactant content of 21.2% by mass based on the mass of the phase (E2). The phase (E3) had a solid concentration of 33.8% by mass based on the mass of the phase (E3), and a nonionic surfactant content of 5.14% by mass based on the mass of the phase (E3). The content of perfluoroethercarboxylic acid D in the phase (E3) was 59 mass ppb based on PTFE.

Production Example 6

A PTFE aqueous dispersion (6A) was prepared in the same manner as in Production Example 1 except that perfluoroethercarboxylic acid E was used in place of the perfluoroethercarboxylic acid A.

Experimental Example 8

The same treatment as in Comparative Example 1 was performed on the PTFE aqueous dispersion (6A) to obtain a PTFE aqueous dispersion (8D) containing two phases (D1 and D2). The content of perfluoroethercarboxylic acid E in the phase (D2) was 112,681 mass ppb based on PTFE.

Subsequently, a PTFE aqueous dispersion containing phases (E1, E2 and E3) was prepared in the same manner as in Experimental Example 1 except that the PTFE aqueous dispersion (8D) was used in place of the PTFE aqueous

dispersion (1D), and the time of maintaining the aqueous dispersion at 82°C was 18 hours. The phase (E1) had a solid concentration of 0.01% by mass based on the mass of the phase (E1), and a nonionic surfactant content of 1.24% by mass based on the mass of the phase (E1). The phase (E2) had a solid concentration of 0.59% by mass based on the mass of the phase (E2), and a nonionic surfactant content of 25.1% by mass based on the mass of the phase (E2). The phase (E3) had a solid concentration of 35.9% by mass based on the mass of the phase (E3), and a nonionic surfactant content of 5.82% by mass based on the mass of the phase (E3). The content of perfluoroethercarboxylic acid E in the phase (E3) was 66 mass ppb based on PTFE.

Experimental Example 9

A PTFE aqueous dispersion containing phases (E1, E2 and E3) was prepared in the same manner as in Experimental Example 1 except that the time of maintaining the aqueous dispersion at 82°C was 18 hours. The content of perfluoroethercarboxylic acid A in the phase (E3) was below the quantification limit (5 mass ppb, 7 mass ppb based on PTFE).

## Claims

**1.** A method for producing a fluoropolymer aqueous dispersion in which a content of a fluorine-containing surfactant is reduced,

the method comprising at least preparing an aqueous dispersion (E) by heating an aqueous dispersion containing a fluoropolymer, a nonionic surfactant and a fluorine-containing surfactant,
the aqueous dispersion (E) containing:

a phase (E1) in which a content of the fluoropolymer is less than 1.00% by mass based on a mass of the phase (E1), and a content of the nonionic surfactant is less than 2.00% by mass based on the mass of the phase (E1);
a phase (E2) in which a content of the fluoropolymer is less than 1.00% by mass based on a mass of the phase (E2), and a content of the nonionic surfactant is 2.00% by mass or more based on the mass of the phase (E2); and
a phase (E3) in which a content of the fluoropolymer is 1.00% by mass or more based on a mass of the phase (E3), and a content of the nonionic surfactant is 2.00% by mass or more based on the mass of the phase (E3).

**2.** The production method according to claim 1,

wherein an aqueous dispersion containing:

the phase (E1) in which the content of the fluoropolymer is less than 1.00% by mass based on the mass of the phase (E1), and the content of the nonionic surfactant is less than 2.00% by mass based on the mass of the phase (E1);
the phase (E2) in which the content of the fluoropolymer is less than 1.00% by mass based on the mass of the phase (E2), and the content of the nonionic surfactant is 20.00% by mass or more based on the mass of the phase (E2); and
the phase (E3) in which the content of the fluoropolymer is 30.00% by mass or more based on the mass of the phase (E3), and the content of the nonionic surfactant is 2.00% by mass or more based on the mass of the phase (E3)

is prepared as the aqueous dispersion (E).

**3.** The production method according to claim 1 or 2,
wherein an aqueous dispersion (C) containing a fluoropolymer, a nonionic surfactant and a fluorine-containing surfactant is heated to a first temperature range lower than a temperature higher by 10°C than a cloud point of the nonionic surfactant and equal to or higher than 35°C, the temperature of the heated aqueous dispersion (C) is maintained in the first temperature range for 5 minutes or more to prepare an aqueous dispersion (D) containing:

a phase (D1) in which a content of the fluoropolymer is less than 1.00% by mass based on a mass of the phase (D1), and a content of the nonionic surfactant is 5.00% by mass or more based on the mass of the phase (D1); and

a phase (D2) in which a content of the fluoropolymer is 1.00% by mass or more based on a mass of the phase (D2), and a content of the nonionic surfactant is less than 5.00% by mass based on the mass of the phase (D2),

the aqueous dispersion (D) is heated to a second temperature range equal to or higher than a temperature higher by 10°C than the cloud point of the nonionic surfactant, the temperature of the heated aqueous dispersion (D) is maintained in the second temperature range for 5 minutes or more to prepare the aqueous dispersion (E) containing phases (E1) to (E3), and
the phase (E3) is collected from the aqueous dispersion (E) containing phases (E1) to (E3).

**4.** The production method according to any one of claims 1 to 3, wherein an aqueous dispersion (B) containing a fluoropolymer, a nonionic surfactant and a fluorine-containing surfactant and an ion exchange resin are brought into contact with each other, and an aqueous dispersion (C) is collected,
the aqueous dispersion (C) is heated to a first temperature range lower than a temperature higher by 10°C than the cloud point of the nonionic surfactant and equal to or higher than 35°C, the temperature of the heated aqueous dispersion (C) is maintained in the first temperature range for 5 minutes or more to prepare an aqueous dispersion (D) containing:

a phase (D1) in which a content of the fluoropolymer is less than 1.00% by mass based on a mass of the phase (D1), and a content of the nonionic surfactant is 5.00% by mass or more based on the mass of the phase (D1); and
a phase (D2) in which a content of the fluoropolymer is 1.00% by mass or more based on a mass of the phase (D2), and a content of the nonionic surfactant is less than 5.00% by mass based on the mass of the phase (D2),

the aqueous dispersion (D) is heated to a second temperature range equal to or higher than a temperature higher by 10°C than the cloud point of the nonionic surfactant, the temperature of the heated aqueous dispersion (D) is maintained in the second temperature range for 5 minutes or more to prepare the aqueous dispersion (E) containing phases (E1) to (E3), and
the phase (E3) is collected from the aqueous dispersion (E) containing phases (E1) to (E3).

**5.** The production method according to claim 1 or 2, wherein an aqueous dispersion (C) containing a fluoropolymer, a nonionic surfactant and a fluorine-containing surfactant is heated to a third temperature range equal to or higher than a temperature higher by 10°C than the cloud point of the nonionic surfactant, the temperature of the heated aqueous dispersion (C) is maintained in the third temperature range for 5 minutes or more to prepare the aqueous dispersion (E) containing phases (E1) to (E3),

the aqueous dispersion (E) is subsequently stirred until disappearance of boundaries between the phases to prepare an aqueous dispersion (F),
the temperature of the aqueous dispersion (F) is adjusted to a fourth temperature range lower than a temperature higher by 10°C than the cloud point of the nonionic surfactant and equal to or higher than 35°C, the temperature of the aqueous dispersion (F) is maintained in the fourth temperature range for 5 minutes or more to prepare an aqueous dispersion (G) containing:

a phase (G1) in which a content of the fluoropolymer is less than 1.00% by mass or more based on a mass of the phase (G1), and a content of the nonionic surfactant is 5.00% by mass or more based on the mass of the phase (G1); and
a phase (G2) in which a content of the fluoropolymer is 1.00% by mass or more based on a mass of the phase (G2), and a content of the nonionic surfactant is less than 5.00% by mass based on the mass of the phase (G2), and

the phase (G2) is collected from the aqueous dispersion (G) containing phases (G1) and (G2).

**6.** The production method according to claim 1, 2 or 5, wherein an aqueous dispersion (B) containing a fluoropolymer, a nonionic surfactant and a fluorine-containing surfactant and an ion exchange resin are brought into contact with each other, and an aqueous dispersion (C) is collected,

the aqueous dispersion (C) is heated to a third temperature range equal to or higher than a temperature higher by 10°C than the cloud point of the nonionic surfactant, the temperature of the heated aqueous dispersion (C) is maintained in the third temperature range for 5 minutes or more to prepare the aqueous dispersion (E) containing phases (E1) to (E3),

the aqueous dispersion (E) is subsequently stirred until disappearance of boundaries between the phases to prepare an aqueous dispersion (F),
the temperature of the aqueous dispersion (F) is adjusted to a fourth temperature range lower than a temperature higher by 10°C than the cloud point of the nonionic surfactant and equal to or higher than 35°C, the temperature of the aqueous dispersion (F) is maintained in the fourth temperature range for 5 minutes or more to prepare an aqueous dispersion (G) containing:

a phase (G1) in which a content of the fluoropolymer is less than 1.00% by mass or more based on a mass of the phase (G1), and a content of the nonionic surfactant is 5.00% by mass or more based on the mass of the phase (G1); and
a phase (G2) in which a content of the fluoropolymer is 1.00% by mass or more based on a mass of the phase (G2), and a content of the nonionic surfactant is less than 5.00% by mass based on the mass of the phase (G2), and
the phase (G2) is collected from the aqueous dispersion (G) containing phases (G1) and (G2).

**7.** The production method according to claim 4 or 6, wherein the aqueous dispersion (C) is collected, a nonionic surfactant is added to the aqueous dispersion (C), and the aqueous dispersion (C) is then heated.

**8.** The production method according to claim 4 or 6, wherein a fluoromonomer is polymerized in the presence of a fluorine-containing surfactant, a polymerization initiator and an aqueous medium to prepare an aqueous dispersion (A) containing a fluoropolymer, and
a nonionic surfactant is added to the aqueous dispersion (A) to prepare the aqueous dispersion (B) containing a fluoropolymer, a nonionic surfactant and a fluorine-containing surfactant.

**9.** The production method according to claim 8, wherein a content of the fluorine-containing surfactant in the phase (E3) or the phase (G2) is reduced to an amount which is equal to or smaller than amount corresponding to 0.001% by mass based on a content of the fluorine-containing surfactant contained in the aqueous dispersion (A).

**10.** The production method according to any one of claims 1 to 9, wherein after the phase (E3) or the phase (G2) is collected, a nonionic surfactant is added to the collected phase.

**11.** The production method according to any one of claims 3 to 9, wherein the aqueous dispersion (C) contains a fluoropolymer, a nonionic surfactant and a fluorine-containing surfactant,

the fluoropolymer is polytetrafluoroethylene, a content of the polytetrafluoroethylene is 20.0 to 35.0% by mass based on a mass of the aqueous dispersion (C),
a cloud point of the nonionic surfactant is 40 to 80°C, a content of the nonionic surfactant is 2.00 to 10.0% by mass based on the mass of the aqueous dispersion (C),
the fluorine-containing surfactant is an anionic fluorine-containing surfactant having a LogPOW of 3.5 or less, and a content of the fluorine-containing surfactant is 100 mass ppb or more and 3,000 mass ppm or less based on the mass of the aqueous dispersion (C).

**12.** A fluoropolymer aqueous dispersion comprising a fluoropolymer and an anionic fluorine-containing surfactant, wherein
a content of the anionic fluorine-containing surfactant is more than 0 mass ppb and less than 100 mass ppb based on the fluoropolymer.

**13.** The fluoropolymer aqueous dispersion according to claim 12, wherein the anionic fluorine-containing surfactant is a compound represented by:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)$ COOM,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

and

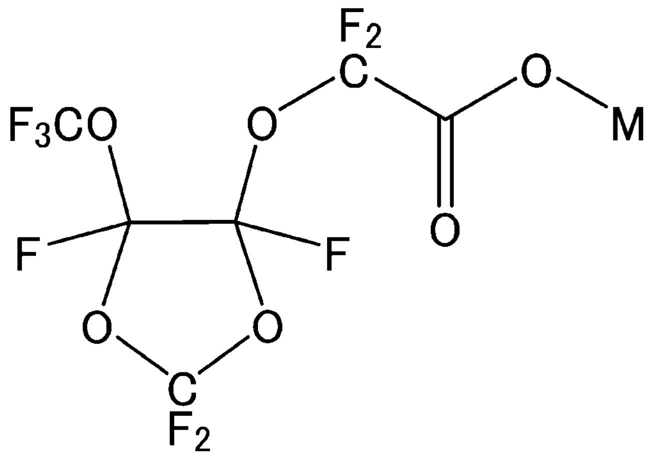

in each formula, M is H, a metal atom, $NR^7_4$, imidazolium optionally having a substituent, pyridinium optionally having a substituent, or phosphonium optionally having a substituent; and $R^7$ is H or an organic group.

**14.** The fluoropolymer aqueous dispersion according to claim 12 or 13, wherein a LogPOW of the anionic fluorine-containing surfactant is 3.5 or less.

**15.** The fluoropolymer aqueous dispersion according to any one of claims 12 to 14, further comprising a nonionic surfactant, wherein
a content of the nonionic surfactant is 4.0 to 12.0% by mass based on the fluoropolymer.

**16.** The fluoropolymer aqueous dispersion according to claim 15, wherein the nonionic surfactant is represented by the general formula (i):

$R6\text{-}O\text{-}A^1\text{-}H$ (i)

wherein $R^6$ is a linear or branched primary or secondary alkyl group having 8 to 18 carbon atoms, and $A^1$ is a polyoxyalkylene chain.

**17.** The fluoropolymer aqueous dispersion according to claim 15 or 16, wherein a cloud point of the nonionic surfactant is 40 to 80°C.

**18.** The fluoropolymer aqueous dispersion according to any one of claims 12 to 17, wherein the fluoropolymer is a polytetrafluoroethylene.

**19.** A method for producing a fluoropolymer aqueous dispersion in which a content of a polymer compound (I) having an ionic group is reduced,
the method comprising at least preparing an aqueous dispersion (E) by heating an aqueous dispersion containing a fluoropolymer, a nonionic surfactant, and a polymer compound (I) having an ionic group,
the aqueous dispersion (E) containing:

a phase (E1) in which a content of the fluoropolymer is less than 1.00% by mass based on a mass of the phase (E1), and a content of the nonionic surfactant is less than 2.00% by mass based on the mass of the phase (E1);
a phase (E2) in which a content of the fluoropolymer is less than 1.00% by mass based on a mass of the phase (E2), and a content of the nonionic surfactant is 2.00% by mass or more based on the mass of the phase (E2); and
a phase (E3) in which a content of the fluoropolymer is 1.00% by mass or more based on a mass of the phase (E3), and a content of the nonionic surfactant is 2.00% by mass or more based on the mass of the phase (E3).

**20.** The production method according to claim 19,

wherein the polymer compound (I) having an ionic group contains a polymerization unit (I) derived from a monomer (I) represented by the general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

## INTERNATIONAL SEARCH REPORT

International application No. **PCT/JP2024/029014**

### A. CLASSIFICATION OF SUBJECT MATTER

***C08F 6/14***(2006.01)i; ***C08F 2/24***(2006.01)i; ***C08F 14/18***(2006.01)i
FI: C08F6/14; C08F2/24; C08F14/18

According to International Patent Classification (IPC) or to both national classification and IPC

### B. FIELDS SEARCHED

Minimum documentation searched (classification system followed by classification symbols)

C08F6/14; C08F2/24; C08F14/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2020/218622 A1 (DAIKIN INDUSTRIES, LTD.) 29 October 2020 (2020-10-29) claims, examples, table 7, paragraphs [0209], [0712], [0752] | 12-18<br>1-11, 19-20 |
| A | WO 2022/191286 A1 (DAIKIN INDUSTRIES, LTD.) 15 September 2022 (2022-09-15) claims, examples | 1-20 |
| A | WO 2021/045228 A1 (DAIKIN INDUSTRIES, LTD.) 11 March 2021 (2021-03-11) claims, examples | 1-20 |
| A | JP 2005-293910 A (YAMANASHI TLO KK) 20 October 2005 (2005-10-20) claims, paragraphs [0028]-[0029] | 1-20 |
| P, X<br>P, A | WO 2024/024917 A1 (DAIKIN INDUSTRIES, LTD.) 01 February 2024 (2024-02-01) claims, examples | 12-18<br>1-11, 19-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/029014**

**C. DOCUMENTS CONSIDERED TO BE RELEVANT**

| Category* | Citation of document, with indication, where appropriate, of the relevant passages | Relevant to claim No. |
|---|---|---|
| P, X | WO 2024/024891 A1 (DAIKIN INDUSTRIES, LTD.) 01 February 2024 (2024-02-01) claims, examples | 12-18 |
| P, A | | 1-11, 19-20 |

Form PCT/ISA/210 (second sheet) (July 2022)

**INTERNATIONAL SEARCH REPORT**
**Information on patent family members**

International application No.
**PCT/JP2024/029014**

| Patent document cited in search report | Publication date (day/month/year) | Patent family member(s) | Publication date (day/month/year) |
|---|---|---|---|
| WO 2020/218622 A1 | 29 October 2020 | US 2022/0251251 A1<br>claims, examples, table 7, paragraphs [0409], [1209], [1289]<br>EP 3960777 A1<br>CN 113728015 A | |
| WO 2022/191286 A1 | 15 September 2022 | US 2023/0416421 A1<br>claims, examples<br>CN 116940604 A | |
| WO 2021/045228 A1 | 11 March 2021 | US 2022/0275237 A1<br>claims, examples<br>EP 4026854 A1<br>CN 114341209 A | |
| JP 2005-293910 A | 20 October 2005 | (Family: none) | |
| WO 2024/024917 A1 | 01 February 2024 | (Family: none) | |
| WO 2024/024891 A1 | 01 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014237842 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2012082454 A
- WO 2006119224 A
- WO 2013085864 A
- WO 2012082707 A
- WO 2012082703 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2011014715 A
- JP 2005527652 A
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 2007013532 A
- WO 2014175123 A
- WO 2023054723 A
- WO 2022191286 A

### Non-patent literature cited in the description

- Alkylpolygylcoside, Rompp, Lexikon Chemie. Georg Thieme Verlag, 1999